(19) Europäisches Patentamt
European Patent Office
Office européen des brevets

(11) **EP 2 482 106 B1**

(12) **EUROPEAN PATENT SPECIFICATION**

(45) Date of publication and mention
of the grant of the patent:
**04.06.2014 Bulletin 2014/23**

(51) Int Cl.:
***G02B 6/028*** (2006.01)

(21) Application number: **11305087.6**

(22) Date of filing: **31.01.2011**

(54) **Multimode fiber**

Multimodusfaser

Fibre multimodale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.08.2012 Bulletin 2012/31**

(73) Proprietor: **Draka Comteq B.V.**
**1083 HJ Amsterdam (NL)**

(72) Inventors:
• **Molin, Denis**
**91210 Draveil (FR)**
• **Bigot-Astruc, Marianne**
**91460 Marcoussis (FR)**
• **Sillard, Pierre**
**78150 Le Chesnay (FR)**

• **de Jongh, Koen**
**5694 VA SON EN BREUGEL (NL)**

(74) Representative: **Algemeen Octrooi- en**
**Merkenbureau B.V.**
**P.O. Box 645**
**5600 AP Eindhoven (NL)**

(56) References cited:
**EP-A1- 1 515 169      JP-A- 2000 227 526**
**JP-A- 2001 235 648    JP-A- 2005 107 514**
**JP-A- 2007 272 239**

• **FREUND R E ET AL: "High-Speed Transmission
in Multimode Fibers", JOURNAL OF LIGHTWAVE
TECHNOLOGY, IEEE SERVICE CENTER, NEW
YORK, NY, US, vol. 28, no. 4, 15 February 2010
(2010-02-15), pages 569-586, XP002626618, ISSN:
0733-8724, DOI: DOI:10.1109/JLT.2009.2030897**

**Description**

The present invention concerns the field of optical fiber transmissions, and more specifically multimode fibers (MMF). Multimode optical fibers are particularly used for short-distance transmission systems requiring a large bandwidth.

An optical fiber conventionally consists of an optical core, whose function is to transmit and possibly to amplify an optical signal, and of an optical cladding whose function is to confine the optical signal within the core. For this purpose, the refractive indexes of the core $n_c$ and of the outer cladding ng are such that $n_c > n_g$.

For short-distance applications and for local networks, multimode fibers are frequently used. The core of a multimode fiber has a diameter of 50 $\mu$m or more, compared with approximately 6 $\mu$m for the core of a single mode fiber. Therefore, for a given wavelength, several optical modes propagate simultaneously along the fiber, conveying the same information. The bandwidth is directly related to the group velocity of the optical modes propagating in the multimode core of the fiber. To guarantee a large bandwidth, the group velocities of all the modes must be identical i.e. intermodal dispersion must be zero or at least minimized for a given wavelength. Multimode fibers of 50 $\mu$m diameter have been the subject of international standardization under standard ITU-T G.651 which in particular defines criteria for bandwidths, numerical aperture and core diameter, for the needs of compatibility between fibers.

For optical fibers, the index profile is generally qualified in relation to the tracing of the graph which plots the function associating the refractive index with the fiber radius. Conventionally the distance r to the center of the fiber is shown along the abscissa, and the difference between the refractive index of the optical core and the refractive index of the fiber cladding is shown along the ordinate axis. The index profile is therefore referred to as a "step", "trapezoidal" or "triangular" or "alpha" profile for graphs having the respective shapes of a step, trapezoid, triangle or gradient. These curves are generally representative of the theoretical or set profile of the fiber, the manufacturing stresses of the fiber possibly leading to a different profile.

In step index fibers, the different modes propagate at different speeds along the fiber, which causes spreading of the light pulse which may become comparable to the spacing between pulses, and lead to an unacceptable error rate. To reduce intermodal dispersion in a multimode fiber, it has been proposed to manufacture graded-index fibers with an "alpha" core profile. Such fiber has been used for many years and its characteristics have been described in particular in the publications: "Multimode theory of graded-core fibres" by D. Gloge et al., Bell System Technical Journal 1973 pp 1563-1578, and "Comprehensive theory of dispersion in graded-index optical fibers" by G. Yabre, Journal of Lightwave Technology, February 2000, vol. 18, n° 2, pp 166-177.

A typical graded-index profile can be defined as the relation between the value n of the index at one point in relation to the distance r from this point to the center of the fiber:

$$n(r) = n_0 \sqrt{1 - 2\Delta\left(\frac{r}{a}\right)^\alpha} \qquad \text{(Equation 1)}$$

where $\alpha \geq 1$; ($\alpha \to \infty$ corresponding to a step index);
$n_0$, the maximum index value of the multimode core;
a, the radius of the multimode core; and

$$\Delta = \frac{\left(n_0^2 - n_{cl}^2\right)}{2n_0^2}; \qquad \text{(Equation 2)}$$

where $n_{cl}$ is the minimum index value of the multimode core, generally corresponding to the index value of the cladding (which is most often of silica).

A graded-index multimode fiber therefore has a core profile with revolution symmetry such that, along any radial direction, the value of the index decreases continuously from the center of the fiber towards its periphery.

When a multimode light signal propagates in said graded-index core, the different modes see a different propagation medium, which has a different effect on their rate of propagation. By adjusting the value of parameter $\alpha$, it is theoretically possible to obtain a group velocity that is practically equal for all the modes and hence reduced intermodal dispersion.

For use in high bit rate applications, a multimode fiber must exhibits the largest possible bandwidth. For applications to fast bit rate Ethernet networks over long-haul distances, in particular for bit rates of 10 GbE (10 Gb/s) or higher, over more than 300 m (respectively 550m), the guaranteed effective bandwidth must be 2000 MHz-km or greater (respectively 4700 MHz-km). Standard TIA-492AAAC-A standardizes the performance levels required for fast rate multimode fibers of diameter 50 $\mu$m

For multimode fibers, the bandwidth depends on the source used. The bandwidth is determined for a given wavelength. On the one hand, determination of the overfilled launch bandwidth OFL-BW requires the use of a uniform light source, such as a LED (Light Emiting Diode) for instance. On the other hand, the effective modal bandwidth EMB is more appropriate for determining the fiber bandwidth in use with VCSEL sources (Vertical Cavity Surface Emitting Laser).

In a manner known *per se,* the effective modal bandwidth EMB can be estimated by a measurement of the delay due to the modal dispersion, known under the acronym DMD for "Dispersion Modal Delay" graphical representation. The DMD measurement procedure has been the subject of standardization (IEC 60793-1-49 and FOTP-220). To carry out this measurement, care is generally taken to use a source or a fibre length such that the chromatic dispersion is actually negligible: the purpose is to characterize the modal dispersion of the fibre. The effective modal bandwidth corresponds to the smallest bandwidth for all the EMBs of Source-Fiber pairs when the chromatic dispersion is disregarded for all standardized sources in 10 GbE applications.

A DMD graphical representation is obtained by injecting a light pulse having a given wavelength $\lambda_0$ at the centre of the fibre and by measuring the pulse delay after a given fibre length L; the introduction of the light pulse of given wavelength $\lambda_0$ being radially offset to cover the entire core of the multimode fibre. When the parameter $\alpha$ is set to an optimum value $\alpha_{optimum}$, there is virtually no shift in the light pulse delay for a given wavelength $\lambda_0$ regardless of the radius r along which the pulse propagates; the intermodal dispersion is low and the effective modal bandwidth is significant. Reference can be made to document EP-A-2 144 096 describing DMD graphical representation and calculated EMB.

Graded-index multimode fibers are typically dedicated to high-speed data communications. They efficiently take benefit of the low-cost high-speed sources based on VCSEL technology. Since these sources are divergent, multimode fibers are actually designed to provide large numerical aperture - the larger the better. Typical 50 $\mu$m core multimode fibers dedicated to high-speed transmissions exhibit numerical apertures around 0.200.

Some emerging applications like super computer or consumer electronic devices require more flexibility that can be brought by even larger numerical aperture.

It has been observed that a large numerical aperture generally leads to modal bandwidth degradation.

There is therefore a need for a multimode fiber with high modal bandwidth and large numerical aperture.

Moreover, depending on applications, it can be sought to use fibers with larger core size than standard 50 $\mu$m, for instance 80 $\mu$m There is therefore a need for multimode fiber having a large numerical aperture with high modal bandwidth whatever the core size is, notably when the core size is increased compared to standard 50 $\mu$m MMF.

Numerical aperture NA can be calculated as

$$NA = n_0 \sqrt{2\Delta} \qquad \text{(Equation 3)}$$

With $\Delta$ and $n_0$ calculated based on equation (2).

Typical 50$\mu$m core multimode fibers have $\Delta$=0.01; (a=25) $\mu$m and $\alpha\approx2$, providing a numerical aperture of about 0.2.

It has already been proposed to tune the value $\alpha$ for multimode fibers following the well-known power law equation (1) in order to maximize the effective modal bandwidth. However this prior solution provides limited minimum effective modal bandwidth.

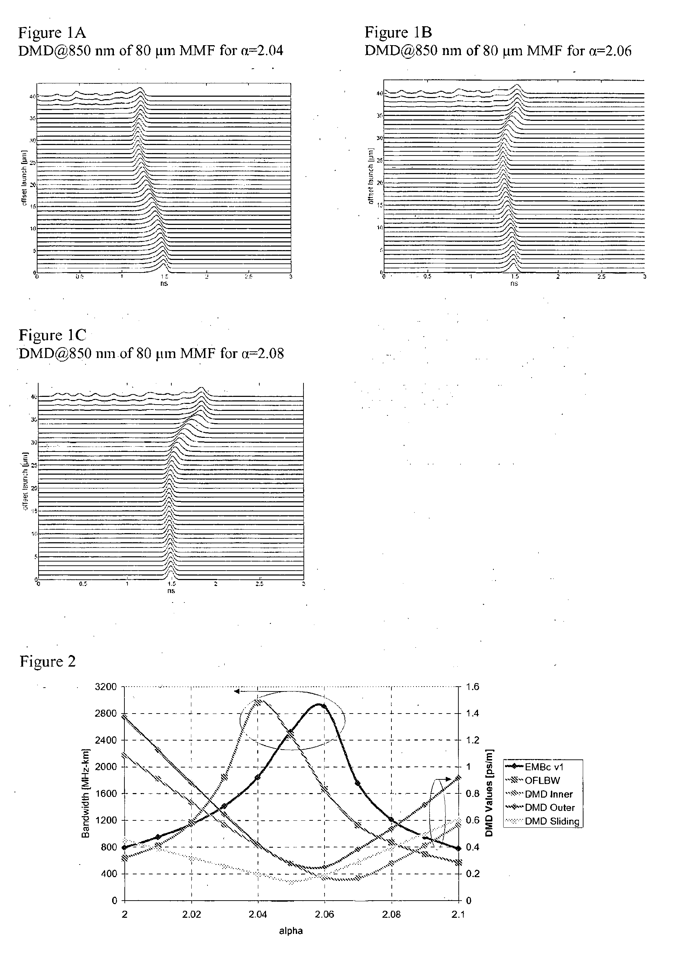

Figures 1A to 1C show DMD plots of a 80 $\mu$m multimode fiber having a delta value of 2.04% providing a large numerical aperture of about 0.3 for three different values of alpha. The graded-index core follows equation (1). Figures 1A to 1C shows the expected DMD plots for 750 m long fibers respectively for $\alpha$=2.04, $\alpha$=2.06, $\alpha$=2.08. It can be seen from these plots that modal dispersion can not be compensated simply by tuning the value $\alpha$ for fibers having a high numerical aperture. Indeed, the delay is not constant throughout the core radius whatever the value of $\alpha$. From these DMD plots, made according to FOTP-220, it is possible to compute effective modal bandwidths using weight functions.

Figure 2 illustrates some DMD values, the minimum effective modal bandwidth calculated (EMBc) and the overfilled launch bandwidth (OFL-BW) for multimode fiber having a graded-index core following equation (1) with a delta value of 2.04%. It can be seen that DMD values are over 0.15 ps/m whatever the value of alpha is. This leads to limited values of effective modal bandwidth (EMBc) and overfilled launch bandwidth (OFL-BW). Moreover, for a given value of alpha providing the highest EMBc, the OFL-BW is low and vice-versa. A multimode fiber having a high numerical aperture with a graded-index core following equation (1) has limited bandwidths both in effective modal bandwidth (EMBc) and overfilled launch bandwidth (OFL-BW). Applications for such a multimode fibers are therefore limited.

JP 2007-272239 discloses a multimode optical fiber production method having less production processes and providing a wide bandpass in each of a long and short wavelength band. Said multimode optical fiber is formed in such a manner that a refractive index profile parameter alpha assumes a certain value in a first region and another value in another region.

JP 2001-235648 discloses a preform for a multimode optical fiber which may be stably manufactured. The relation between a refractive index gradient coefficient in the central part of the preform and the refractive index gradient coefficient in the intermediate part of the core center and the core peripheral surface satisfies a certain equation.

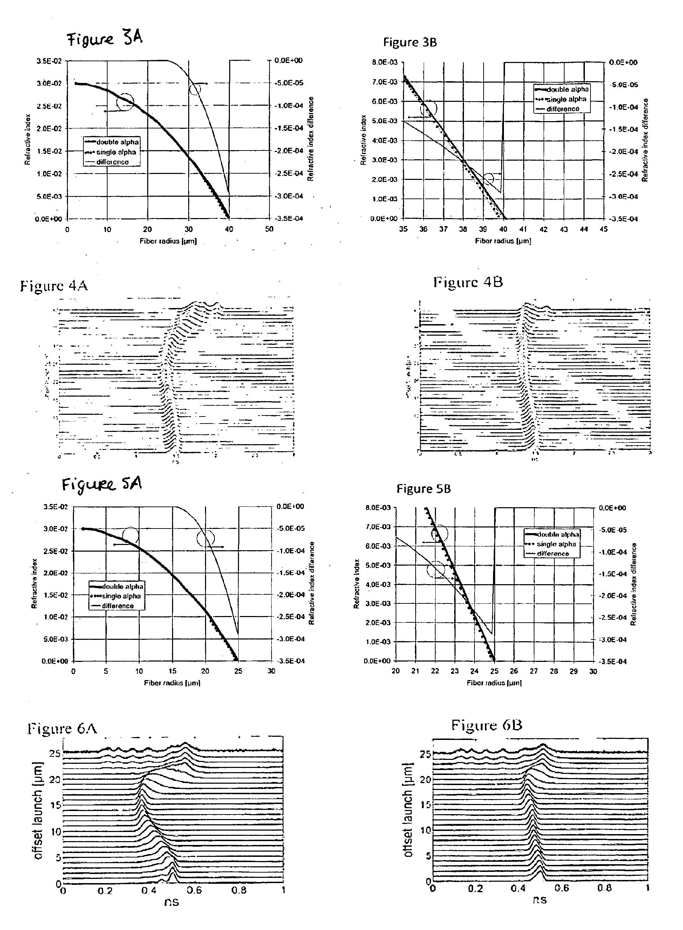

Document US 2010/0154478 teaches graded-index profiles in which the core follows a modified power law equation. The inner part follows the standard equation (1) while the refractive index profile deviates from the power law equation with smaller refractive index. These profiles lead to DMD degradations (figures 4 and 6) and limited effective modal bandwidth.

Document US 7,315,677 teaches "double alpha profiles" based on co-doping; each dopant profile exhibits its own alpha. DMD performances are not disclosed.

Document WO 00/50936 teaches graded-index profiles in which the core follows a modified power law equation providing DMD plot at 1300 nm with two different slopes over two different regions of the core.

R.E. Freund, "High-Speed Transmission in Multimode Fibers," JLT, Vol. 28, No. 4, Feb 2010 discloses in fig.4 & equation 6 a double-alpha profile. However, this profile was set up to simulate manufacturing defects in the fiber. The continuity of the first derivative of this profile is not ensured and leads to poor DMD performances.

Moreover, none of the above mentioned documents teaches large numerical aperture.

For this purpose, the invention proposes a multimode fiber having a high numerical aperture and in which the core follows a modified power law-equation with an exponent alpha that depends on the fiber radius. The exponent $\alpha$ takes at least two different values along the core radius; a first value of $\alpha_1$ to control the graded index in an inner - or central - zone of the core and a second value of $\alpha_2$ to control the graded index in an outer - or peripheral - zone of the core. The values of the alpha exponents of the graded-index core of the multimode fiber of the invention are chosen such that the multimode fiber exhibits a DMD profile having a substantially constant delay over the whole core. Thus, the calculated effective modal bandwidth EMBc is high.

The invention therefore concerns a multimode optical fiber according to claim 1.

According to embodiments, the optical fibre of the invention has an Effective Modal Bandwidth (EMB) at a wavelength of 850 nm which is more than 1000 MHz.km, more preferably more than 2000 MHz.km, and more preferably more than 3000 MHz.km. According to embodiments, the optical fibre of the invention has an Overfilled Launch Bandwidth (OFL-BW) at a wavelength of 850nm which is more than 1000 MHz.km, more preferably more than 1500MHz-km, and more preferably more than 3000MHz-km.

According to an embodiment, the graded-index core profile follows the power equation:

$$n(r) = \begin{cases} n_1 \cdot \sqrt{1 - 2 \cdot \Delta_1 \cdot \left(\dfrac{r}{a}\right)^{\alpha_1}} & 0 \le r \le r_t \\[2em] n_2 \cdot \sqrt{1 - 2 \cdot \Delta_2 \cdot \left(\dfrac{r}{a}\right)^{\alpha_2}} & r_t \le r \le a \\[2em] n_{cl}(r) & a < r \end{cases}$$

with a, the external radius of the graded-index core, $r_t$, the radius value at the transition between inner zone and outer zone of the core, and with

$$\Delta_1 = \frac{\alpha_2 \Delta \left(\dfrac{r_t}{a}\right)^{\alpha_2 - \alpha_1}}{\alpha_1 + (\alpha_2 - \alpha_1)\left(\dfrac{r_t}{a}\right)^{\alpha_2}}$$

$$\Delta_2 = \frac{\alpha_1 \Delta}{(1 - 2\Delta) \cdot (\alpha_2 - \alpha_1) \cdot \left(\dfrac{r_t}{a}\right)^{\alpha_2} + \alpha_1}$$

$$n_1 = \frac{n_{cl}}{\sqrt{1-2\Delta}}$$

$$n_2 = n_{cl} \cdot \sqrt{\frac{(1-2\Delta)\cdot(\alpha_1-\alpha_2)\cdot\left(\frac{r_t}{a}\right)^{\alpha_2}-\alpha_1}{(1-2\Delta)\cdot\left((\alpha_1-\alpha_2)\cdot\left(\frac{r_t}{a}\right)^{\alpha_2}-\alpha_1\right)}} \cdot$$

According to embodiments, the first exponent value ($\alpha_1$) of the graded-index profile in the inner zone of the core is chosen between 2.05 and 2.10; the second exponent value ($\alpha_2$) of the graded-index profile in the outer zone of the core is smaller by at least 0.04 to the first exponent value ($\alpha_1$) of the graded-index profile in the inner zone of the core ($\alpha_1$) > $\alpha_2$ + 0.04); and the ratio of the radius value at the transition between inner zone and outer zone of the core over the external radius of the graded-index core ($r_t$/a) is between 0.5 and 0.7.

According to an embodiment, the central core has a diameter (2a) of 50 $\mu$m The fiber may have a DMD value on the outer mask 0-23 $\mu$m at a wavelength of 850 nm which is less than 0.40 ps/m, more preferably less than 0.20 ps/m and more preferably less than 0.14 ps/m.

According to an embodiment, the central core has a diameter (2a) of 80 $\mu$m The fiber may have a DMD value on the outer mask 0-37 $\mu$m at a wavelength of 850 nm which is less than 0.40 ps/m, more preferably less than 0.20 ps/m and more preferably less than 0.14 ps/m.

According to an embodiment, the central core has a diameter (2a) of 62.5 $\mu$m. The fiber may have a DMD value on the outer mask 0-29 $\mu$m at a wavelength of 850 nm which is less than 0.40 ps/m, more preferably less than 0.20 ps/m and more preferably less than 0.14 ps/m.

According to an embodiment, the fiber further comprises a depressed-index inner cladding between the central core and the external cladding.

According to another embodiment, the fiber further comprises a step portion adjacent to the central core and a depressed-index inner cladding adjacent to the stepped portion.

The invention also relates to an optical system comprising at least a portion of multimode optical fiber according to the invention. Such an optical system can be a Local Area Network.

Other characteristics and advantages of the invention will become apparent on reading the following description of embodiments of the invention given as examples and with reference to the appended drawings which show:

- figures 1A to 1C, already described, DMD plots for 80 $\mu$m graded-index core multimode fibers having delta value of 2.04%, for three respective values of exponent alpha 2.04, 2.06 and 2.08;
- figure 2, already described, a graph reporting the EMB, the OFL and some DMD values with respect to alpha for multimode fibers having a graded-index core following equation (1) with a delta value of 2.04%;
- figures 3A and 3B, an example of index profile for a 80 $\mu$m multimode fiber according to an embodiment of the invention by comparison with a standard multimode fiber, figure 3B being a zoom portion of figure 3A;
- figures 4A and 4B, DMD plots respectively for a 80 $\mu$m multimode fiber having a graded-index core following equation (1) and for a 80 $\mu$m multimode fiber according to an embodiment of the invention;
- figures 5A and 5B, an example of index profile for a 50 $\mu$m multimode fiber according to an embodiment of the invention by comparison with a standard multimode fiber, figure 5B being a zoom portion of figure 3A;
- figures 6A and 6B, DMD plots respectively for a 50 $\mu$m multimode fiber having a graded-index core following equation (1) and for a 50 $\mu$m multimode fiber according to an embodiment of the invention;
- figures 7A and 7B, graphs reporting DMD values with respect to the radius respectively for 50 $\mu$m multimode fibers having graded-index core following equation (1) and for 50 $\mu$m multimode fibers according to the invention;
- figures 8A and 8B, graphs reporting DMD values with respect to the radius respectively for 62.5 $\mu$m multimode fibers having graded-index core following equation (1) and for 62.5 $\mu$m multimode fibers according to the invention;
- figures 9A and 9B, graphs reporting DMD values with respect to the radius respectively for 80 $\mu$m multimode fibers having graded-index core following equation (1) and for 80 $\mu$m multimode fibers according to the invention;
- figure 10, a graph reporting OFL values versus EMB values for multimode fibers according to the invention;
- figure 11, a table of the weight functions used to compute EMBc for 62.5 & 80 $\mu$m multimode fibers.

The fiber of the invention is a multimode transmission fiber. The fiber comprises central core having a graded-index profile (n(r)) and an external cladding. The external cladding can be pure silica or doped silica to modify the refractive index, depending on the intended applications. The external cladding can be adjacent to the graded-index core or an intermediate cladding can be provided between the central core and the external cladding. The refractive index of the intermediate cladding, if any, can be constant or complex, including rings or depressed trenches for instance. Reference can be made for instance to documents EP-A-0 131 729 or WO-A-2008/085851 describing MMF profiles including depressed trenches.

The graded-index core of the multimode fiber of the invention has a delta ($\Delta$) value of 1.9% or more, delta being defined with equation 2 as above. Such a delta value provides for a numerical aperture of 0.28 or more, calculated based on equation 3 defined above for a value $n_0$ of 1.45. The minimum and maximum values of the refractive index of the core are therefore chosen such as to ensure a large numerical aperture. Still, the fiber of the invention exhibits high EMB and OFL due to a specific graded-index core profile.

The graded-index core of the fiber of the invention follows a power equation n(r) with at least two different values of exponent along the core radius, a first value $\alpha_1$ in an inner zone of the core and a second value $\alpha_2$ in an outer zone of the core. The second value $\alpha_2$ of exponent is smaller than the first value $\alpha_1$ of exponent. This provides that the refractive index of the fiber of the invention increases throughout the core by comparison with a standard multimode fiber.

According to an embodiment, the graded-index core profile may follow the power equation:

$$n(r) = \begin{cases} n_1 \cdot \sqrt{1 - 2 \cdot \Delta_1 \cdot \left(\dfrac{r}{a}\right)^{\alpha_1}} & 0 \leq r \leq r_t \\ n_2 \cdot \sqrt{1 - 2 \cdot \Delta_2 \cdot \left(\dfrac{r}{a}\right)^{\alpha_2}} & r_t \leq r \leq a \\ n_{cl}(r) & a < r \end{cases} \qquad \text{(Equation 4)}$$

with a, the external radius of the graded-index core, $r_t$, the radius value at the transition between inner zone and outer zone of the core.

The values of $\Delta_1$, $\Delta_2$, $n_1$ and $n_2$ are chosen in order to ensure that the graded-index core profile (n(r)) and its first derivative (dn(r)/dr) are continuous over the whole graded index core. This provides less modal perturbations and ensures higher bandwidth.

Notably, according to an embodiment,

$$\Delta_1 = \frac{\alpha_2 \Delta \left(\dfrac{r_t}{a}\right)^{\alpha_2 - \alpha_1}}{\alpha_1 + (\alpha_2 - \alpha_1)\left(\dfrac{r_t}{a}\right)^{\alpha_2}} \qquad \text{(Equation 5)}$$

$$\Delta_2 = \frac{\alpha_1 \Delta}{(1 - 2\Delta) \cdot (\alpha_2 - \alpha_1) \cdot \left(\dfrac{r_t}{a}\right)^{\alpha_2} + \alpha_1} \qquad \text{(Equation 6)}$$

$$n_1 = \frac{n_{cl}}{\sqrt{1 - 2\Delta}} \qquad \text{(Equation 7)}$$

$$n_2 = n_{cl} \cdot \sqrt{\frac{(1-2\Delta) \cdot (\alpha_1 - \alpha_2) \cdot \left(\frac{r_t}{a}\right)^{\alpha_2} - \alpha_1}{(1-2\Delta) \cdot \left((\alpha_1 - \alpha_2) \cdot \left(\frac{r_t}{a}\right)^{\alpha_2} - \alpha_1\right)}} \qquad \text{(Equation 8)}$$

In a standard multimode profile, following equation (1), the highest order modes typically exhibit a smaller group velocity than others, leading to a DMD plot bent to the right for largest offset launches. According to the invention, the refractive index at the outer part of the core is increased compared with standard profile. This increase of the refractive index at the outer part of the graded-index core offsets the highest order modes from the center core by relaxing their guidance. Thus these highest modes will see a smaller refractive index leading to a higher group velocity.

Lowering the second value of alpha $\alpha_2$ with respect to the first value of alpha $\alpha_1$, while maintaining the continuity of the profile n(r) and its first derivative dn(r)/dr, leads to refractive index increase in the outer part. The modal dispersion can be minimized efficiently by tuning the alpha values and the transition radius $r_t$ between both alpha region. It is worth noting that twin alpha profiles keep the alpha shape benefits that consist in maintaining mode group structure also helpful for achieving low modal dispersion level.

Figures 3A and 3B are showing an index profile for a 80 $\mu$m multimode fiber according to an embodiment of the invention by comparison with a standard multimode fiber, figure 3B being a zoom of the outer zone of the core of the fiber of figure 3A.

The example of figures 3A-3B was constructed with $\alpha_1$=2.07, $\alpha_2$=2.02, $r_t$/a=0.6 and $\Delta$=2.0%. The left axis gives the refractive index difference of the graded-index core of the fiber of the invention with respect to pure silica; and the right axis gives the refractive index difference with respect to a standard refractive index profile that matches the inner part of the graded-index core of the fiber of the invention. Figure 3B clearly shows that the refractive index of the fiber of the invention diminishes throughout the core by comparison with a standard multimode fiber.

Figures 4A and 4B are showing DMD plots at 850 nm respectively, for a standard single-alpha profile with $\alpha$=2.06, $\Delta$=2.0% and for a twin alpha profile according to the invention with $\alpha_1$=2.06, $\alpha_2$=2.01, $r_t$/a=0,675, A=2.0%, for 80 $\mu$m diameter core and constant claddings for both profiles.

It can be observed in figures 4A-4B from the DMD plot for the fiber of the invention (figure 4B) that the delay is substantially constant over the whole core, by comparison with the DMD plot for a standard fiber (figure 4A). Notably, the DMD value on the outer mask 0-37 $\mu$m at a wavelength of 850 nm is less than 0,40 ps/m. Such a small value of DMD ensures a high effective modal bandwidth. Notably, the multimode fiber of the invention exhibits an effective modal bandwidth (EMB) at a wavelength of 850 nm which is more than 1000 MHz.km and more preferably more than 3000 MHz.km.

Figures 5A and 5B are showing an index profile for a 50 $\mu$m multimode fiber according to an embodiment of the invention by comparison with a standard multimode fiber, figure 5B being a zoom of the outer zone of the core of the fiber of figure 5A.

The example of figures 5A-5B was constructed with $\alpha_1$=2.07, $\alpha_2$=2.02, $r_t$/a=0.6 and $\Delta$=2.0%. The left axis gives the refractive index difference of the graded-index core of the fiber of the invention with respect to pure silica; and the right axis gives the refractive index difference with respect to a standard refractive index profile that matches the inner part of the graded-index core of the fiber of the invention. Figure 5B clearly shows that the refractive index of the fiber of the invention diminishes throughout the core by comparison with a standard multimode fiber.

Figures 6A and 6B are showing DMD plots at 850 nm respectively for a standard single-alpha profile with $\alpha$=2.06, $\Delta$=2.0%, and for a twin alpha profile according to the invention with $\alpha_1$=2.08, $\alpha_2$=2.04, $r_t$/a=0.5, $\Delta$=2.0%, for 50 $\mu$m diameter core and constant claddings for both profiles.

It can be observed in figures 6A-6B from the DMD plot for the fiber of the invention (figure 6B) that the delay is substantially constant over the whole core, by comparison with the DMD plot for a standard fiber (figure 6A). Notably, the DMD value on the outer mask 0-37 $\mu$m at a wavelength of 850 nm is less than 0,40 ps/m . Such a small value of DMD ensures a high effective modal bandwidth. Notably, the multimode fiber of the invention exhibits an effective modal bandwidth (EMB) at a wavelength of 850 nm which is more than 1000 MHz.km and more preferably more than 3000 MHz.km.

Table I below gives performances for several examples of fibers according to the prior art with standard single-alpha profile following equation 1.

Table I

| delta [%] | a [μm] | Alpha | EMBc [MHz.km] | OFL [MHz.km] | DMD$_{outer}$ [ps/m] |
|---|---|---|---|---|---|
| 2.2 | 25 | 2.06 | 2818 | 1390 | 0.23 |
| 2.2 | 25 | 2.07 | 2028. | 1021 | 0.35 |
| 2.2 | 25 | 2.08 | 1332 | 747 | 0.49 |
| 2 | 31.25 | 2.06 | 2153 | 1739 | 0.20 |
| 2 | 31.25 | 2.07 | 1303 | 1120 | 0.31 |
| 2 | 31.25 | 2.08 | 996 | 841 | 0.46 |
| 2.2 | 40 | 2.07 | 1405 | 817 | 0.56 |
| 2.2 | 40 | 2.08 | 1024 | 648 | 0.73 |
| 2.2 | 40 | 2.09 | 806 | 536 | 0.93 |

The DMD$_{outer}$ values are determined according to recommendations of FOTP-220 for 50 μm multimode fibers with the outer masks depending on the core size. For 50 μm fibers, the outer mask is 0-23 μm. The outer mask for 62.5 & 80 μm MMFs are not defined in the Standard therefore we define them as follows: for 62.5 μm fibers, the outer mask is 0-29 μm; and for 80 μm fibers, the outer mask is 0-37 μm

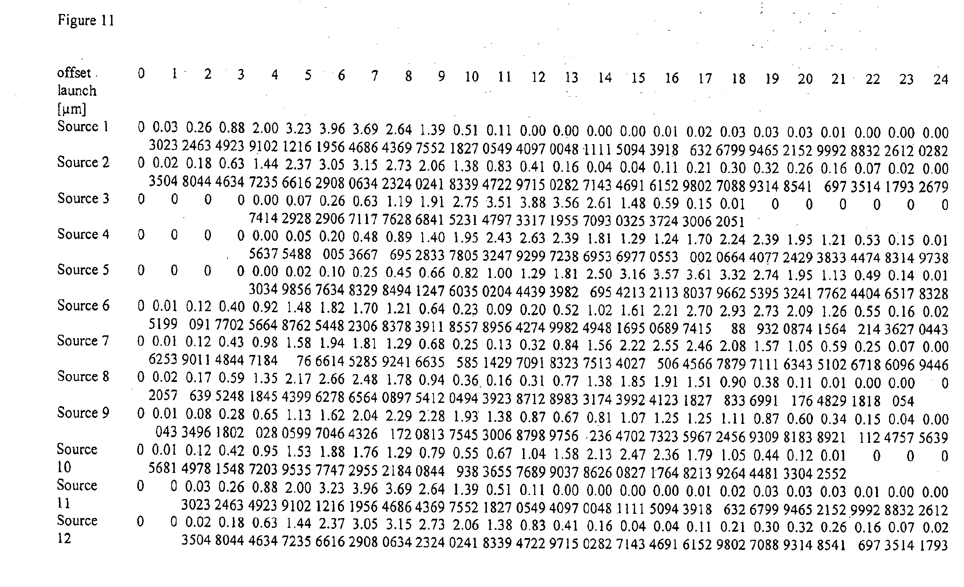

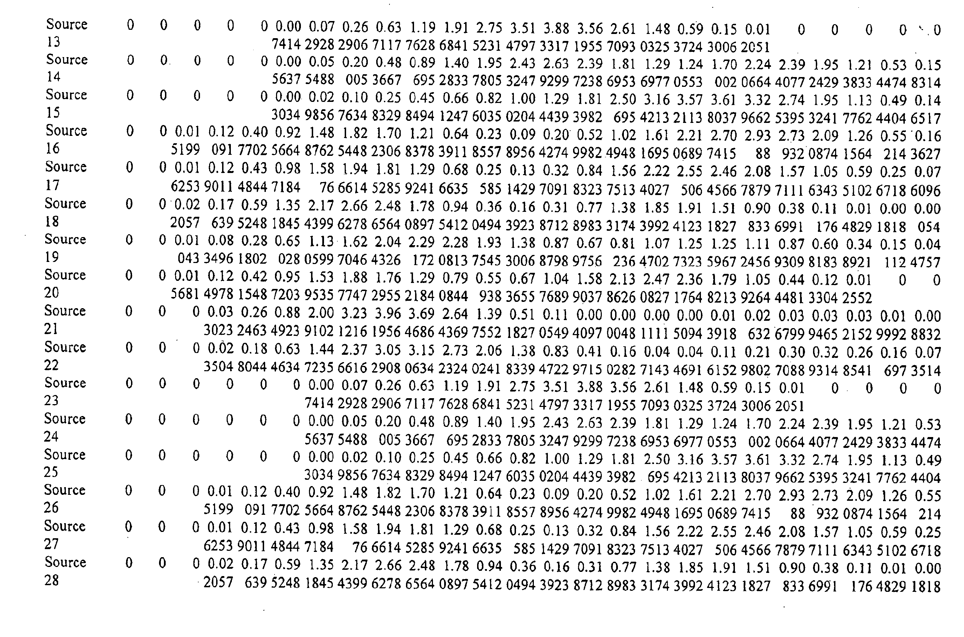

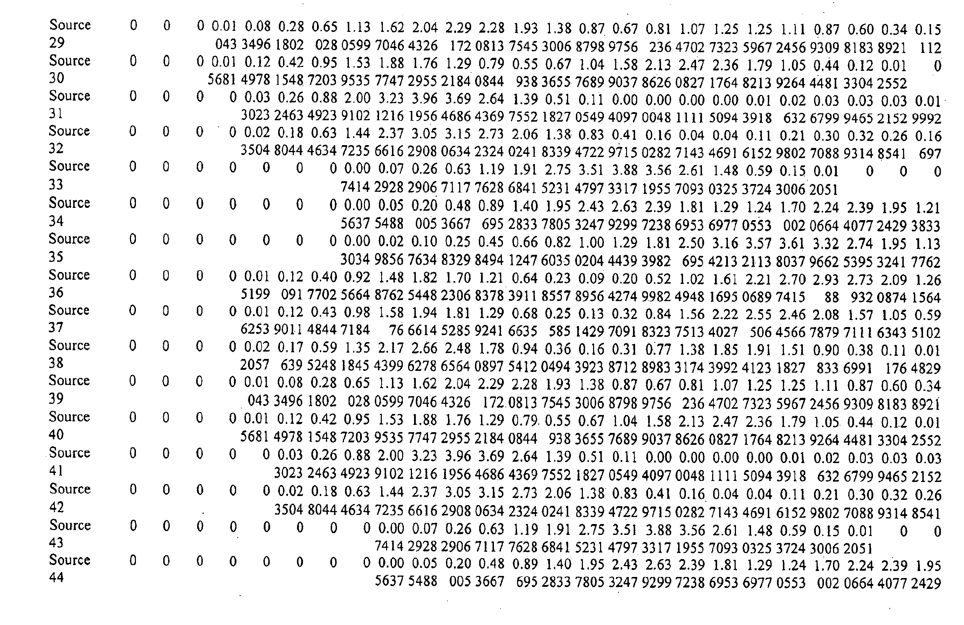

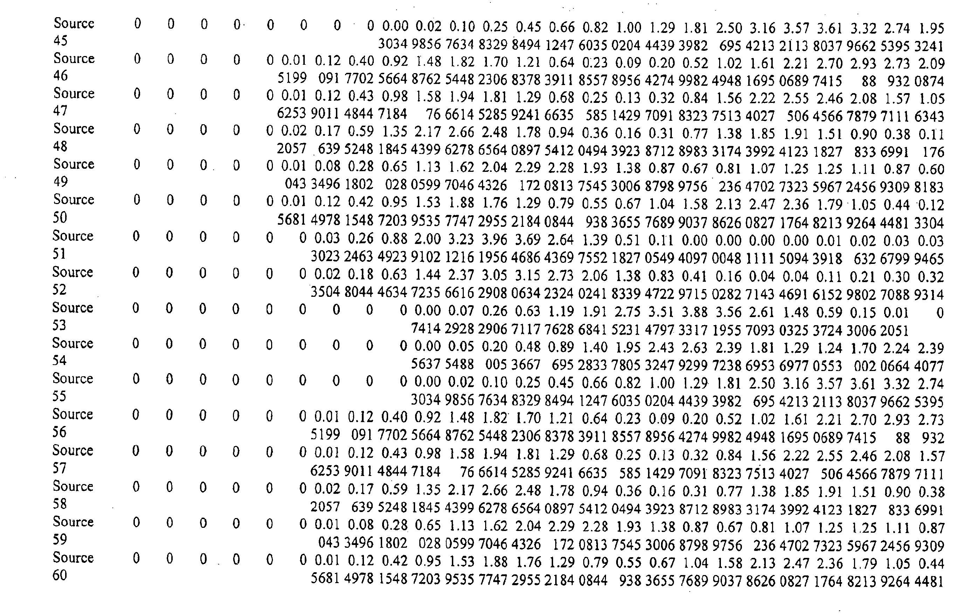

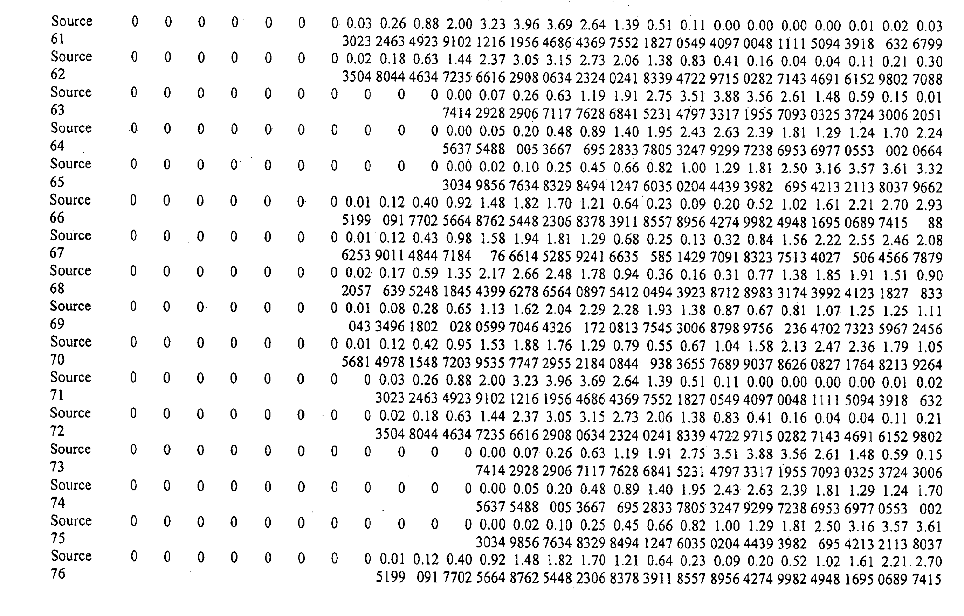

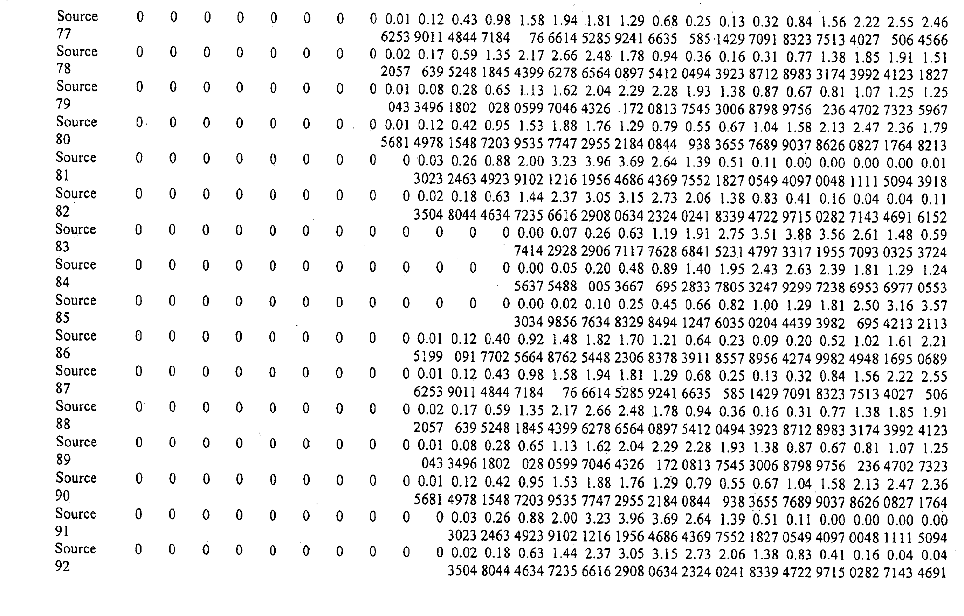

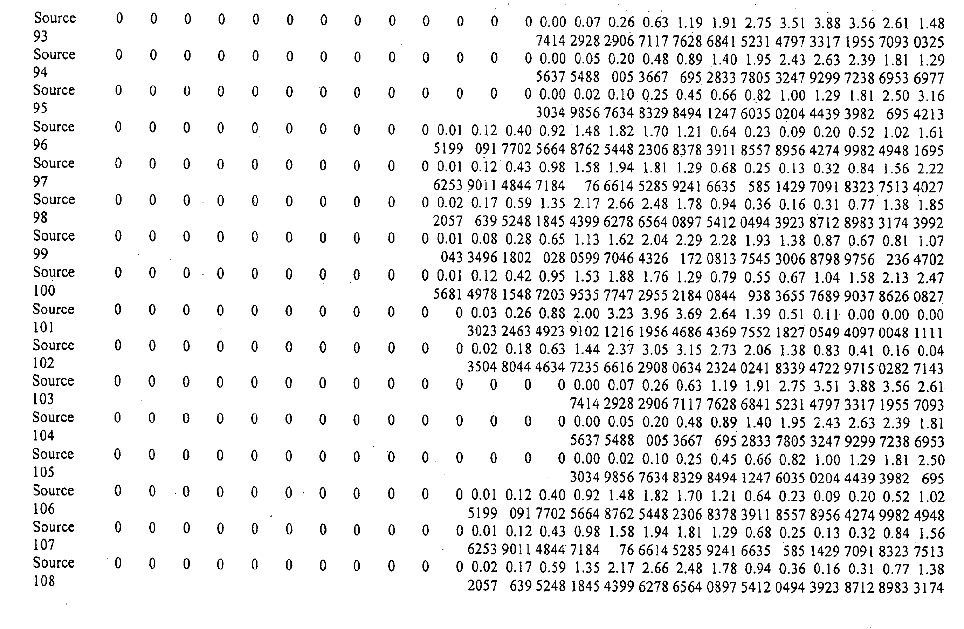

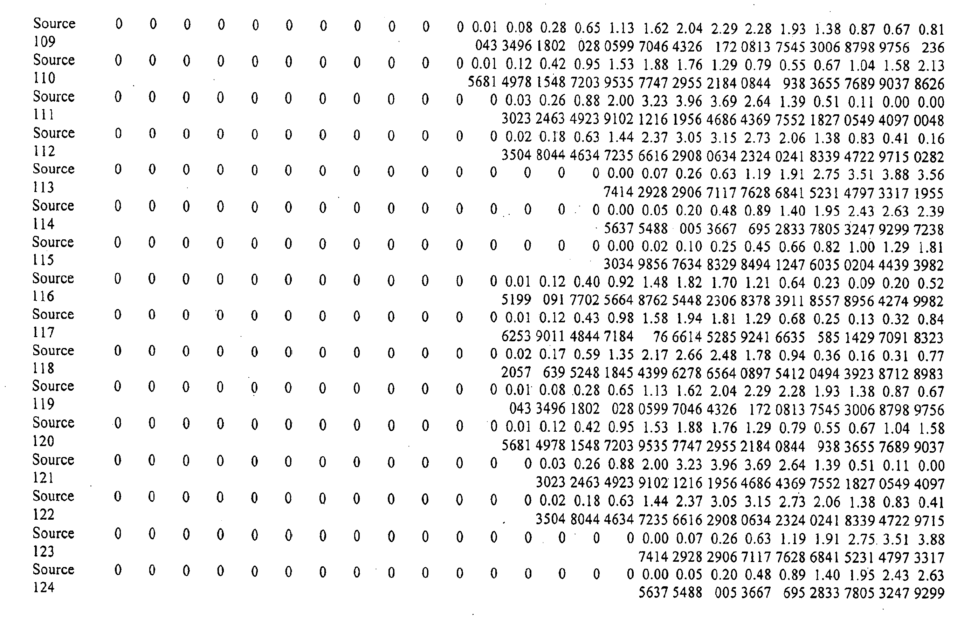

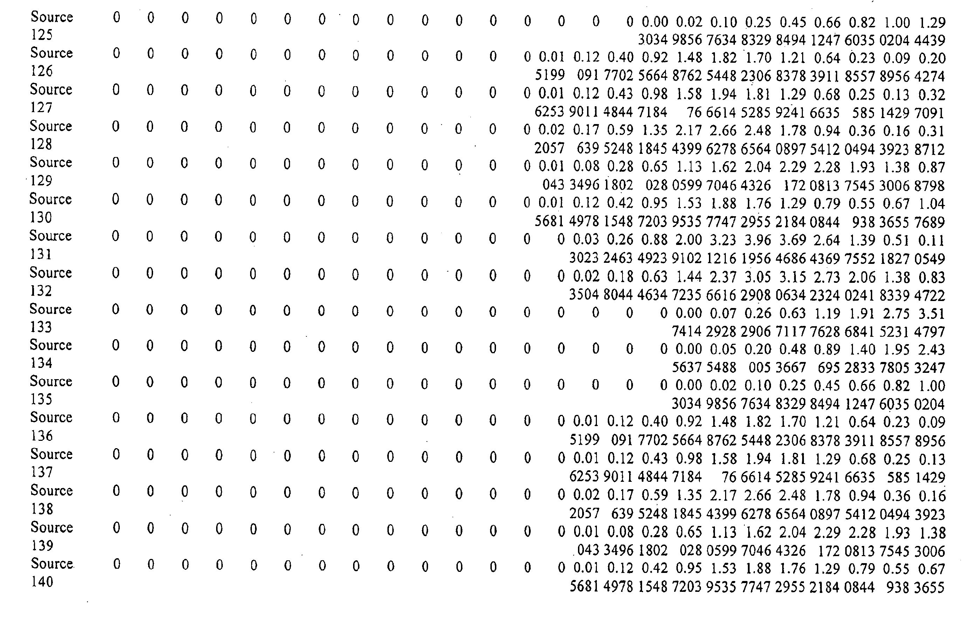

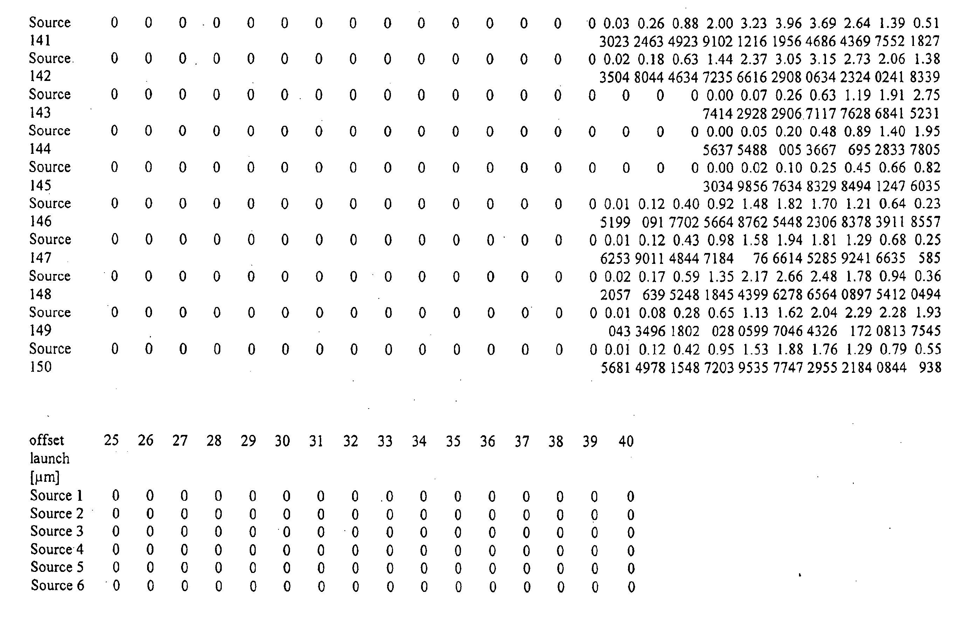

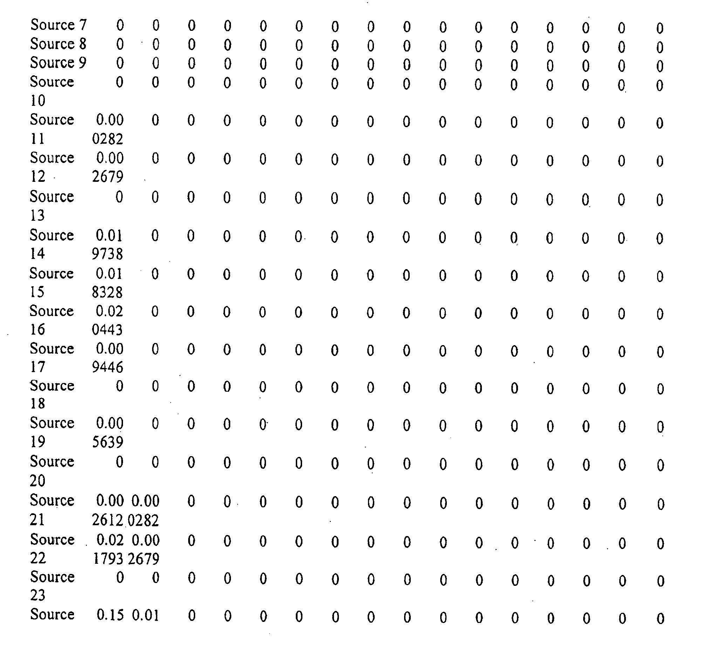

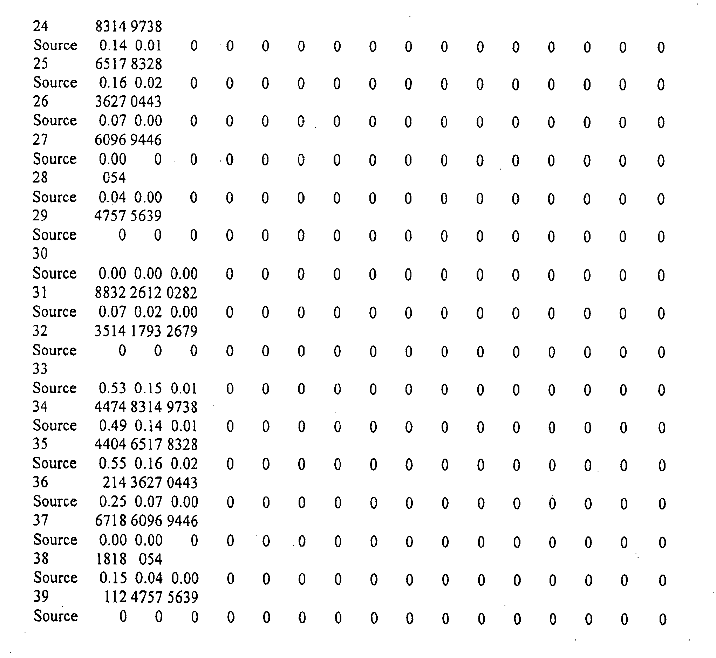

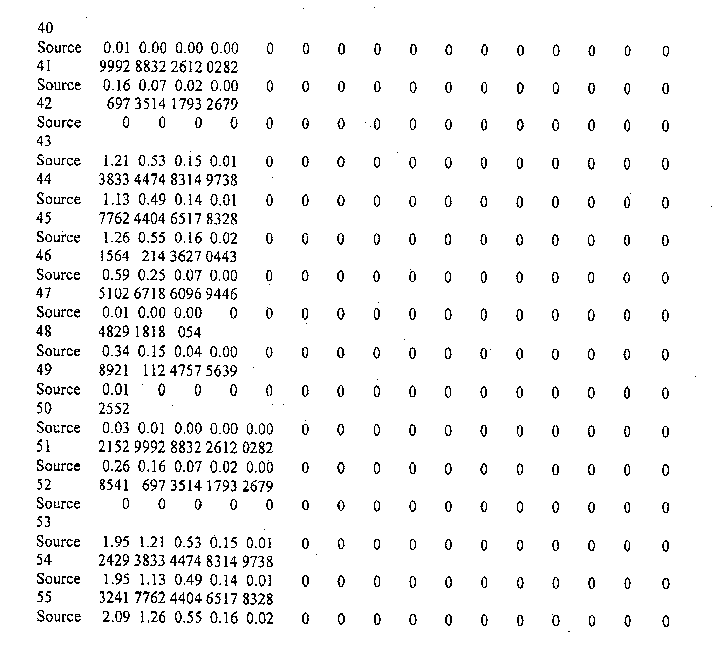

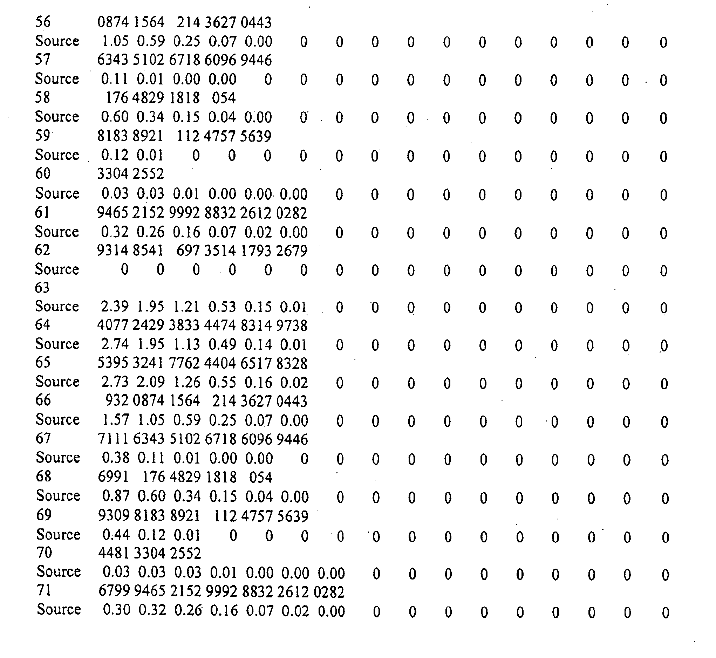

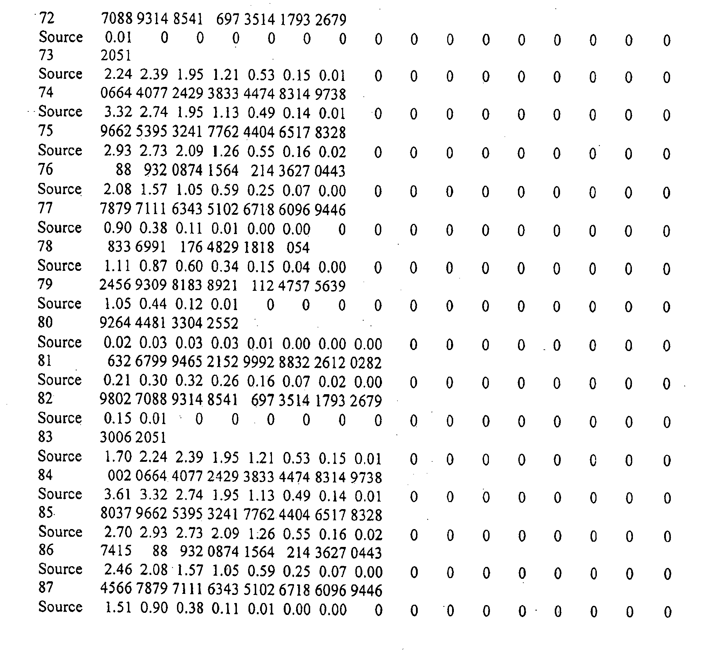

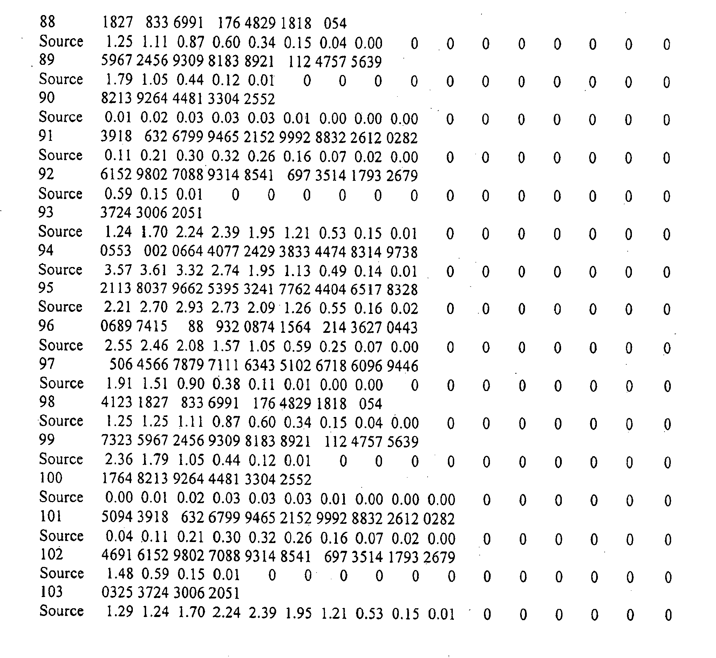

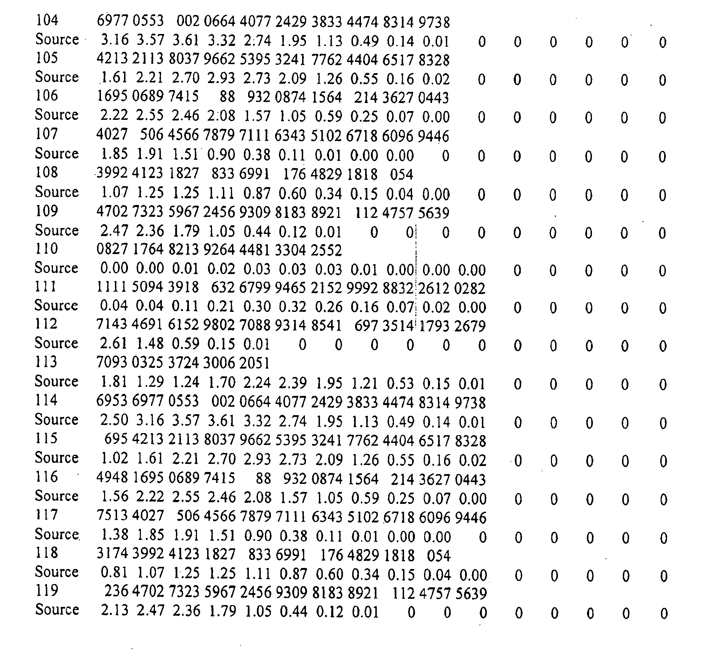

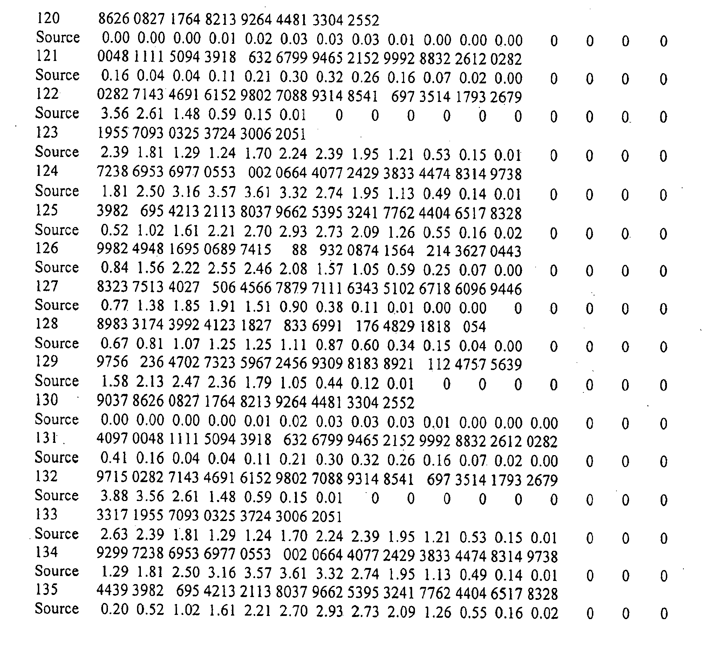

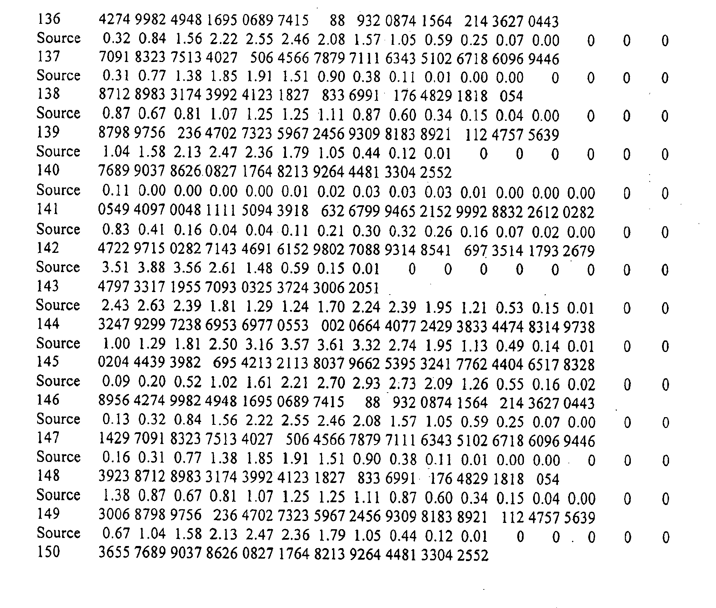

For 62.5 & 80 μm multimode fibers, the EMBc was computed from DMD measurements similarly to recommendations of FOTP-220 for 50 μm multimode fibers. Notably, the EMBc was computed with a 1 μm step from 0 up to 40 μm using the weight functions reported in figure 11 in annex.

Table II below gives performances for several examples of fibers according to the invention graded-index profile following equation 4.

Table II

| Delta [%] | a [μm] | r$_t$ /a | rt [μm] | Alpha1 | Alpha2 | Alpha1-Alpha2 | EMBc [MHz.km] | OFL [MHz.km] | DMD$_{outer}$ [ps/m] |
|---|---|---|---|---|---|---|---|---|---|
| 2.2 | 25 | 0.5 | 12.5 | 2.060 | 2.055 | 0.004 | 3031 | 1649 | 0.18 |
| 2.2 | 25 | 0.5 | 12.5 | 2.070 | 2.035 | 0.034 | 3361 | 3089 | 0.17 |
| 2.2 | 25 | 0.5 | 12.5 | 2.070 | 2.040 | 0.029 | 3877 | 2656 | 0.15 |
| 2.2 | 25 | 0.5 | 12.5 | 2.070 | 2.045 | 0.024 | 4236 | 2106 | 0.13 |
| 2.2 | 25 | 0.5 | 12.5 | 2.070 | 2.050 | 0.020 | 4048 | 1786 | 0.15 |
| 2.2 | 25 | 0.5 | 12.5 | 2.070 | 2.055 | 0.014 | 3541 | 1478 | 0.19 |
| 2.2 | 25 | 0.5 | 12.5 | 2.080 | 2.025 | 0.055 | 3354 | 2654 | 0.16 |
| 2.2 | 25 | 0.5 | 12.5 | 2.080 | 2.030 | 0.050 | 4344 | 2879 | 0.12 |
| 2.2 | 25 | 0.5 | 12.5 | 2.080 | 2.035 | 0.044 | 5547 | 2679 | 0.09 |
| 2.2 | 25 | 0.5 | 12.5 | 2.080 | 2.040 | 0.040 | 6201 | 2220 | 0.08 |
| 2.2 | 25 | 0.5 | 12.5 | 2.080 | 2.045 | 0.035 | 5646 | 1855 | 0.12 |
| 2.2 | 25 | 0.5 | 12.5 | 2.080 | 2.050 | 0.030 | 4282 | 1550 | 0.16 |
| 2.2 | 25 | 0.5 | 12.5 | 2.080 | 2.055 | 0.024 | 3185 | 1331 | 0.22 |
| 2.2 | 25 | 0.6 | 15 | 2.060 | 2.035 | 0.024 | 3033 | 2817 | 0.19 |
| 2.2 | 25 | 0.6 | 15 | 2.060 | 2.040 | 0.020 | 3144 | 2459 | 0.18 |
| 2.2 | 25 | 0.6 | 15 | 2.060 | 2.045 | 0.015 | 3246 | 2029 | 0.18 |
| 2.2 | 25 | 0.6 | 15 | 2.060 | 2.050 | 0.010 | 3291 | 1806 | 0.17 |
| 2.2 | 25 | 0.6 | 15 | 2.060 | 2.055 | 0.004 | 3069 | 1571 | 0.19 |
| 2.2 | 25 | 0.6 | 15 | 2.070 | 2.010 | 0.060 | 3536 | 2350 | 0.22 |

(continued)

| Delta [%] | a [μm] | $r_t$ /a | rt [μm] | Alpha1 | Alpha2 | Alpha1-Alpha2 | EMBc [MHz.km] | OFL [MHz.km] | DMD$_{outer}$ [ps/m] |
|---|---|---|---|---|---|---|---|---|---|
| 2.2 | 25 | 0.6 | 15 | 2.070 | 2.015 | 0.054 | 4245 | 2592 | 0.17 |
| 2.2 | 25 | 0.6 | 15 | 2.070 | 2.020 | 0.049 | 5166 | 2779 | 0.13 |
| 2.2 | 25 | 0.6 | 15 | 2.070 | 2.025 | 0.044 | 5909 | 2703 | 0.10 |
| 2.2 | 25 | 0.6 | 15 | 2.070 | 2.030 | 0.040 | 6291 | 2500 | 0.09 |
| 2.2 | 25 | 0.6 | 15 | 2.070 | 2.035 | 0.034 | 5950 | 2096 | 0.09 |
| 2.2 | 25 | 0.6 | 15 | 2.070 | 2.040 | 0.029 | 5150 | 1863 | 0.11 |
| 2.2 | 25 | 0.6 | 15 | 2.070 | 2.045 | 0.024 | 4357 | 1653 | 0.15 |
| 2.2 | 25 | 0.6 | 15 | 2.070 | 2.050 | 0.020 | 3630 | 1447 | 0.19 |
| 2.2 | 25 | 0.6 | 15 | 2.070 | 2.055 | 0.014 | 3053 | 1311 | 0.23 |
| 2.2 | 25 | 0.6 | 15 | 2.080 | 1.990 | 0.090 | 3004 | 1437 | 0.29 |
| 2.2 | 25 | 0.6 | 15 | 2.080 | 1.995 | 0.085 | 3578 | 1587 | 0.29 |
| 2.2 | 25 | 0.6 | 15 | 2.080 | 2.000 | 0.080 | 4417 | 1754 | 0.23 |
| 2.2 | 25 | 0.6 | 15 | 2.080 | 2.005 | 0.075 | 5555 | 1967 | 0.16 |
| 2.2 | 25 | 0.6 | 15 | 2.080 | 2.010 | 0.070 | 7062 | 2135 | 0.09 |
| 2.2 | 25 | 0.6 | 15 | 2.080 | 2.015 | 0.064 | 8811 | 2174 | 0.05 |
| 2.2 | 25 | 0.6 | 15 | 2.080 | 2.020 | 0.060 | 8967 | 2038 | 0.04 |
| 2.2 | 25 | 0.6 | 15 | 2.080 | 2.025 | 0.055 | 6891 | 1888 | 0.07 |
| 2.2 | 25 | 0.6 | 15 | 2.080 | 2.030 | 0.050 | 5154 | 1756 | 0.11 |
| 2.2 | 25 | 0.6 | 15 | 2.080 | 2.035 | 0.044 | 4094 | 1594 | 0.14 |
| 2.2 | 25 | 0.6 | 15 | 2.080 | 2.040 | 0.040 | 3332 | 1421 | 0.18 |
| 2.2 | 25 | 0.7 | 17.5 | 2.060 | 1.980 | 0.080 | 3005 | 2070 | 0.38 |
| 2.2 | 25 | 0.7 | 17.5 | 2.060 | 1.985 | 0.075 | 3192 | 2215 | 0.34 |
| 2.2 | 25 | 0.7 | 17.5 | 2.060 | 1.990 | 0.070 | 3305 | 2357 | 0.27 |
| 2.2 | 25 | 0.7 | 17.5 | 2.060 | 1.995 | 0.064 | 3341 | 2517 | 0.26 |
| 2.2 | 25 | 0.7 | 17.5 | 2.060 | 2.000 | 0.060 | 3371 | 2686 | 0.23 |
| 2.2 | 25 | 0.7 | 17.5 | 2.060 | 2.005 | 0.055 | 3400 | 2783 | 0.20 |
| 2.2 | 25 | 0.7 | 17.5 | 2.060 | 2.010 | 0.050 | 3427 | 2765 | 0.17 |
| 2.2 | 25 | 0.7 | 17.5. | 2.060 | 2.015 | 0.044 | 3449 | 2650 | 0.17 |
| 2.2 | 25 | 0.7 | 17.5 | 2.060 | 2.020 | 0.040 | 3456 | 2533 | 0.17 |
| 2.2 | 25 | 0.7 | 17.5 | 2.060 | 2.025 | 0.035 | 3464 | 2380 | 0.17 |
| 2.2 | 25 | 0.7 | 17.5 | 2.060 | 2.030 | 0.030 | 3467 | 2118 | 0.17 |
| 2.2 | 25 | 0.7 | 17.5 | 2.060 | 2.035 | 0.024 | 3464 | 1957 | 0.17 |
| 2.2 | 25 | 0.7 | 17.5. | 2.060 | 2.040 | 0.020 | 3460 | 1844 | 0.17 |
| 2.2 | 25 | 0.7 | 17.5 | 2.060 | 2.045 | 0.015 | 3333 | 1730 | 0.17 |
| 2.2 | 25 | 0.7 | 17.5 | 2.060 | 2.050 | 0.010 | 3153 | 1599 | 0.18 |
| 2.2 | 25 | 0.7 | 17.5 | 2.070 | 1.925 | 0.145 | 3098 | 931 | 0.53 |
| 2.2 | 25 | 0.7 | 17.5 | 2.070 | 1.930 | 0.140 | 3269 | 994 | 0.48 |

(continued)

| Delta [%] | a [μm] | $r_t$ /a | rt [μm] | Alpha1 | Alpha2 | Alpha1-Alpha2 | EMBc [MHz.km] | OFL [MHz.km] | DMD$_{outer}$ [ps/m] |
|---|---|---|---|---|---|---|---|---|---|
| 2.2 | 25 | 0.7 | 17.5 | 2.070 | 1.935 | 0.135 | 3447 | 1076 | 0.51 |
| 2.2 | 25 | 0.7 | 17.5 | 2.070 | 1.940 | 0.130 | 3639 | 1171 | 0.48 |
| 2.2 | 25 | 0.7 | 17.5 | 2.070 | 1.945 | 0.125 | 3843 | 1257 | 0.45 |
| 2.2 | 25 | 0.7 | 17.5 | 2.070 | 1.950 | 0.120 | 4077 | 1338 | 0.42 |
| 2.2 | 25 | 0.7 | 17.5 | 2.070 | 1.955 | 0.115 | 4344 | 1416 | 0.39 |
| 2.2 | 25 | 0.7 | 17.5 | 2.070 | 1.960 | 0.110 | 4649 | 1492 | 0.35 |
| 2.2 | 25 | 0.7 | 17.5 | 2.070 | 1.965 | 0.105 | 5008 | 1573 | 0.29 |
| 2.2 | 25 | 0.7 | 17.5 | 2.070 | 1.970 | 0.099 | 5352 | 1657 | 0.25 |
| 2.2 | 25 | 0.7 | 17.5 | 2.070 | 1.975 | 0.094 | 5704 | 1749 | 0.27 |
| 2.2 | 25 | 0.7 | 17.5 | 2.070 | 1.980 | 0.089 | 6055 | 1841 | 0.23 |
| 2.2 | 25 | 0.7 | 17.5 | 2.070 | 1.985 | 0.084 | 6331 | 1913 | 0.19 |
| 2.2 | 25 | 0.7 | 17.5 | 2.070 | 1.990 | 0.079 | 6417 | 1942 | 0.15 |
| 2.2 | 25 | 0.7 | 17.5 | 2.070 | 1.995 | 0.074 | 6090 | 1922 | 0.09 |
| 2.2 | 25 | 0.7 | 17.5 | 2.070 | 2.000 | 0.069 | 5652 | 1879 | 0.09 |
| 2.2 | 25 | 0.7 | 17.5 | 2.070 | 2.005 | 0.064 | 5210 | 1830 | 0.09 |
| 2.2 | 25 | 0.7 | 17.5 | 2.070 | 2.010 | 0.060 | 4697 | 1779 | 0.10 |
| 2.2 | 25 | 0.7 | 17.5 | 2.070 | 2.015 | 0.054 | 4301 | 1720 | 0.12 |
| 2.2 | 25 | 0.7 | 17.5 | 2.070 | 2.020 | 0.049 | 3929 | 1649 | 0.13 |
| 2.2 | 25 | 0.7 | 17.5 | 2.070 | 2.025 | 0.044 | 3592 | 1560 | 0.15 |
| 2.2 | 25 | 0.7 | 17.5 | 2.070 | 2.030 | 0.040 | 3303 | 1465 | 0.17 |
| 2.2 | 25 | 0.7 | 17.5 | 2.070 | 2.035 | 0.034 | 3062 | 1386 | 0.19 |
| 2.2 | 25 | 0.7 | 17.5 | 2.080 | 1.925 | 0.155 | 3014 | 929 | 0.48 |
| 2.2 | 25 | 0.7 | 17.5 | 2.080 | 1.930 | 0.150 | 3109 | 973 | 0.45 |
| 2.2 | 25 | 0.7 | 17.5 | 2.080 | 1.935 | 0.145 | 3193 | 1022 | 0.42 |
| 2.2 | 25 | 0.7 | 17.5 | 2.080 | 1.940 | 0.140 | 3279 | 1075 | 0.38 |
| 2.2 | 25 | 0.7 | 17.5 | 2.080 | 1.945 | 0.135 | 3359 | 1133 | 0.32 |
| 2.2 | 25 | 0.7 | 17.5 | 2.080 | 1.950 | 0.130 | 3420 | 1189 | 0.36 |
| 2.2 | 25 | 0.7 | 17.5 | 2.080 | 1.955 | 0.125 | 3462 | 1242 | 0.33 |
| 2.2 | 25 | 0.7 | 17.5 | 2.080 | 1.960 | 0.120 | 3481 | 1288 | 0.30 |
| 2.2 | 25 | 0.7 | 17.5 | 2.080 | 1.965 | 0.115 | 3475 | 1327 | 0.27 |
| 2.2 | 25 | 0.7 | 17.5 | 2.080 | 1.970 | 0.110 | 3435 | 1353 | 0.19 |
| 2.2 | 25 | 0.7 | 17.5 | 2.080 | 1.975 | 0.105 | 3367 | 1370 | 0.16 |
| 2.2 | 25 | 0.7 | 17.5 | 2.080 | 1.980 | 0.100 | 3281 | 1376 | 0.16 |
| 2.2 | 25 | 0.7 | 17.5 | 2.080 | 1.985 | 0.095 | 3141 | 1369 | 0.15 |
| 2.2 | 25 | 0.8 | 20 | 2.060 | 1.900 | 0.160 | 3492 | 1809 | 0.33 |
| 2.2 | 25 | 0.8 | 20 | 2.060 | 1.905 | 0.155 | 3490 | 1827 | 0.32 |
| 2.2 | 25 | 0.8 | 20 | 2.060 | 1.910 | 0.150 | 3488 | 1843 | 0.30 |

(continued)

| Delta [%] | a [μm] | $r_t$ /a | rt [μm] | Alpha1 | Alpha2 | Alpha1- Alpha2 | EMBc [MHz.km] | OFL [MHz.km] | DMD$_{outer}$ [ps/m] |
|---|---|---|---|---|---|---|---|---|---|
| 2.2 | 25 | 0.8 | 20 | 2.060 | 1.915 | 0.145 | 3488 | 1857 | 0.29 |
| 2.2 | 25 | 0.8 | 20 | 2.060 | 1.920 | 0.140 | 3488 | 1867 | 0.26 |
| 2.2 | 25 | 0.8 | 20 | 2.060 | 1.925 | 0.135 | 3485 | 1872 | 0.21 |
| 2.2 | 25 | 0.8 | 20 | 2.060 | 1.930 | 0.130 | 3483 | 1875 | 0.20 |
| 2.2 | 25 | 0.8 | 20 | 2.060 | 1.935 | 0.125 | 3478 | 1872 | 0.23 |
| 2.2 | 25 | 0.8 | 20 | 2.060 | 1.940 | 0.120 | 3478 | 1865 | 0.23 |
| 2.2 | 25 | 0.8 | 20 | 2.060 | 1.945 | 0.115 | 3476 | 1857 | 0.21 |
| 2.2 | 25 | 0.8 | 20 | 2.060 | 1.950 | 0.110 | 3472 | 1846 | 0.19 |
| 2.2 | 25 | 0.8 | 20 | 2.060 | 1.955 | 0.105 | 3470 | 1834 | 0.17 |
| 2.2 | 25 | 0.8 | 20 | 2.060 | 1.960 | 0.100 | 3467 | 1822 | 0.17 |
| 2.2 | 25 | 0.8 | 20 | 2.060 | 1.965 | 0.095 | 3464 | 1810 | 0.17 |
| 2.2 | 25 | 0.8 | 20 | 2.060 | 1.970 | 0.090 | 3460 | 1799 | 0.17 |
| 2.2 | 25 | 0.8 | 20 | 2.060 | 1.975 | 0.085 | 3458 | 1786 | 0.17 |
| 2.2 | 25 | 0.8 | 20 | 2.060 | 1.980 | 0.080 | 3459 | 1775 | 0.17 |
| 2.2 | 25 | 0.8 | 20 | 2.060 | 1.985 | 0.075 | 3456 | 1761 | 0.17 |
| 2.2 | 25 | 0.8 | 20 | 2.060 | 1.990 | 0.070 | 3439 | 1748 | 0.17 |
| 2.2 | 25 | 0.8 | 20 | 2.060 | 1.995 | 0.064 | 3397 | 1732 | 0.17 |
| 2.2 | 25 | 0.8 | 20 | 2.060 | 2.000 | 0.060 | 3355 | 1715 | 0.17 |
| 2.2 | 25 | 0.8 | 20 | 2.060 | 2.005 | 0.055 | 3303 | 1696 | 0.17 |
| 2.2 | 25 | 0.8 | 20 | 2.060 | 2.010 | 0.050 | 3259 | 1674 | 0.17 |
| 2.2 | 25 | 0.8 | 20 | 2.060 | 2.015 | 0.044 | 3210 | 1649 | 0.17 |
| 2.2 | 25 | 0.8 | 20 | 2.060 | 2.020 | 0.040 | 3165 | 1622 | 0.17 |
| 2.2 | 25 | 0.8 | 20 | 2.060 | 2.025 | 0.035 | 3121 | 1591 | 0.17 |
| 2.2 | 25 | 0.8 | 20 | 2.060 | 2.030 | 0.030 | 3074 | 1558 | 0.18 |
| 2.2 | 25 | 0.8 | 20 | 2.060 | 2.035 | 0.024 | 3030 | 1526 | 0.19 |
| 2.2 | 40 | 0.55 | 22 | 2.08 | 2.02 | 0.06 | 5070 | 1649 | 0.18 |
| 2.2 | 40 | 0.55 | 22 | 2.08 | 2.02 | 0.06 | 5066 | 3089 | 0.17 |
| 2.2 | 40 | 0.55 | 22 | 2.08 | 2.02 | 0.06 | 5066 | 2656 | 0.15 |
| 2.2 | 40 | 0.55 | 22 | 2.08 | 2.02 | 0.06 | 5155 | 2106 | 0.13 |
| 2.2 | 40 | 0.55 | 22 | 2.08 | 2.02 | 0.06 | 5152 | 1786 | 0.15 |
| 2.2 | 40 | 0.55 | 22 | 2.08 | 2.02 | 0.06 | 5154 | 1478 | 0.19 |
| 2.2 | 40 | 0.55 | 22 | 2.08 | 2.02 | 0.06 | 5031 | 2654 | 0.16 |
| 2 | 31.25 | 0.5 | 15.625 | 2.07 | 2.035 | 0.035 | 3752 | 3660 | 0.17 |
| 2 | 31.25 | 0.5 | 15.625 | 2.07 | 2.04 | 0.03 | 3711 | 3414 | 0.14 |
| 2 | 31.25 | 0.5 | 15.625 | 2.08 | 2.03 | 0.05 | 4094 | 3347 | 0.12 |
| 2 | 31.25 | 0.5 | 15.625 | 2.08 | 2.035 | 0.045 | 3867 | 3370 | 0.09 |
| 2 | 31.25 | 0.6 | 18.75 | 2.07 | 2.015 | 0.055 | 3521 | 2937 | 0.19 |

(continued)

| Delta [%] | a [μm] | $r_t$ /a | rt [μm] | Alpha1 | Alpha2 | Alpha1-Alpha2 | EMBc [MHz.km] | OFL [MHz.km] | DMD$_{outer}$ [ps/m] |
|---|---|---|---|---|---|---|---|---|---|
| 2 | 31.25 | 0.6 | 18.75 | 2.07 | 2.02 | 0.05 | 4079 | 3288 | 0.15 |
| 2 | 31.25 | 0.6 | 18.75 | 2.07 | 2.025 | 0.045 | 5373 | 3439 | 0.11 |
| 2 | 31.25 | 0.6 | 18.75 | 2.07 | 2.03 | 0.04 | 4020 | 3271 | 0.09 |
| 2 | 31.25 | 0.6 | 18.75 | 2.07 | 2.035 | 0.035 | 3686 | 2857 | 0.08 |
| 2 | 31.25 | 0.6 | 18.75 | 2.08 | 2.02 | 0.06 | 3739 | 2619 | 0.04 |
| 2 | 31.25 | 0.6 | 18.75 | 2.08 | 2.025 | 0.055 | 3785 | 2476 | 0.04 |
| 2 | 31.25 | 0.6 | 18.75 | 2.08 | 2.03 | 0.05 | 3577 | 2275 | 0.07 |
| 2 | 31.25 | 0.7 | 21.875 | 2.06 | 2.02 | 0.04 | 3501 | 3455 | 0.15 |
| 2 | 31.25 | 0.7 | 21.875 | 2.06 | 2.025 | 0.035 | 3502 | 3220 | 0.15 |
| 2 | 31.25 | 0.7 | 21.875 | 2.06 | 2.03 | 0.03 | 3505 | 2932 | 0.15 |
| 2 | 31.25 | 0.7 | 21.875 | 2.07 | 2.005 | 0.065 | 3650 | 2469 | 0.07 |
| 2 | 31.25 | 0.7 | 21.875 | 2.07 | 2.01 | 0.06 | 3796 | 2373 | 0.07 |
| 2. | 31.25 | 0.7 | 21.875 | 2.07 | 2.015 | 0.055 | 3774 | 2266 | 0.08 |
| 2 | 31.25 | 0.7 | 21.875 | 2.07 | 2.02 | 0.05 | 3627 | 2162 | 0.10 |
| 2.2 | 40 | 0.5 | 20 | 2.07 | 2.03 | 0.04 | 3518 | 2855 | 0.20 |
| 2.2 | 40 | 0.5 | 20 | 2.08 | 2.04 | 0.04 | 4511 | 1816 | 0.22 |
| 2.2 | 40 | 0.5 | 20 | 2.08 | 2.03 | 0.05 | 4698 | 2664 | 0.13 |
| 2.2 | 40 | 0.5 | 20 | 2.09 | 2.04 | 0.04 | 3873 | 1583 | 0.24 |
| 2.2 | 40 | 0.5 | 20 | 2.09 | 2.03 | 0.06 | 5230 | 2271 | 0.14 |
| 2.2 | 40 | 0.5 | 20 | 2.09 | 2.02 | 0.06 | 3264 | 2621 | 0.12 |
| 2.2 | 40 | 0.55 | 22 | 2.07 | 2.03 | 0.04 | 5335 | 2635 | 0.14 |
| 2.2 | 40 | 0.55 | 22 | 2.07 | 2.02 | 0.04 | 3770 | 3000 | 0.20 |
| 2.2 | 40 | 0.55 | 22 | 2.08 | 2.04 | 0.04 | 3790 | 1516 | 0.26 |
| 2.2 | 40 | 0.55 | 22 | 2.08 | 2.03 | 0.05 | 6029 | 2121 | 0.15 |
| 2.2 | 40 | 0.55 | 22 | 2.08 | 2.02 | 0.06 | 5067 | 2725 | 0.10 |
| 2.2 | 40 | 0.55 | 22 | 2.09 | 2.03 | 0.06 | 4772 | 1696 | 0.21 |
| 2.2 | 40 | 0.55 | 22 | 2.09 | 2.02 | 0.06 | 5564 | 2186 | 0.10 |
| 2.2 | 40 | 0.55 | 22 | 2.09 | 2.01 | 0.08 | 3661 | 2295 | 0.11 |
| 2.2 | 40 | 0.6 | 224 | 2.07 | 2.03 | 0.04 | 5440 | 2100 | 0.16 |
| 2.2 | 40 | 0:6 | 24 | 2.07 | 2.02 | 0.04 | 5425 | 2844 | 0.12 |
| 2.2 | 40 | 0.6 | 24 | 2.07 | 2.01 | 0.06 | 4612 | 2899 | 0.17 |
| 2.2 | 40 | 0.6 | 24 | 2.08 | 2.03 | 0.05 | 3833 | 1608 | 0.23 |
| 2.2 | 40 | 0.6 | 24 | 2.08 | 2.02 | 0.06 | 6904 | 2080 | 0.13 |
| 2.2 | 40 | 0.6 | 24 | 2.08 | 2.01 | 0.07 | 5798 | 2478 | 0.05 |
| 2.2 | 40 | 0.6 | 24 | 2.08 | 2 | 0.08 | 3763 | 2287 | 0.12 |
| 2.2 | 40 | 0.6 | 24 | 2.09 | 2.02 | 0.06 | 3673 | 1575 | 0.22 |
| 2.2 | 40 | 0.6 | 24 | 2.09 | 2.01 | 0.08 | 4266 | 1877 | 0.13 |

(continued)

| Delta [%] | a [μm] | $r_t$ /a | rt [μm] | Alpha1 | Alpha2 | Alpha1- Alpha2 | EMBc [MHz.km] | OFL [MHz.km] | DMD$_{outer}$ [ps/m] |
|---|---|---|---|---|---|---|---|---|---|
| 2.2 | 40 | 0.6 | 24 | 2.09 | 2 | 0.08 | 4239 | 1988 | 0.09 |
| 2.2 | 40 | 0.65 | 26 | 2.07 | 2.03 | 0.04 | 3681 | 1636 | 0.23 |
| 2.2 | 40 | 0.65 | 26 | 2.07 | 2.02 | 0.04 | 5467 | 2085 | 0.15 |
| 2.2 | 40 | 0.65 | 26 | 2.07 | 2.01 | 0.06 | 5459 | 2659 | 0.09 |
| 2.2 | 40 | 0.65 | 26 | 2.07 | 2 | 0.06 | 5455 | 2864 | 0.12 |
| 2.2 | 40 | 0.65 | 26 | 2.07 | 1.99 | 0.07 | 4165 | 2401 | 0.19 |
| 2.2 | 40 | 0.65 | 26 | 2.08 | 2.01 | 0.07 | 4103 | 1796 | 0.16 |
| 2.2 | 40 | 0.65 | 26 | 2.08 | 2 | 0.08 | 5155 | 2087 | 0.08 |
| 2.2 | 40 | 0.65 | 26 | 2.08 | 1.99 | 0.09 | 4764 | 2151 | 0.08 |
| 2.2 | 40 | 0.65 | 26 | 2.08 | 1.98 | 0.1 | 3468 | 1912 | 0.15 |
| 2.2 | 40 | 0.7 | 28 | 2.07 | 2.01 | 0.06 | 3674 | 1796 | 0.18 |
| 2.2 | 40 | 0.7 | 28 | 2.07 | 2 | 0.06 | 4784 | 2114 | 0.12 |
| 2.2 | 40 | 0.7 | 28 | 2.07 | 1.99 | 0.07 | 5465 | 2418 | 0.09 |
| 2.2 | 40 | 0.7 | 28 | 2.07 | 1.98 | 0.08 | 5463 | 2476 | 0.10 |
| 2.2 | 40 | 0.7 | 28 | 2.07 | 1.97 | 0.09 | 4488 | 2229 | 0.15 |
| 2.2 | 40 | 0.7 | 28 | 2.08 | 1.98 | 0.1 | 3058 | 1730 | 0.13 |

It can be observed from comparing tables I and II that the fibers of the invention exhibits much higher bandwidth than prior art fibers when numerical aperture is high.

Moreover, it can be extracted from table II that best performances were obtained for fibers having a twin alpha graded-index core following equation 4 with $\alpha_1$ - the exponent value of the graded-index profile in the inner zone of the core - chosen between 2.05 and 2.1; and with $\alpha_2$ - the exponent value of the graded-index profile in the outer zone of the core - smaller by at least 0.04 to the first exponent value ($\alpha_1 > \alpha_2 + 0.04$); and with a normalised transition radius $r_t$/a between 0.5 and 0.7.

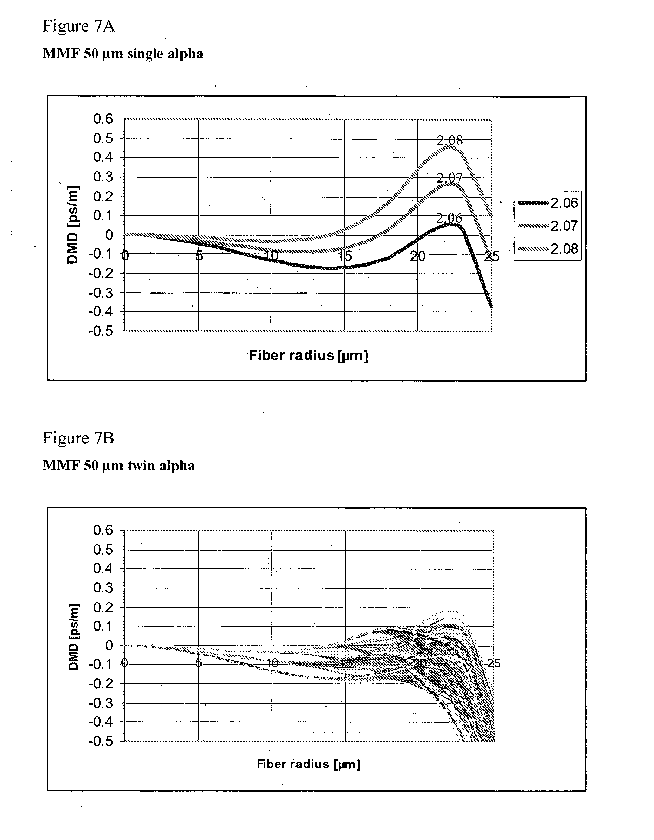

Figures 7 to 9 show graphs reporting DMD values with respect to the radius for the multimode fibers of tables I and II.

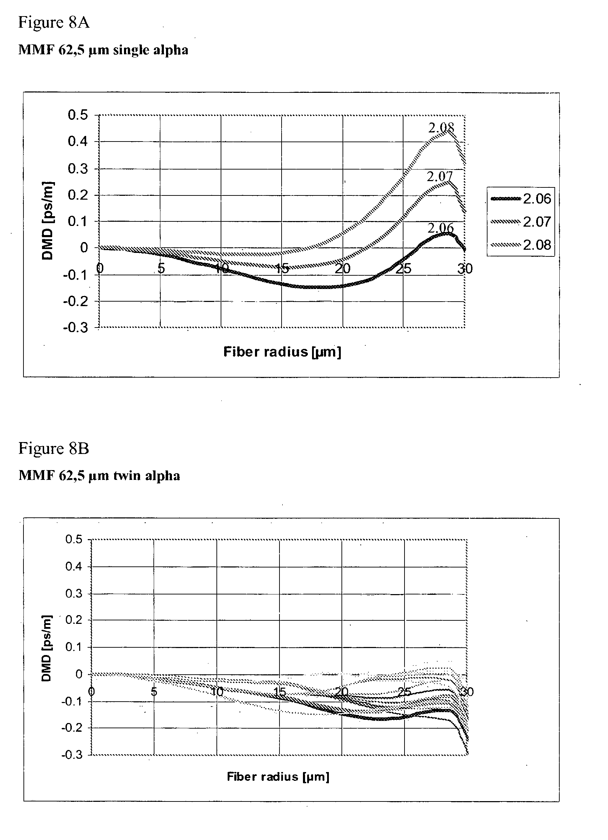

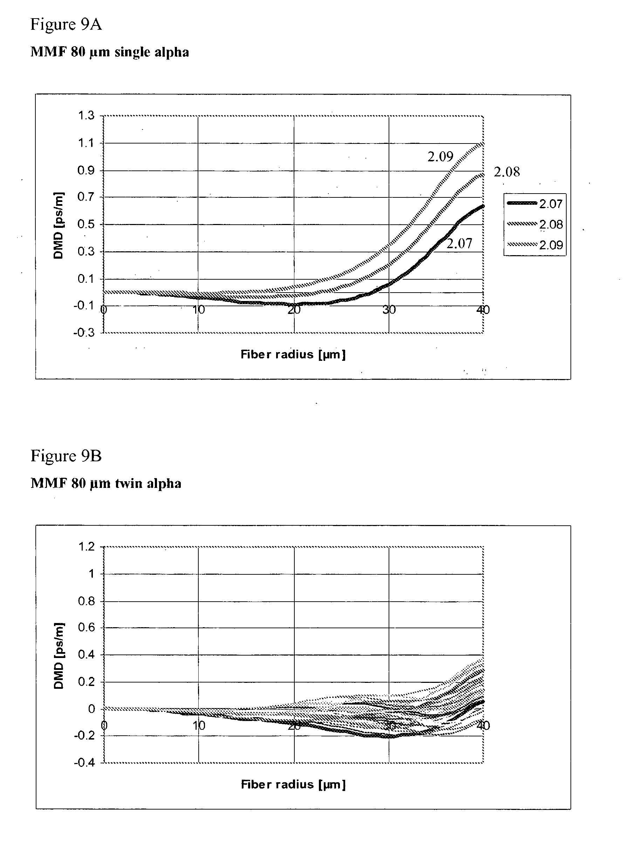

Figure 7A shows graphs reporting DMD values with respect to the radius for the 50 μm multimode fibers of table I and figure 7B shows graphs reporting DMD values with respect to the radius for the 50 μm multimode fibers of table II. Similarly, figure 8A shows graphs reporting DMD values with respect to the radius for the 62.5 μm multimode fibers of table I and figure 8B shows graphs reporting DMD values with respect to the radius for the 62.5 μm multimode fibers of table II; and figure 9A shows graphs reporting DMD values with respect to the radius for the 80 μm multimode fibers of table I and figure 9B shows graphs reporting DMD values with respect to the radius for the 80 μm multimode fibers of table II .

It can be readily observed that the DMD$_{outer}$ value for fibers according to the invention is less than 0.40 ps/m, even less than 0.20 ps/m is most cases and even less than 0.14 ps/m is some cases. In some cases, the DMD$_{outer}$ value exceeds 0.40 ps/m but EMBc remains high.

Indeed, it appears from the graphs of DMD versus radius that the DMD slope is much smaller for fibers according to the invention (figures 7B, 8B and 9B) compared with fibers of the prior art (figures 7A, 8A and 9A). Thus, the DMD differences along the core remain small for fibers according to the invention which means that the intermodal dispersion is low and the effective modal bandwidth is significant.

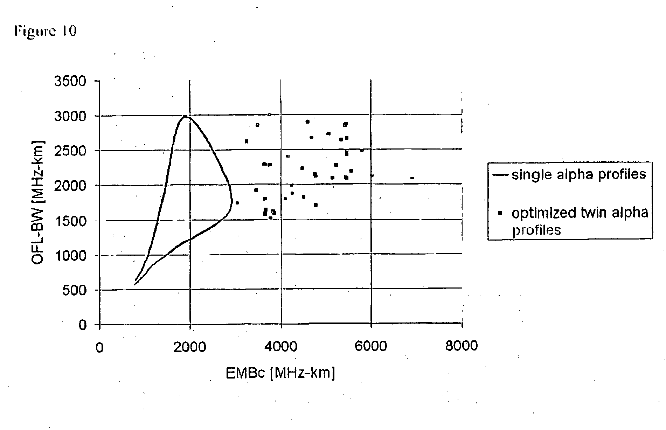

Figure 10 shows a graph reporting OFL values versus EMB values for multimode fibers according to the invention. Figure 10 shows the bandwidth performances achievable with profiles according to the invention. This graph was produced with multimode fibers having large numerical aperture - over 0.28. A plain line shows the limit values that can be achieved with fibers having a core following a standard single alpha profile.

It can be observed that multimode fibers according to the invention have higher effective modal bandwidth EMB than fibers having a standard single alpha profile as well as higher overfilled launch bandwidth.

Notably, it can be observed from table II and from figure 10 that the effective modal bandwidth EMB for fibers according to the invention is high - more than 1000 MHz.km in any case, and even more than 2000 MHz.km and still over 3000 MHz.km in most cases.

It can also be observed from table II and from figure 10 that the overfilled launch bandwidth OFL for fibers according to the invention is also high - over 1000 MHz.km, even over 1500 MHz.km in most cases and even more than 3000 MHz.km in some cases.

The multimode fiber of the invention can therefore be used in an Ethernet optical system with an improved bandwidth, notably for use in a LAN (Local Area Network).

It should be noted that the present invention is not limited to the embodiments described as examples. In particular, a power equation different from equation 4 could be considered for the graded-index profile of the core, providing that the alpha value diminishes from the inner part to the outer part of the core and providing that the profile n(r) and its first derivative dn(r)/dr are continuous over the whole graded-index core.

**Claims**

1. A multimode optical fiber, comprising:

   - a central core having a graded-index profile which can be defined as the relation between the value n of the index at one point in relation to the distance r from this point to the center of the fiber:

$$n(r) = n_0 \sqrt{1 - 2\Delta \left( \frac{r}{a} \right)^\alpha}$$

   where $\alpha \geq 1$

   no, the maximum index value of the core;
   a, the radius of the core; and

$$\Delta = \frac{\left( n_0^2 - n_{cl}^2 \right)}{2n_0^2};$$

   where $n_{cl}$ is minimum index value of the core with
   - an external cladding;

   wherein the graded-index core profile n(r) has at least two different values of exponent along the core radius, a first value $\alpha 1$ in an inner zone of the core and a second value $\alpha 2$ in an outer zone of the core, the second value $\alpha 2$ of exponent being smaller than the first value $\alpha 1$ of exponent, and
   wherein the graded-index core profile n(r) and its first derivative dn(r)/dr are continuous over the whole graded-index core; wherein the central core has a diameter of at least 50 micrometer;
   **characterized in that** the central core has a delta ($\Delta$) value of 1.9% or more, and
   **in that** the multimode optical fiber parameters are chosen such that a dispersion modal delay (DMD) profile having a substantially constant delay over the core is obtained.

2. The fiber of claim 1, wherein the graded-index core profile follows the power equation:

$$n(r) = \begin{cases} n_1 \cdot \sqrt{1 - 2 \cdot \Delta_1 \cdot \left(\dfrac{r}{a}\right)^{\alpha_1}} & 0 \le r \le r_t \\[2ex] n_2 \cdot \sqrt{1 - 2 \cdot \Delta_2 \cdot \left(\dfrac{r}{a}\right)^{\alpha_2}} & r_t \le r \le a \\[2ex] n_{cl}(r) & a < r \end{cases}$$

with a, the external radius of the graded-index core, $r_t$, the radius value at the transition between inner zone and outer zone of the core, and with

$$\Delta_1 = \frac{\alpha_2 \Delta \left(\dfrac{r_t}{a}\right)^{\alpha_2 - \alpha_1}}{\alpha_1 + (\alpha_2 - \alpha_1)\left(\dfrac{r_t}{a}\right)^{\alpha_2}}$$

$$\Delta_2 = \frac{\alpha_1 \Delta}{(1 - 2\Delta) \cdot (\alpha_2 - \alpha_1) \cdot \left(\dfrac{r_t}{a}\right)^{\alpha_2} + \alpha_1}$$

$$n_1 = \frac{n_{cl}}{\sqrt{1 - 2\Delta}}$$

$$n_2 = n_{cl} \cdot \sqrt{\frac{(1 - 2\Delta) \cdot (\alpha_1 - \alpha_2) \cdot \left(\dfrac{r_t}{a}\right)^{\alpha_2} - \alpha_1}{(1 - 2\Delta) \cdot \left[(\alpha_1 - \alpha_2) \cdot \left(\dfrac{r_t}{a}\right)^{\alpha_2} - \alpha_1\right]}}$$

3. The fiber of claim 2, wherein the first exponent value α1 of the graded-index profile in the inner zone of the core is chosen between 2.05 and 2.10.

4. The fiber of claim 2 or 3, wherein the second exponent value α2 of the graded-index profile in the outer zone of the core is smaller by at least 0.04 to the first exponent value α1 of the graded-index profile in the inner zone of the core or α1 > (α2 + 0.04).

5. The fiber of any one of claims 2 to 4, wherein the ratio $r_t/\alpha$ of the radius value at the transition between inner zone and outer zone of the core over the external radius of the graded-index core is between 0.5 and 0.7.

6. The fiber of claim 5, having a Dispersion Modal Delay (DMD) value on an outer mask 0-23μm at a wavelength of 850 nm which is less than 0.40 ps/m, more preferably less than 0.20 ps/m and more preferably less than 0.14 ps/m.

7. The fiber of any one of claims 1 to 5 wherein the central core has a diameter 2a of 80 μm.

8. The fiber of claim 7, having a DMD value on an outer mask 0-37μm at a wavelength of 850 nm which is less than 0.40 ps/m, more preferably less than 0.20 ps/m and more preferably less than 0.14 ps/m.

9. The fiber of any one of claims 1 to 5, wherein the central core has a diameter 2a of 62.5 $\mu$m.

10. The fiber of claim 10, having a DMD value on an outer mask 0-29$\mu$m at a wavelength of 850 nm which is less than 0.40 ps/m, more preferably less than 0.20 ps/m and more preferably less than 0.14 ps/m.

11. The fiber of any one of claims 1 to 10, further comprising a depressed-index inner cladding between the central core and the external cladding.

12. The fiber of any one of claims 1 to 10, further comprising a step portion adjacent to the central core and a depressed-index inner cladding adjacent to the stepped portion.

13. Optical system comprising at least a portion of multimode optical fiber according to any one of claims 1 to 12.

14. The optical system of claim 13 being a Local Area Network.

**Patentansprüche**

1. Eine Mehrmodenglasfaser mit:

- einem Mittelkern, der ein Gradientenindexprofil hat, welches als das Verhältnis zwischen dem Wert n des Brechungsindex an einem Punkt im Verhältnis zum Abstand r von diesem Punkt zum Mittelpunkt der Faser definiert werden kann:

$$n(r) = n_0 \sqrt{1 - 2\Delta \left(\frac{r}{a}\right)^{\alpha}}$$

wobei $\alpha \geq 1$,

$n_0$ der größte Wert des Brechungsindex des Kerns,
a der Radius des Kerns ist, und

$$\Delta = \frac{\left(n_0^2 - n_{cl}^2\right)}{2n_0^2};$$

wobei $n_{cl}$ der minimale Wert des Brechungsindex des Kerns ist mit
- einem externen Mantel,

wobei das Gradientenindexkernprofil n(r) wenigstens zwei verschiedene Werte des Exponenten entlang des Kernradius hat, nämlich einen ersten Wert $\alpha 1$ in einer inneren Zone des Kerns und einen zweiten Wert $\alpha 2$ in einer äußeren Zone des Kerns, wobei der zweite Wert $\alpha 2$ des Exponenten kleiner ist als der erste Wert al des Exponenten, und
wobei das Gradientenindexkernprofil n(r) und seine erste Ableitung dn(r)/dr stetig entlang des gesamten Gradientenindexkerns sind,
wobei der Mittelkern einen Durchmesser von wenigstens 50 Mikrometern hat,
**dadurch gekennzeichnet, dass** der Mittelkern einen Deltawert ($\Delta$) von 1,9 % oder mehr hat, und
dass die Parameter der Mehrmodenglasfaser derart gewählt sind, dass ein Profil des Moden-Laufzeitunterschieds (DMD) mit einem im Wesentlichen konstanten Unterschied über den Kern erhalten wird.

2. Faser nach Anspruch 1, wobei das Gradientenindexkernprofil der folgenden Potenzfunktion folgt:

$$n(r) = \begin{cases} n_1 \cdot \sqrt{1 - 2 \cdot \Delta_1 \cdot \left(\dfrac{r}{a}\right)^{\alpha_1}} & 0 \le r \le r_t \\ n_2 \cdot \sqrt{1 - 2 \cdot \Delta_2 \cdot \left(\dfrac{r}{a}\right)^{\alpha_2}} & r_t \le r \le a \\ n_{cl}(r) & a < r \end{cases}$$

mit a, dem Außenradius des Gradientenindexkerns, $r_t$, dem Wert des Radius beim Übergang zwischen der inneren und der äußeren Zone des Kerns, und mit

$$\Delta_1 = \frac{\alpha_2 \Delta \left(\dfrac{r_t}{a}\right)^{\alpha_2 - \alpha_1}}{\alpha_1 + (\alpha_2 - \alpha_1)\left(\dfrac{r_t}{a}\right)^{\alpha_2}}$$

$$\Delta_2 = \frac{\alpha_1 \Delta}{(1 - 2\Delta) \cdot (\alpha_2 - \alpha_1) \cdot \left(\dfrac{r_t}{a}\right)^{\alpha_2} + \alpha_1}$$

$$n_1 = \frac{n_{cl}}{\sqrt{1 - 2\Delta}}$$

$$n_2 = n_{cl} \cdot \sqrt{\frac{(1 - 2\Delta) \cdot (\alpha_1 - \alpha_2) \cdot \left(\dfrac{r_t}{a}\right)^{\alpha_2} - \alpha_1}{(1 - 2\Delta) \cdot \left[(\alpha_1 - \alpha_2) \cdot \left(\dfrac{r_t}{a}\right)^{\alpha_2} - \alpha_1\right]}}$$

.

3. Faser nach Anspruch 2, wobei der erste Wert des Exponenten α1 des Gradientenindexprofils in der inneren Zone des Kerns zwischen 2,05 und 2,10 gewählt ist.

4. Faser nach Anspruch 2 oder 3, wobei der Wert des zweiten Exponenten α2 des Gradientenindexprofils in der äußeren Zone des Kerns um wenigstens 0,04 kleiner ist als der Wert des ersten Exponenten α1 des Gradientenindexprofils in der inneren Zone des Kerns oder α1 > (α2 + 0,04).

5. Faser nach einem der Ansprüche 2 bis 4, wobei das Verhältnis $r_t$/a des Wertes des Radius beim Übergang zwischen der inneren Zone und der äußeren Zone des Kerns zum Außenradius des Gradientenindexkerns zwischen 0,5 und 0,7 ist.

6. Faser nach Anspruch 5, die einen Moden-Laufzeitunterschied (DMD) Wert an einer äußeren Maske 0 - 23 μm bei einer Wellenlänge von 850 nm hat, der kleiner als 0,40 ps/m, vorzugsweise weniger als 0,20 ps/m und besonders bevorzugt kleiner als 0,14 ps/m ist.

7. Faser nach einem der Ansprüche 1 bis 5, wobei der Mittelkern einen Durchmesser 2a von 80 μm hat.

**8.** Faser nach Anspruch 7, die einen DMD-Wert an einer äußeren Maske 0 - 37 $\mu$m bei einer Wellenlänge von 850 m hat, der kleiner als 0,40 ps/m, vorzugsweise kleiner als 0,20 ps/m und besonders bevorzugt kleiner als 0,14 ps/m ist.

**9.** Faser nach einem der Ansprüche 1 bis 5, wobei der Mittelkern einen Durchmesser 2a von 62,5 $\mu$m hat.

**10.** Faser nach Anspruch 9, die einen DMD-Wert an einer äußeren Maske 0 - 29 $\mu$m bei einer Wellenlänge von 850 nm hat, der kleiner als 0,40 ps/m, vorzugsweise kleiner als 0,20 ps/m und besonders bevorzugt kleiner als 0,14 ps/m ist.

**11.** Faser nach einem der Ansprüche 1 bis 10, die ferner einen inneren Mantel mit abgesenktem Brechungsindex zwischen dem Mittelkern und dem äußeren Mantel aufweist.

**12.** Faser nach einem der Ansprüche 1 bis 10, die ferner an den Mittelkern anschließend einen gestuften Abschnitt und anschließend an den gestuften Abschnitt einen inneren Mantel mit abgesenktem Brechungsindex aufweist.

**13.** Optisches System, das wenigstens einen Teil einer Mehrmodenglasfaser nach einem der Ansprüche 1 bis 12 umfasst.

**14.** Optisches System nach Anspruch 13, das ein lokales Netzwerk ist.

**Revendications**

**1.** Fibre optique multimodale, comprenant :

- une âme centrale comportant un profil à gradient d'indice pouvant être défini comme étant la relation entre la valeur n de l'indice à un point et la distance r de ce point au centre de la fibre :

$$n(r) = n_0 \sqrt{1 - 2\Delta \left(\frac{r}{a}\right)^{\alpha}}$$

où $\alpha \geq 1$

$n_0$ est la valeur d'indice maximale de l'âme ;
a est le rayon de l'âme ; et

$$\Delta = \frac{\left(n_0^2 - n_{cl}^2\right)}{2n_0^2};$$

où $n_{cl}$ est la valeur d'indice minimale de l'âme avec
- un revêtement externe ;

dans laquelle le profil d'âme à gradient d'indice n(r) comporte au moins deux valeurs différentes d'exposant le long du rayon d'âme, une première valeur $\alpha 1$ dans une zone intérieure de l'âme et une deuxième valeur $\alpha 2$ dans une zone extérieure de l'âme, la deuxième valeur $\alpha 2$ de l'exposant étant inférieure à la première valeur $\alpha 1$ de l'exposant, et dans laquelle le profil d'âme à gradient d'indice n(r) et sa première dérivée dn(r)/dr sont continus sur toute l'âme à gradient d'indice ;
dans laquelle l'âme centrale a un diamètre d'au moins 50 $\mu$m ;
**caractérisée en ce que** l'âme centrale a une valeur delta ($\Delta$) supérieure ou égale à 1,9 %, et
**en ce que** les paramètres de fibre optique multimodale sont choisis de sorte qu'un profil de délai modal de dispersion (DMD) ayant un délai sensiblement constant sur l'âme soit obtenu.

**2.** Fibre selon la revendication 1, dans laquelle le profil d'âme à gradient d'indice respecte l'équation de puissance :

$$n(r) = \begin{cases} n_1 \cdot \sqrt{1 - 2 \cdot \Delta_1 \cdot \left(\dfrac{r}{a}\right)^{\alpha_1}} & 0 \leq r \leq r_t \\[2mm] n_2 \cdot \sqrt{1 - 2 \cdot \Delta_2 \cdot \left(\dfrac{r}{a}\right)^{\alpha_2}} & r_t \leq r \leq a \\[2mm] n_{cl}(r) & a < r \end{cases}$$

où a est le rayon externe de l'âme à gradient d'indice, $r_t$ est la valeur de rayon à la transition entre la zone intérieure et la zone extérieure de l'âme, et

$$\Delta_1 = \frac{\alpha_2 \Delta \left(\dfrac{r_t}{a}\right)^{\alpha_2 - \alpha_1}}{\alpha_1 + (\alpha_2 - \alpha_1)\left(\dfrac{r_t}{a}\right)^{\alpha_2}}$$

$$\Delta_2 = \frac{\alpha_1 \Delta}{(1 - 2\Delta) \cdot (\alpha_2 - \alpha_1) \cdot \left(\dfrac{r_t}{a}\right)^{\alpha_2} + \alpha_1}$$

$$n_1 = \frac{n_{cl}}{\sqrt{1 - 2\Delta}}$$

$$n_2 = n_{cl} \cdot \sqrt{\frac{(1 - 2\Delta) \cdot (\alpha_1 - \alpha_2) \cdot \left(\dfrac{r_t}{a}\right)^{\alpha_2} - \alpha_1}{(1 - 2\Delta) \cdot \left[(\alpha_1 - \alpha_2) \cdot \left(\dfrac{r_t}{a}\right)^{\alpha_2} - \alpha_1\right]}}$$

3. Fibre selon la revendication 2, dans laquelle la première valeur d'exposant $\alpha 1$ du profil à gradient d'indice dans la zone intérieure de l'âme est choisie entre 2,05 et 2,10.

4. Fibre selon la revendication 2 ou 3, dans laquelle la deuxième valeur d'exposant $\alpha 2$ du profil à gradient d'indice dans la zone extérieure de l'âme est inférieure d'au moins 0,04 à la première valeur d'exposant $\alpha 1$ du profil à gradient d'indice dans la zone intérieure de l'âme ou $\alpha 1 > (\alpha 2 + 0{,}04)$.

5. Fibre selon l'une quelconque des revendications 2 à 4, dans laquelle le rapport $r_t/a$ de la valeur de rayon à la transition entre la zone intérieure et la zone extérieure de l'âme sur le rayon externe de l'âme à gradient d'indice est entre 0,5 et 0,7.

6. Fibre selon la revendication 5, ayant une valeur de délai modal de dispersion (DMD) sur un masque extérieur de 0 à 23 $\mu$m à une longueur d'onde de 850 nm qui est inférieure à 0,40 ps/m, de préférence inférieure à 0,20 ps/m et avec plus de préférence inférieure à 0,14 ps/m.

**7.** Fibre selon l'une quelconque des revendications 1 à 5, dans laquelle l'âme centrale a un diamètre 2a de 80 μm.

**8.** Fibre selon la revendication 7, ayant une valeur DMD sur un masque extérieur de 0 à 37 μm à une longueur d'onde de 850 nm qui est inférieure à 0,40 ps/m, de préférence inférieure 0,20 ps/m et avec plus de préférence inférieure à 0,14 ps/m.

**9.** Fibre selon l'une quelconque des revendications 1 à 5, dans laquelle l'âme centrale a un diamètre 2a de 62,5 μm.

**10.** Fibre selon la revendication 10, ayant une valeur DMD sur un masque extérieur de 0 à 29 μm à une longueur d'onde de 850 nm qui est inférieure à 0,40 ps/m, de préférence inférieure 0,20 ps/m et avec plus de préférence inférieure à 0,14 ps/m.

**11.** Fibre selon l'une quelconque des revendications 1 à 10, comprenant en outre un revêtement intérieur à réduction d'indice entre l'âme centrale et le revêtement externe.

**12.** Fibre selon l'une quelconque des revendications 1 à 10, comprenant en outre une portion en marche d'escalier adjacente à l'âme centrale et un revêtement intérieur à réduction d'indice adjacent à la portion en marche d'escalier.

**13.** Système optique comprenant au moins une portion de fibre optique multimodale selon l'une quelconque des revendications 1 à 12.

**14.** Système optique selon la revendication 13, qui est un réseau local.

Figure 1A
DMD@850 nm of 80 μm MMF for α=2.04

Figure 1B
DMD@850 nm of 80 μm MMF for α=2.06

Figure 1C
DMD@850 nm of 80 μm MMF for α=2.08

Figure 2

EP 2 482 106 B1

Figure 3A

Figure 3B

Figure 4A

Figure 4B

Figure 5A

Figure 5B

Figure 6A

Figure 6B

22

Figure 7A

**MMF 50 µm single alpha**

Figure 7B

**MMF 50 µm twin alpha**

Figure 8A

**MMF 62,5 µm single alpha**

Figure 8B

**MMF 62,5 µm twin alpha**

Figure 9A

**MMF 80 μm single alpha**

Figure 9B

**MMF 80 μm twin alpha**

Figure 10

Figure 11

| offset launch [µm] | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|
| Source 1 | 0 | 0.03 | 0.26 | 0.88 | 2.00 | 3.23 | 3.96 | 3.69 | 2.64 | 1.39 | 0.51 | 0.11 | 0.00 | 0.00 | 0.00 | 0.00 | 0.01 | 0.02 | 0.03 | 0.03 | 0.03 | 0.01 | 0.00 | 0.00 | 0.00 |
|  |  | 3023 | 2463 | 4923 | 9102 | 1216 | 1956 | 4686 | 4369 | 7552 | 1827 | 0549 | 4097 | 0048 | 1111 | 5094 | 3918 | 632 | 6799 | 9465 | 2152 | 9992 | 8832 | 2612 | 0282 |
| Source 2 | 0 | 0.02 | 0.18 | 0.63 | 1.44 | 2.37 | 3.05 | 3.15 | 2.73 | 2.06 | 1.38 | 0.83 | 0.41 | 0.16 | 0.04 | 0.04 | 0.11 | 0.21 | 0.30 | 0.32 | 0.26 | 0.16 | 0.07 | 0.02 | 0.00 |
|  |  | 3504 | 8044 | 4634 | 7235 | 6616 | 2908 | 0634 | 2324 | 0241 | 8339 | 4722 | 9715 | 0282 | 7143 | 4691 | 6152 | 9802 | 7088 | 9314 | 8541 | 697 | 3514 | 1793 | 2679 |
| Source 3 | 0 | 0 | 0 | 0 | 0.00 | 0.07 | 0.26 | 0.63 | 1.19 | 1.91 | 2.75 | 3.51 | 3.88 | 3.56 | 2.61 | 1.48 | 0.59 | 0.15 | 0.01 | 0 | 0 | 0 | 0 | 0 | 0 |
|  |  |  |  |  | 7414 | 2928 | 2906 | 7117 | 7628 | 6841 | 5231 | 4797 | 3317 | 1955 | 7093 | 0325 | 3724 | 3006 | 2051 |  |  |  |  |  |  |
| Source 4 | 0 | 0 | 0 | 0 | 0.00 | 0.05 | 0.20 | 0.48 | 0.89 | 1.40 | 1.95 | 2.43 | 2.63 | 2.39 | 1.81 | 1.29 | 1.24 | 1.70 | 2.24 | 2.39 | 1.95 | 1.21 | 0.53 | 0.15 | 0.01 |
|  |  |  |  | 5637 | 5488 | 005 | 3667 | 695 | 2833 | 7805 | 3247 | 9299 | 7238 | 6953 | 6977 | 0553 | 002 | 0664 | 4077 | 2429 | 3833 | 4474 | 8314 | 9738 |
| Source 5 | 0 | 0 | 0 | 0 | 0.00 | 0.02 | 0.10 | 0.25 | 0.45 | 0.66 | 0.82 | 1.00 | 1.29 | 1.81 | 2.50 | 3.16 | 3.57 | 3.61 | 3.32 | 2.74 | 1.95 | 1.13 | 0.49 | 0.14 | 0.01 |
|  |  |  |  | 3034 | 9856 | 7634 | 8329 | 8494 | 1247 | 6035 | 0204 | 4439 | 3982 | 695 | 4213 | 2113 | 8037 | 9662 | 5395 | 3241 | 7762 | 4404 | 6517 | 8328 |
| Source 6 | 0 | 0.01 | 0.12 | 0.40 | 0.92 | 1.48 | 1.82 | 1.70 | 1.21 | 0.64 | 0.23 | 0.09 | 0.20 | 0.52 | 1.02 | 1.61 | 2.21 | 2.70 | 2.93 | 2.73 | 2.09 | 1.26 | 0.55 | 0.16 | 0.02 |
|  |  | 5199 | 091 | 7702 | 5664 | 8762 | 5448 | 2306 | 8378 | 3911 | 8557 | 8956 | 4274 | 9982 | 4948 | 1695 | 0689 | 7415 | 88 | 932 | 0874 | 1564 | 214 | 3627 | 0443 |
| Source 7 | 0 | 0.01 | 0.12 | 0.43 | 0.98 | 1.58 | 1.94 | 1.81 | 1.29 | 0.68 | 0.25 | 0.13 | 0.32 | 0.84 | 1.56 | 2.22 | 2.55 | 2.46 | 2.08 | 1.57 | 1.05 | 0.59 | 0.25 | 0.07 | 0.00 |
|  |  | 6253 | 9011 | 4844 | 7184 | 76 | 6614 | 5285 | 9241 | 6635 | 585 | 1429 | 7091 | 8323 | 7513 | 4027 | 506 | 4566 | 7879 | 7111 | 6343 | 5102 | 6718 | 6096 | 9446 |
| Source 8 | 0 | 0.02 | 0.17 | 0.59 | 1.35 | 2.17 | 2.66 | 2.48 | 1.78 | 0.94 | 0.36 | 0.16 | 0.31 | 0.77 | 1.38 | 1.85 | 1.91 | 1.51 | 0.90 | 0.38 | 0.11 | 0.01 | 0.00 | 0.00 | 0 |
|  |  | 2057 | 639 | 5248 | 1845 | 4399 | 6278 | 6564 | 0897 | 5412 | 0494 | 3923 | 8712 | 8983 | 3174 | 3992 | 4123 | 1827 | 833 | 6991 | 176 | 4829 | 1818 | 054 |  |
| Source 9 | 0 | 0.01 | 0.08 | 0.28 | 0.65 | 1.13 | 1.62 | 2.04 | 2.29 | 2.28 | 1.93 | 1.38 | 0.87 | 0.67 | 0.81 | 1.07 | 1.25 | 1.25 | 1.11 | 0.87 | 0.60 | 0.34 | 0.15 | 0.04 | 0.00 |
|  |  | 043 | 3496 | 1802 | 028 | 0599 | 7046 | 4326 | 172 | 0813 | 7545 | 3006 | 8798 | 9756 | 236 | 4702 | 7323 | 5967 | 2456 | 9309 | 8183 | 8921 | 112 | 4757 | 5639 |
| Source 10 | 0 | 0.01 | 0.12 | 0.42 | 0.95 | 1.53 | 1.88 | 1.76 | 1.29 | 0.79 | 0.55 | 0.67 | 1.04 | 1.58 | 2.13 | 2.47 | 2.36 | 1.79 | 1.05 | 0.44 | 0.12 | 0.01 | 0 | 0 | 0 |
|  |  | 5681 | 4978 | 1548 | 7203 | 9535 | 7747 | 2955 | 2184 | 0844 | 938 | 3655 | 7689 | 9037 | 8626 | 0827 | 1764 | 8213 | 9264 | 4481 | 3304 | 2552 |  |  |  |
| Source 11 | 0 | 0 | 0.03 | 0.26 | 0.88 | 2.00 | 3.23 | 3.96 | 3.69 | 2.64 | 1.39 | 0.51 | 0.11 | 0.00 | 0.00 | 0.00 | 0.00 | 0.01 | 0.02 | 0.03 | 0.03 | 0.03 | 0.01 | 0.00 | 0.00 |
|  |  |  | 3023 | 2463 | 4923 | 9102 | 1216 | 1956 | 4686 | 4369 | 7552 | 1827 | 0549 | 4097 | 0048 | 1111 | 5094 | 3918 | 632 | 6799 | 9465 | 2152 | 9992 | 8832 | 2612 |
| Source 12 | 0 | 0 | 0.02 | 0.18 | 0.63 | 1.44 | 2.37 | 3.05 | 3.15 | 2.73 | 2.06 | 1.38 | 0.83 | 0.41 | 0.16 | 0.04 | 0.04 | 0.11 | 0.21 | 0.30 | 0.32 | 0.26 | 0.16 | 0.07 | 0.02 |
|  |  |  | 3504 | 8044 | 4634 | 7235 | 6616 | 2908 | 0634 | 2324 | 0241 | 8339 | 4722 | 9715 | 0282 | 7143 | 4691 | 6152 | 9802 | 7088 | 9314 | 8541 | 697 | 3514 | 1793 |

EP 2 482 106 B1

| | | | | | | | | | | | | | | | | | | | | | | | | | |
|---|---|---|---|---|---|---|---|---|---|---|---|---|---|---|---|---|---|---|---|---|---|---|---|---|---|
| Source 13 | 0 | 0 | 0 | 0 | 0 | 0.00 7414 | 0.07 2928 | 0.26 2906 | 0.63 7117 | 1.19 7628 | 1.91 6841 | 2.75 5231 | 3.51 4797 | 3.88 3317 | 3.56 1955 | 2.61 7093 | 1.48 0325 | 0.59 3724 | 0.15 3006 | 0.01 2051 | 0 | 0 | 0 | 0 `.0 |
| Source 14 | 0 | 0. | 0 | 0 | 0 | 0.00 5637 | 0.05 5488 | 0.20 005 | 0.48 3667 | 0.89 695 | 1.40 2833 | 1.95 7805 | 2.43 3247 | 2.63 9299 | 2.39 7238 | 1.81 6953 | 1.29 6977 | 1.24 0553 | 1.70 002 | 2.24 0664 | 2.39 4077 | 1.95 2429 | 1.21 3833 | 0.53 4474 | 0.15 8314 |
| Source 15 | 0 | 0 | 0 | 0 | 0 | 0.00 3034 | 0.02 9856 | 0.10 7634 | 0.25 8329 | 0.45 8494 | 0.66 1247 | 0.82 6035 | 1.00 0204 | 1.29 4439 | 1.81 3982 | 2.50 695 | 3.16 4213 | 3.57 2113 | 3.61 8037 | 3.32 9662 | 2.74 5395 | 1.95 3241 | 1.13 7762 | 0.49 4404 | 0.14 6517 |
| Source 16 | 0 | 0 | 0.01 5199 | 0.12 091 | 0.40 7702 | 0.92 5664 | 1.48 8762 | 1.82 5448 | 1.70 2306 | 1.21 8378 | 0.64 3911 | 0.23 8557 | 0.09 8956 | 0.20 4274 | 0.52 9982 | 1.02 4948 | 1.61 1695 | 2.21 0689 | 2.70 7415 | 2.93 88 | 2.73 932 | 2.09 0874 | 1.26 1564 | 0.55 214 | 0.16 3627 |
| Source 17 | 0 | 0 | 0.01 6253 | 0.12 9011 | 0.43 4844 | 0.98 7184 | 1.58 76 | 1.94 6614 | 1.81 5285 | 1.29 9241 | 0.68 6635 | 0.25 585 | 0.13 1429 | 0.32 7091 | 0.84 8323 | 1.56 7513 | 2.22 4027 | 2.55 506 | 2.46 4566 | 2.08 7879 | 1.57 7111 | 1.05 6343 | 0.59 5102 | 0.25 6718 | 0.07 6096 |
| Source 18 | 0 | 0 | 0.02 2057 | 0.17 639 | 0.59 5248 | 1.35 1845 | 2.17 4399 | 2.66 6278 | 2.48 6564 | 1.78 0897 | 0.94 5412 | 0.36 0494 | 0.16 3923 | 0.31 8712 | 0.77 8983 | 1.38 3174 | 1.85 3992 | 1.91 4123 | 1.51 1827 | 0.90 833 | 0.38 6991 | 0.11 176 | 0.01 4829 | 0.00 1818 | 0.00 054 |
| Source 19 | 0 | 0 | 0.01 043 | 0.08 3496 | 0.28 1802 | 0.65 028 | 1.13 0599 | 1.62 7046 | 2.04 4326 | 2.29 172 | 2.28 0813 | 1.93 7545 | 1.38 3006 | 0.87 8798 | 0.67 9756 | 0.81 236 | 1.07 4702 | 1.25 7323 | 1.25 5967 | 1.11 2456 | 0.87 9309 | 0.60 8183 | 0.34 8921 | 0.15 112 | 0.04 4757 |
| Source 20 | 0 | 0 | 0.01 5681 | 0.12 4978 | 0.42 1548 | 0.95 7203 | 1.53 9535 | 1.88 7747 | 1.76 2955 | 1.29 2184 | 0.79 0844 | 0.55 938 | 0.67 3655 | 1.04 7689 | 1.58 9037 | 2.13 8626 | 2.47 0827 | 2.36 1764 | 1.79 8213 | 1.05 9264 | 0.44 4481 | 0.12 3304 | 0.01 2552 | 0 | 0 |
| Source 21 | 0 | 0 | 0 3023 | 0.03 2463 | 0.26 4923 | 0.88 9102 | 2.00 1216 | 3.23 1956 | 3.96 4686 | 3.69 4369 | 2.64 7552 | 1.39 1827 | 0.51 0549 | 0.11 4097 | 0.00 0048 | 0.00 1111 | 0.00 5094 | 0.00 3918 | 0.01 632 | 0.02 6799 | 0.03 9465 | 0.03 2152 | 0.03 9992 | 0.01 8832 | 0.00 |
| Source 22 | 0 | 0 | 0 3504 | 0.02 8044 | 0.18 4634 | 0.63 7235 | 1.44 6616 | 2.37 2908 | 3.05 0634 | 3.15 2324 | 2.73 0241 | 2.06 8339 | 1.38 4722 | 0.83 9715 | 0.41 0282 | 0.16 7143 | 0.04 4691 | 0.04 6152 | 0.11 9802 | 0.21 7088 | 0.30 9314 | 0.32 8541 | 0.26 697 | 0.16 3514 | 0.07 |
| Source 23 | 0 | 0 | 0 | 0 | 0 | 0 7414 | 0.00 2928 | 0.07 2906 | 0.26 7117 | 0.63 7628 | 1.19 6841 | 1.91 5231 | 2.75 4797 | 3.51 3317 | 3.88 1955 | 3.56 7093 | 2.61 0325 | 1.48 3724 | 0.59 3006 | 0.15 2051 | 0.01 | 0 | 0 | 0 | 0 |
| Source 24 | 0 | 0 | 0 | 0 | 0 | 0 5637 | 0.00 5488 | 0.05 005 | 0.20 3667 | 0.48 695 | 0.89 2833 | 1.40 7805 | 1.95 3247 | 2.43 9299 | 2.63 7238 | 2.39 6953 | 1.81 6977 | 1.29 0553 | 1.24 002 | 1.70 0664 | 2.24 4077 | 2.39 2429 | 1.95 3833 | 1.21 4474 | 0.53 |
| Source 25 | 0 | 0 | 0 | 0 | 0 | 0 3034 | 0.00 9856 | 0.02 7634 | 0.10 8329 | 0.25 8494 | 0.45 1247 | 0.66 6035 | 0.82 0204 | 1.00 4439 | 1.29 3982 | 1.81 695 | 2.50 4213 | 3.16 2113 | 3.57 8037 | 3.61 9662 | 3.32 5395 | 2.74 3241 | 1.95 7762 | 1.13 4404 | 0.49 |
| Source 26 | 0 | 0 | 0 5199 | 0.01 091 | 0.12 7702 | 0.40 5664 | 0.92 8762 | 1.48 5448 | 1.82 2306 | 1.70 8378 | 1.21 3911 | 0.64 8557 | 0.23 8956 | 0.09 4274 | 0.20 9982 | 0.52 4948 | 1.02 1695 | 1.61 0689 | 2.21 7415 | 2.70 88 | 2.93 932 | 2.73 0874 | 2.09 1564 | 1.26 214 | 0.55 |
| Source 27 | 0 | 0 | 0 6253 | 0.01 9011 | 0.12 4844 | 0.43 7184 | 0.98 76 | 1.58 6614 | 1.94 5285 | 1.81 9241 | 1.29 6635 | 0.68 585 | 0.25 1429 | 0.13 7091 | 0.32 8323 | 0.84 7513 | 1.56 4027 | 2.22 506 | 2.55 4566 | 2.46 7879 | 2.08 7111 | 1.57 6343 | 1.05 5102 | 0.59 6718 | 0.25 |
| Source 28 | 0 | 0 | 0 2057 | 0.02 639 | 0.17 5248 | 0.59 1845 | 1.35 4399 | 2.17 6278 | 2.66 6564 | 2.48 0897 | 1.78 5412 | 0.94 0494 | 0.36 3923 | 0.16 8712 | 0.31 8983 | 0.77 3174 | 1.38 3992 | 1.85 4123 | 1.91 1827 | 1.51 833 | 0.90 6991 | 0.38 176 | 0.11 4829 | 0.01 1818 | 0.00 |

| Source 29 | 0 | 0 | 0 | 0.01 | 0.08 | 0.28 | 0.65 | 1.13 | 1.62 | 2.04 | 2.29 | 2.28 | 1.93 | 1.38 | 0.87 | 0.67 | 0.81 | 1.07 | 1.25 | 1.25 | 1.11 | 0.87 | 0.60 | 0.34 | 0.15 |
| | | | | 043 | 3496 | 1802 | 028 | 0599 | 7046 | 4326 | 172 | 0813 | 7545 | 3006 | 8798 | 9756 | 236 | 4702 | 7323 | 5967 | 2456 | 9309 | 8183 | 8921 | 112 |
| Source 30 | 0 | 0 | 0 | 0.01 | 0.12 | 0.42 | 0.95 | 1.53 | 1.88 | 1.76 | 1.29 | 0.79 | 0.55 | 0.67 | 1.04 | 1.58 | 2.13 | 2.47 | 2.36 | 1.79 | 1.05 | 0.44 | 0.12 | 0.01 | 0 |
| | | | | 5681 | 4978 | 1548 | 7203 | 9535 | 7747 | 2955 | 2184 | 0844 | 938 | 3655 | 7689 | 9037 | 8626 | 0827 | 1764 | 8213 | 9264 | 4481 | 3304 | 2552 | |
| Source 31 | 0 | 0 | 0 | 0 | 0.03 | 0.26 | 0.88 | 2.00 | 3.23 | 3.96 | 3.69 | 2.64 | 1.39 | 0.51 | 0.11 | 0.00 | 0.00 | 0.00 | 0.00 | 0.01 | 0.02 | 0.03 | 0.03 | 0.03 | 0.01 |
| | | | | | 3023 | 2463 | 4923 | 9102 | 1216 | 1956 | 4686 | 4369 | 7552 | 1827 | 0549 | 4097 | 0048 | 1111 | 5094 | 3918 | 632 | 6799 | 9465 | 2152 | 9992 |
| Source 32 | 0 | 0 | 0 | 0 | 0.02 | 0.18 | 0.63 | 1.44 | 2.37 | 3.05 | 3.15 | 2.73 | 2.06 | 1.38 | 0.83 | 0.41 | 0.16 | 0.04 | 0.04 | 0.11 | 0.21 | 0.30 | 0.32 | 0.26 | 0.16 |
| | | | | | 3504 | 8044 | 4634 | 7235 | 6616 | 2908 | 0634 | 2324 | 0241 | 8339 | 4722 | 9715 | 0282 | 7143 | 4691 | 6152 | 9802 | 7088 | 9314 | 8541 | 697 |
| Source 33 | 0 | 0 | 0 | 0 | 0 | 0 | 0 | 0.00 | 0.07 | 0.26 | 0.63 | 1.19 | 1.91 | 2.75 | 3.51 | 3.88 | 3.56 | 2.61 | 1.48 | 0.59 | 0.15 | 0.01 | 0 | 0 | 0 |
| | | | | | | | | 7414 | 2928 | 2906 | 7117 | 7628 | 6841 | 5231 | 4797 | 3317 | 1955 | 7093 | 0325 | 3724 | 3006 | 2051 | | | |
| Source 34 | 0 | 0 | 0 | 0 | 0 | 0 | 0 | 0.00 | 0.05 | 0.20 | 0.48 | 0.89 | 1.40 | 1.95 | 2.43 | 2.63 | 2.39 | 1.81 | 1.29 | 1.24 | 1.70 | 2.24 | 2.39 | 1.95 | 1.21 |
| | | | | | | | | 5637 | 5488 | 005 | 3667 | 695 | 2833 | 7805 | 3247 | 9299 | 7238 | 6953 | 6977 | 0553 | 002 | 0664 | 4077 | 2429 | 3833 |
| Source 35 | 0 | 0 | 0 | 0 | 0 | 0 | 0 | 0.00 | 0.02 | 0.10 | 0.25 | 0.45 | 0.66 | 0.82 | 1.00 | 1.29 | 1.81 | 2.50 | 3.16 | 3.57 | 3.61 | 3.32 | 2.74 | 1.95 | 1.13 |
| | | | | | | | | 3034 | 9856 | 7634 | 8329 | 8494 | 1247 | 6035 | 0204 | 4439 | 3982 | 695 | 4213 | 2113 | 8037 | 9662 | 5395 | 3241 | 7762 |
| Source 36 | 0 | 0 | 0 | 0 | 0.01 | 0.12 | 0.40 | 0.92 | 1.48 | 1.82 | 1.70 | 1.21 | 0.64 | 0.23 | 0.09 | 0.20 | 0.52 | 1.02 | 1.61 | 2.21 | 2.70 | 2.93 | 2.73 | 2.09 | 1.26 |
| | | | | | 5199 | 091 | 7702 | 5664 | 8762 | 5448 | 2306 | 8378 | 3911 | 8557 | 8956 | 4274 | 9982 | 4948 | 1695 | 0689 | 7415 | 88 | 932 | 0874 | 1564 |
| Source 37 | 0 | 0 | 0 | 0 | 0.01 | 0.12 | 0.43 | 0.98 | 1.58 | 1.94 | 1.81 | 1.29 | 0.68 | 0.25 | 0.13 | 0.32 | 0.84 | 1.56 | 2.22 | 2.55 | 2.46 | 2.08 | 1.57 | 1.05 | 0.59 |
| | | | | | 6253 | 9011 | 4844 | 7184 | 76 | 6614 | 5285 | 9241 | 6635 | 585 | 1429 | 7091 | 8323 | 7513 | 4027 | 506 | 4566 | 7879 | 7111 | 6343 | 5102 |
| Source 38 | 0 | 0 | 0 | 0 | 0.02 | 0.17 | 0.59 | 1.35 | 2.17 | 2.66 | 2.48 | 1.78 | 0.94 | 0.36 | 0.16 | 0.31 | 0.77 | 1.38 | 1.85 | 1.91 | 1.51 | 0.90 | 0.38 | 0.11 | 0.01 |
| | | | | | 2057 | 639 | 5248 | 1845 | 4399 | 6278 | 6564 | 0897 | 5412 | 0494 | 3923 | 8712 | 8983 | 3174 | 3992 | 4123 | 1827 | 833 | 6991 | 176 | 4829 |
| Source 39 | 0 | 0 | 0 | 0 | 0.01 | 0.08 | 0.28 | 0.65 | 1.13 | 1.62 | 2.04 | 2.29 | 2.28 | 1.93 | 1.38 | 0.87 | 0.67 | 0.81 | 1.07 | 1.25 | 1.25 | 1.11 | 0.87 | 0.60 | 0.34 |
| | | | | | 043 | 3496 | 1802 | 028 | 0599 | 7046 | 4326 | 172 | 0813 | 7545 | 3006 | 8798 | 9756 | 236 | 4702 | 7323 | 5967 | 2456 | 9309 | 8183 | 8921 |
| Source 40 | 0 | 0 | 0 | 0 | 0.01 | 0.12 | 0.42 | 0.95 | 1.53 | 1.88 | 1.76 | 1.29 | 0.79 | 0.55 | 0.67 | 1.04 | 1.58 | 2.13 | 2.47 | 2.36 | 1.79 | 1.05 | 0.44 | 0.12 | 0.01 |
| | | | | | 5681 | 4978 | 1548 | 7203 | 9535 | 7747 | 2955 | 2184 | 0844 | 938 | 3655 | 7689 | 9037 | 8626 | 0827 | 1764 | 8213 | 9264 | 4481 | 3304 | 2552 |
| Source 41 | 0 | 0 | 0 | 0 | 0 | 0.03 | 0.26 | 0.88 | 2.00 | 3.23 | 3.96 | 3.69 | 2.64 | 1.39 | 0.51 | 0.11 | 0.00 | 0.00 | 0.00 | 0.00 | 0.01 | 0.02 | 0.03 | 0.03 | 0.03 |
| | | | | | | 3023 | 2463 | 4923 | 9102 | 1216 | 1956 | 4686 | 4369 | 7552 | 1827 | 0549 | 4097 | 0048 | 1111 | 5094 | 3918 | 632 | 6799 | 9465 | 2152 |
| Source 42 | 0 | 0 | 0 | 0 | 0 | 0.02 | 0.18 | 0.63 | 1.44 | 2.37 | 3.05 | 3.15 | 2.73 | 2.06 | 1.38 | 0.83 | 0.41 | 0.16 | 0.04 | 0.04 | 0.11 | 0.21 | 0.30 | 0.32 | 0.26 |
| | | | | | | 3504 | 8044 | 4634 | 7235 | 6616 | 2908 | 0634 | 2324 | 0241 | 8339 | 4722 | 9715 | 0282 | 7143 | 4691 | 6152 | 9802 | 7088 | 9314 | 8541 |
| Source 43 | 0 | 0 | 0 | 0 | 0 | 0 | 0 | 0 | 0.00 | 0.07 | 0.26 | 0.63 | 1.19 | 1.91 | 2.75 | 3.51 | 3.88 | 3.56 | 2.61 | 1.48 | 0.59 | 0.15 | 0.01 | 0 | 0 |
| | | | | | | | | | 7414 | 2928 | 2906 | 7117 | 7628 | 6841 | 5231 | 4797 | 3317 | 1955 | 7093 | 0325 | 3724 | 3006 | 2051 | | |
| Source 44 | 0 | 0 | 0 | 0 | 0 | 0 | 0 | 0 | 0.00 | 0.05 | 0.20 | 0.48 | 0.89 | 1.40 | 1.95 | 2.43 | 2.63 | 2.39 | 1.81 | 1.29 | 1.24 | 1.70 | 2.24 | 2.39 | 1.95 |
| | | | | | | | | | 5637 | 5488 | 005 | 3667 | 695 | 2833 | 7805 | 3247 | 9299 | 7238 | 6953 | 6977 | 0553 | 002 | 0664 | 4077 | 2429 |

EP 2 482 106 B1

| | | | | | | | | | | | | | | | | | | | | | | | | | |
|---|---|---|---|---|---|---|---|---|---|---|---|---|---|---|---|---|---|---|---|---|---|---|---|---|---|
| Source 45 | 0 | 0 | 0 | 0 | 0 | 0 | 0 | 0 | 0.00 3034 | 0.02 9856 | 0.10 7634 | 0.25 8329 | 0.45 8494 | 0.66 1247 | 0.82 6035 | 1.00 0204 | 1.29 4439 | 1.81 3982 | 2.50 695 | 3.16 4213 | 3.57 2113 | 3.61 8037 | 3.32 9662 | 2.74 5395 | 1.95 3241 |
| Source 46 | 0 | 0 | 0 | 0 | 0 | 0.01 5199 | 0.12 091 | 0.40 7702 | 0.92 5664 | 1.48 8762 | 1.82 5448 | 1.70 2306 | 1.21 8378 | 0.64 3911 | 0.23 8557 | 0.09 8956 | 0.20 4274 | 0.52 9982 | 1.02 4948 | 1.61 1695 | 2.21 0689 | 2.70 7415 | 2.93 88 | 2.73 932 | 2.09 0874 |
| Source 47 | 0 | 0 | 0 | 0 | 0 | 0.01 6253 | 0.12 9011 | 0.43 4844 | 0.98 7184 | 1.58 76 | 1.94 6614 | 1.81 5285 | 1.29 9241 | 0.68 6635 | 0.25 585 | 0.13 1429 | 0.32 7091 | 0.84 8323 | 1.56 7513 | 2.22 4027 | 2.55 506 | 2.46 4566 | 2.08 7879 | 1.57 7111 | 1.05 6343 |
| Source 48 | 0 | 0 | 0 | 0 | 0 | 0.02 2057 | 0.17 639 | 0.59 5248 | 1.35 1845 | 2.17 4399 | 2.66 6278 | 2.48 6564 | 1.78 0897 | 0.94 5412 | 0.36 0494 | 0.16 3923 | 0.31 8712 | 0.77 8983 | 1.38 3174 | 1.85 3992 | 1.91 4123 | 1.51 1827 | 0.90 833 | 0.38 6991 | 0.11 176 |
| Source 49 | 0 | 0 | 0 | 0 | 0 | 0.01 043 | 0.08 3496 | 0.28 1802 | 0.65 028 | 1.13 0599 | 1.62 7046 | 2.04 4326 | 2.29 172 | 2.28 0813 | 1.93 7545 | 1.38 3006 | 0.87 8798 | 0.67 9756 | 0.81 236 | 1.07 4702 | 1.25 7323 | 1.25 5967 | 1.11 2456 | 0.87 9309 | 0.60 8183 |
| Source 50 | 0 | 0 | 0 | 0 | 0 | 0.01 5681 | 0.12 4978 | 0.42 1548 | 0.95 7203 | 1.53 9535 | 1.88 7747 | 1.76 2955 | 1.29 2184 | 0.79 0844 | 0.55 938 | 0.67 3655 | 1.04 7689 | 1.58 9037 | 2.13 8626 | 2.47 0827 | 2.36 1764 | 1.79 8213 | 1.05 9264 | 0.44 4481 | 0.12 3304 |
| Source 51 | 0 | 0 | 0 | 0 | 0 | 0 | 0.03 3023 | 0.26 2463 | 0.88 4923 | 2.00 9102 | 3.23 1216 | 3.96 1956 | 3.69 4686 | 2.64 4369 | 1.39 7552 | 0.51 1827 | 0.11 0549 | 0.00 4097 | 0.00 0048 | 0.00 1111 | 0.00 5094 | 0.01 3918 | 0.02 632 | 0.03 6799 | 0.03 9465 |
| Source 52 | 0 | 0 | 0 | 0 | 0 | 0 | 0.02 3504 | 0.18 8044 | 0.63 4634 | 1.44 7235 | 2.37 6616 | 3.05 2908 | 3.15 0634 | 2.73 2324 | 2.06 0241 | 1.38 8339 | 0.83 4722 | 0.41 9715 | 0.16 0282 | 0.04 7143 | 0.04 4691 | 0.11 6152 | 0.21 9802 | 0.30 7088 | 0.32 9314 |
| Source 53 | 0 | 0 | 0 | 0 | 0 | 0 | 0 | 0 | 0 | 0.00 7414 | 0.07 2928 | 0.26 2906 | 0.63 7117 | 1.19 7628 | 1.91 6841 | 2.75 5231 | 3.51 4797 | 3.88 3317 | 3.56 1955 | 2.61 7093 | 1.48 0325 | 0.59 3724 | 0.15 3006 | 0.01 2051 | 0 |
| Source 54 | 0 | 0 | 0 | 0 | 0 | 0 | 0 | 0 | 0 | 0.00 5637 | 0.05 5488 | 0.20 005 | 0.48 3667 | 0.89 695 | 1.40 2833 | 1.95 7805 | 2.43 3247 | 2.63 9299 | 2.39 7238 | 1.81 6953 | 1.29 6977 | 1.24 0553 | 1.70 002 | 2.24 0664 | 2.39 4077 |
| Source 55 | 0 | 0 | 0 | 0 | 0 | 0 | 0 | 0 | 0 | 0.00 3034 | 0.02 9856 | 0.10 7634 | 0.25 8329 | 0.45 8494 | 0.66 1247 | 0.82 6035 | 1.00 0204 | 1.29 4439 | 1.81 3982 | 2.50 695 | 3.16 4213 | 3.57 2113 | 3.61 8037 | 3.32 9662 | 2.74 5395 |
| Source 56 | 0 | 0 | 0 | 0 | 0 | 0 | 0.01 5199 | 0.12 091 | 0.40 7702 | 0.92 5664 | 1.48 8762 | 1.82 5448 | 1.70 2306 | 1.21 8378 | 0.64 3911 | 0.23 8557 | 0.09 8956 | 0.20 4274 | 0.52 9982 | 1.02 4948 | 1.61 1695 | 2.21 0689 | 2.70 7415 | 2.93 88 | 2.73 932 |
| Source 57 | 0 | 0 | 0 | 0 | 0 | 0 | 0.01 6253 | 0.12 9011 | 0.43 4844 | 0.98 7184 | 1.58 76 | 1.94 6614 | 1.81 5285 | 1.29 9241 | 0.68 6635 | 0.25 585 | 0.13 1429 | 0.32 7091 | 0.84 8323 | 1.56 7513 | 2.22 4027 | 2.55 506 | 2.46 4566 | 2.08 7879 | 1.57 7111 |
| Source 58 | 0 | 0 | 0 | 0 | 0 | 0 | 0.02 2057 | 0.17 639 | 0.59 5248 | 1.35 1845 | 2.17 4399 | 2.66 6278 | 2.48 6564 | 1.78 0897 | 0.94 5412 | 0.36 0494 | 0.16 3923 | 0.31 8712 | 0.77 8983 | 1.38 3174 | 1.85 3992 | 1.91 4123 | 1.51 1827 | 0.90 833 | 0.38 6991 |
| Source 59 | 0 | 0 | 0 | 0 | 0 | 0 | 0.01 043 | 0.08 3496 | 0.28 1802 | 0.65 028 | 1.13 0599 | 1.62 7046 | 2.04 4326 | 2.29 172 | 2.28 0813 | 1.93 7545 | 1.38 3006 | 0.87 8798 | 0.67 9756 | 0.81 236 | 1.07 4702 | 1.25 7323 | 1.25 5967 | 1.11 2456 | 0.87 9309 |
| Source 60 | 0 | 0 | 0 | 0 | 0 | 0 | 0.01 5681 | 0.12 4978 | 0.42 1548 | 0.95 7203 | 1.53 9535 | 1.88 7747 | 1.76 2955 | 1.29 2184 | 0.79 0844 | 0.55 938 | 0.67 3655 | 1.04 7689 | 1.58 9037 | 2.13 8626 | 2.47 0827 | 2.36 1764 | 1.79 8213 | 1.05 9264 | 0.44 4481 |

EP 2 482 106 B1

Source 61   0 0 0 0 0 0   0 0.03 0.26 0.88 2.00 3.23 3.96 3.69 2.64 1.39 0.51 0.11 0.00 0.00 0.00 0.00 0.01 0.02 0.03
            3023 2463 4923 9102 1216 1956 4686 4369 7552 1827 0549 4097 0048 1111 5094 3918 632 6799

Source 62   0 0 0 0 0 0   0 0.02 0.18 0.63 1.44 2.37 3.05 3.15 2.73 2.06 1.38 0.83 0.41 0.16 0.04 0.04 0.11 0.21 0.30
            3504 8044 4634 7235 6616 2908 0634 2324 0241 8339 4722 9715 0282 7143 4691 6152 9802 7088

Source 63   0 0 0 0 0 0   0 0 0   0 0.00 0.07 0.26 0.63 1.19 1.91 2.75 3.51 3.88 3.56 2.61 1.48 0.59 0.15 0.01
            7414 2928 2906 7117 7628 6841 5231 4797 3317 1955 7093 0325 3724 3006 2051

Source 64   0 0 0 0 0 0   0 0 0   0 0.00 0.05 0.20 0.48 0.89 1.40 1.95 2.43 2.63 2.39 1.81 1.29 1.24 1.70 2.24
            5637 5488 005 3667 695 2833 7805 3247 9299 7238 6953 6977 0553 002 0664

Source 65   0 0 0 0 0 0   0 0 0   0 0.00 0.02 0.10 0.25 0.45 0.66 0.82 1.00 1.29 1.81 2.50 3.16 3.57 3.61 3.32
            3034 9856 7634 8329 8494 1247 6035 0204 4439 3982 695 4213 2113 8037 9662

Source 66   0 0 0 0 0 0   0 0.01 0.12 0.40 0.92 1.48 1.82 1.70 1.21 0.64 0.23 0.09 0.20 0.52 1.02 1.61 2.21 2.70 2.93
            5199 091 7702 5664 8762 5448 2306 8378 3911 8557 8956 4274 9982 4948 1695 0689 7415 88

Source 67   0 0 0 0 0 0   0 0.01 0.12 0.43 0.98 1.58 1.94 1.81 1.29 0.68 0.25 0.13 0.32 0.84 1.56 2.22 2.55 2.46 2.08
            6253 9011 4844 7184 76 6614 5285 9241 6635 585 1429 7091 8323 7513 4027 506 4566 7879

Source 68   0 0 0 0 0 0   0 0.02 0.17 0.59 1.35 2.17 2.66 2.48 1.78 0.94 0.36 0.16 0.31 0.77 1.38 1.85 1.91 1.51 0.90
            2057 639 5248 1845 4399 6278 6564 0897 5412 0494 3923 8712 8983 3174 3992 4123 1827 833

Source 69   0 0 0 0 0 0   0 0.01 0.08 0.28 0.65 1.13 1.62 2.04 2.29 2.28 1.93 1.38 0.87 0.67 0.81 1.07 1.25 1.25 1.11
            043 3496 1802 028 0599 7046 4326 172 0813 7545 3006 8798 9756 236 4702 7323 5967 2456

Source 70   0 0 0 0 0 0   0 0.01 0.12 0.42 0.95 1.53 1.88 1.76 1.29 0.79 0.55 0.67 1.04 1.58 2.13 2.47 2.36 1.79 1.05
            5681 4978 1548 7203 9535 7747 2955 2184 0844 938 3655 7689 9037 8626 0827 1764 8213 9264

Source 71   0 0 0 0 0 0   0 0 0.03 0.26 0.88 2.00 3.23 3.96 3.69 2.64 1.39 0.51 0.11 0.00 0.00 0.00 0.00 0.01 0.02
            3023 2463 4923 9102 1216 1956 4686 4369 7552 1827 0549 4097 0048 1111 5094 3918 632

Source 72   0 0 0 0 0 0   0 0 0.02 0.18 0.63 1.44 2.37 3.05 3.15 2.73 2.06 1.38 0.83 0.41 0.16 0.04 0.04 0.11 0.21
            3504 8044 4634 7235 6616 2908 0634 2324 0241 8339 4722 9715 0282 7143 4691 6152 9802

Source 73   0 0 0 0 0 0   0 0 0 0   0 0.00 0.07 0.26 0.63 1.19 1.91 2.75 3.51 3.88 3.56 2.61 1.48 0.59 0.15
            7414 2928 2906 7117 7628 6841 5231 4797 3317 1955 7093 0325 3724 3006

Source 74   0 0 0 0 0 0   0 0 0 0   0 0.00 0.05 0.20 0.48 0.89 1.40 1.95 2.43 2.63 2.39 1.81 1.29 1.24 1.70
            5637 5488 005 3667 695 2833 7805 3247 9299 7238 6953 6977 0553 002

Source 75   0 0 0 0 0 0   0 0 0 0   0 0.00 0.02 0.10 0.25 0.45 0.66 0.82 1.00 1.29 1.81 2.50 3.16 3.57 3.61
            3034 9856 7634 8329 8494 1247 6035 0204 4439 3982 695 4213 2113 8037

Source 76   0 0 0 0 0 0   0 0.01 0.12 0.40 0.92 1.48 1.82 1.70 1.21 0.64 0.23 0.09 0.20 0.52 1.02 1.61 2.21 2.70
            5199 091 7702 5664 8762 5448 2306 8378 3911 8557 8956 4274 9982 4948 1695 0689 7415

EP 2 482 106 B1

```
Source   0  0  0  0  0  0  0   0 0.01 0.12 0.43 0.98 1.58 1.94 1.81 1.29 0.68 0.25 0.13 0.32 0.84 1.56 2.22 2.55 2.46
77                                 6253 9011 4844 7184   76 6614 5285 9241 6635  585 1429 7091 8323 7513 4027  506 4566
Source   0  0  0  0  0  0  0   0 0.02 0.17 0.59 1.35 2.17 2.66 2.48 1.78 0.94 0.36 0.16 0.31 0.77 1.38 1.85 1.91 1.51
78                                 2057  639 5248 1845 4399 6278 6564 0897 5412 0494 3923 8712 8983 3174 3992 4123 1827
Source   0  0  0  0  0  0  0   0 0.01 0.08 0.28 0.65 1.13 1.62 2.04 2.29 2.28 1.93 1.38 0.87 0.67 0.81 1.07 1.25 1.25
79                                 043 3496 1802  028 0599 7046 4326  172 0813 7545 3006 8798 9756  236 4702 7323 5967
Source   0  0  0  0  0  0  0   0 0.01 0.12 0.42 0.95 1.53 1.88 1.76 1.29 0.79 0.55 0.67 1.04 1.58 2.13 2.47 2.36 1.79
80                                 5681 4978 1548 7203 9535 7747 2955 2184 0844  938 3655 7689 9037 8626 0827 1764 8213
Source   0  0  0  0  0  0  0  0   0 0.03 0.26 0.88 2.00 3.23 3.96 3.69 2.64 1.39 0.51 0.11 0.00 0.00 0.00 0.00 0.01
81                                 3023 2463 4923 9102 1216 1956 4686 4369 7552 1827 0549 4097 0048 1111 5094 3918
Source   0  0  0  0  0  0  0  0   0 0.02 0.18 0.63 1.44 2.37 3.05 3.15 2.73 2.06 1.38 0.83 0.41 0.16 0.04 0.04 0.11
82                                 3504 8044 4634 7235 6616 2908 0634 2324 0241 8339 4722 9715 0282 7143 4691 6152
Source   0  0  0  0  0  0  0  0   0  0  0   0 0.00 0.07 0.26 0.63 1.19 1.91 2.75 3.51 3.88 3.56 2.61 1.48 0.59
83                                 7414 2928 2906 7117 7628 6841 5231 4797 3317 1955 7093 0325 3724
Source   0  0  0  0  0  0  0  0   0  0  0   0 0.00 0.05 0.20 0.48 0.89 1.40 1.95 2.43 2.63 2.39 1.81 1.29 1.24
84                                 5637 5488  005 3667  695 2833 7805 3247 9299 7238 6953 6977 0553
Source   0  0  0  0  0  0  0  0   0  0  0   0 0.00 0.02 0.10 0.25 0.45 0.66 0.82 1.00 1.29 1.81 2.50 3.16 3.57
85                                 3034 9856 7634 8329 8494 1247 6035 0204 4439 3982  695 4213 2113
Source   0  0  0  0  0  0  0  0   0 0.01 0.12 0.40 0.92 1.48 1.82 1.70 1.21 0.64 0.23 0.09 0.20 0.52 1.02 1.61 2.21
86                                 5199  091 7702 5664 8762 5448 2306 8378 3911 8557 8956 4274 9982 4948 1695 0689
Source   0  0  0  0  0  0  0  0   0 0.01 0.12 0.43 0.98 1.58 1.94 1.81 1.29 0.68 0.25 0.13 0.32 0.84 1.56 2.22 2.55
87                                 6253 9011 4844 7184   76 6614 5285 9241 6635  585 1429 7091 8323 7513 4027  506
Source   0  0  0  0  0  0  0  0   0 0.02 0.17 0.59 1.35 2.17 2.66 2.48 1.78 0.94 0.36 0.16 0.31 0.77 1.38 1.85 1.91
88                                 2057  639 5248 1845 4399 6278 6564 0897 5412 0494 3923 8712 8983 3174 3992 4123
Source   0  0  0  0  0  0  0  0   0 0.01 0.08 0.28 0.65 1.13 1.62 2.04 2.29 2.28 1.93 1.38 0.87 0.67 0.81 1.07 1.25
89                                 043 3496 1802  028 0599 7046 4326  172 0813 7545 3006 8798 9756  236 4702 7323
Source   0  0  0  0  0  0  0  0   0 0.01 0.12 0.42 0.95 1.53 1.88 1.76 1.29 0.79 0.55 0.67 1.04 1.58 2.13 2.47 2.36
90                                 5681 4978 1548 7203 9535 7747 2955 2184 0844  938 3655 7689 9037 8626 0827 1764
Source   0  0  0  0  0  0  0  0   0  0 0.03 0.26 0.88 2.00 3.23 3.96 3.69 2.64 1.39 0.51 0.11 0.00 0.00 0.00 0.00
91                                 3023 2463 4923 9102 1216 1956 4686 4369 7552 1827 0549 4097 0048 1111 5094
Source   0  0  0  0  0  0  0  0   0  0 0.02 0.18 0.63 1.44 2.37 3.05 3.15 2.73 2.06 1.38 0.83 0.41 0.16 0.04 0.04
92                                 3504 8044 4634 7235 6616 2908 0634 2324 0241 8339 4722 9715 0282 7143 4691
```

Source
93    0   0   0   0   0   0   0   0   0   0   0   0   0  0.00 0.07 0.26 0.63 1.19 1.91 2.75 3.51 3.88 3.56 2.61 1.48
                                                           7414 2928 2906 7117 7628 6841 5231 4797 3317 1955 7093 0325
Source
94    0   0   0   0   0   0   0   0   0   0   0   0   0  0.00 0.05 0.20 0.48 0.89 1.40 1.95 2.43 2.63 2.39 1.81 1.29
                                                           5637 5488 005 3667 695 2833 7805 3247 9299 7238 6953 6977
Source
95    0   0   0   0   0   0   0   0   0   0   0   0   0  0.00 0.02 0.10 0.25 0.45 0.66 0.82 1.00 1.29 1.81 2.50 3.16
                                                           3034 9856 7634 8329 8494 1247 6035 0204 4439 3982 695 4213
Source
96    0   0   0   0   0   0   0   0   0   0  0.01 0.12 0.40 0.92 1.48 1.82 1.70 1.21 0.64 0.23 0.09 0.20 0.52 1.02 1.61
                                                      5199 091 7702 5664 8762 5448 2306 8378 3911 8557 8956 4274 9982 4948 1695
Source
97    0   0   0   0   0   0   0   0   0   0  0.01 0.12 0.43 0.98 1.58 1.94 1.81 1.29 0.68 0.25 0.13 0.32 0.84 1.56 2.22
                                                      6253 9011 4844 7184 76 6614 5285 9241 6635 585 1429 7091 8323 7513 4027
Source
98    0   0   0   0   0   0   0   0   0   0  0.02 0.17 0.59 1.35 2.17 2.66 2.48 1.78 0.94 0.36 0.16 0.31 0.77 1.38 1.85
                                                      2057 639 5248 1845 4399 6278 6564 0897 5412 0494 3923 8712 8983 3174 3992
Source
99    0   0   0   0   0   0   0   0   0   0  0.01 0.08 0.28 0.65 1.13 1.62 2.04 2.29 2.28 1.93 1.38 0.87 0.67 0.81 1.07
                                                      043 3496 1802 028 0599 7046 4326 172 0813 7545 3006 8798 9756 236 4702
Source
100   0   0   0   0   0   0   0   0   0   0  0.01 0.12 0.42 0.95 1.53 1.88 1.76 1.29 0.79 0.55 0.67 1.04 1.58 2.13 2.47
                                                      5681 4978 1548 7203 9535 7747 2955 2184 0844 938 3655 7689 9037 8626 0827
Source
101   0   0   0   0   0   0   0   0   0   0   0  0.03 0.26 0.88 2.00 3.23 3.96 3.69 2.64 1.39 0.51 0.11 0.00 0.00 0.00
                                                         3023 2463 4923 9102 1216 1956 4686 4369 7552 1827 0549 4097 0048 1111
Source
102   0   0   0   0   0   0   0   0   0   0   0  0.02 0.18 0.63 1.44 2.37 3.05 3.15 2.73 2.06 1.38 0.83 0.41 0.16 0.04
                                                         3504 8044 4634 7235 6616 2908 0634 2324 0241 8339 4722 9715 0282 7143
Source
103   0   0   0   0   0   0   0   0   0   0   0   0   0  0.00 0.07 0.26 0.63 1.19 1.91 2.75 3.51 3.88 3.56 2.61
                                                           7414 2928 2906 7117 7628 6841 5231 4797 3317 1955 7093
Source
104   0   0   0   0   0   0   0   0   0   0   0   0   0  0.00 0.05 0.20 0.48 0.89 1.40 1.95 2.43 2.63 2.39 1.81
                                                           5637 5488 005 3667 695 2833 7805 3247 9299 7238 6953
Source
105   0   0   0   0   0   0   0   0   0   0   0   0   0  0.00 0.02 0.10 0.25 0.45 0.66 0.82 1.00 1.29 1.81 2.50
                                                           3034 9856 7634 8329 8494 1247 6035 0204 4439 3982 695
Source
106   0   0   0   0   0   0   0   0   0   0   0  0.01 0.12 0.40 0.92 1.48 1.82 1.70 1.21 0.64 0.23 0.09 0.20 0.52 1.02
                                                         5199 091 7702 5664 8762 5448 2306 8378 3911 8557 8956 4274 9982 4948
Source
107   0   0   0   0   0   0   0   0   0   0   0  0.01 0.12 0.43 0.98 1.58 1.94 1.81 1.29 0.68 0.25 0.13 0.32 0.84 1.56
                                                         6253 9011 4844 7184 76 6614 5285 9241 6635 585 1429 7091 8323 7513
Source
108   0   0   0   0   0   0   0   0   0   0   0  0.02 0.17 0.59 1.35 2.17 2.66 2.48 1.78 0.94 0.36 0.16 0.31 0.77 1.38
                                                         2057 639 5248 1845 4399 6278 6564 0897 5412 0494 3923 8712 8983 3174

| Source | | | | | | | | | | | | | | | | | | | | | | | | | |
|---|---|---|---|---|---|---|---|---|---|---|---|---|---|---|---|---|---|---|---|---|---|---|---|---|---|
| Source 109 | 0 | 0 | 0 | 0 | 0 | 0 | 0 | 0 | 0 | 0 | 0 | 0.01 043 | 0.08 3496 | 0.28 1802 | 0.65 028 | 1.13 0599 | 1.62 7046 | 2.04 4326 | 2.29 172 | 2.28 0813 | 1.93 7545 | 1.38 3006 | 0.87 8798 | 0.67 9756 | 0.81 236 |
| Source 110 | 0 | 0 | 0 | 0 | 0 | 0 | 0 | 0 | 0 | 0 | 0 | 0.01 5681 | 0.12 4978 | 0.42 1548 | 0.95 7203 | 1.53 9535 | 1.88 7747 | 1.76 2955 | 1.29 2184 | 0.79 0844 | 0.55 938 | 0.67 3655 | 1.04 7689 | 1.58 9037 | 2.13 8626 |
| Source 111 | 0 | 0 | 0 | 0 | 0 | 0 | 0 | 0 | 0 | 0 | 0 | 0 | 0.03 3023 | 0.26 2463 | 0.88 4923 | 2.00 9102 | 3.23 1216 | 3.96 1956 | 3.69 4686 | 2.64 4369 | 1.39 7552 | 0.51 1827 | 0.11 0549 | 0.00 4097 | 0.00 0048 |
| Source 112 | 0 | 0 | 0 | 0 | 0 | 0 | 0 | 0 | 0 | 0 | 0 | 0 | 0.02 3504 | 0.18 8044 | 0.63 4634 | 1.44 7235 | 2.37 6616 | 3.05 2908 | 3.15 0634 | 2.73 2324 | 2.06 0241 | 1.38 8339 | 0.83 4722 | 0.41 9715 | 0.16 0282 |
| Source 113 | 0 | 0 | 0 | 0 | 0 | 0 | 0 | 0 | 0 | 0 | 0 | 0 | 0 | 0 | 0.00 7414 | 0.07 2928 | 0.26 2906 | 0.63 7117 | 1.19 7628 | 1.91 6841 | 2.75 5231 | 3.51 4797 | 3.88 3317 | 3.56 1955 | |
| Source 114 | 0 | 0 | 0 | 0 | 0 | 0 | 0 | 0 | 0 | 0 | 0 | 0 | 0 | 0 | 0.00 5637 | 0.05 5488 | 0.20 005 | 0.48 3667 | 0.89 695 | 1.40 2833 | 1.95 7805 | 2.43 3247 | 2.63 9299 | 2.39 7238 | |
| Source 115 | 0 | 0 | 0 | 0 | 0 | 0 | 0 | 0 | 0 | 0 | 0 | 0 | 0 | 0 | 0.00 3034 | 0.02 9856 | 0.10 7634 | 0.25 8329 | 0.45 8494 | 0.66 1247 | 0.82 6035 | 1.00 0204 | 1.29 4439 | 1.81 3982 | |
| Source 116 | 0 | 0 | 0 | 0 | 0 | 0 | 0 | 0 | 0 | 0 | 0 | 0.01 5199 | 0.12 091 | 0.40 7702 | 0.92 5664 | 1.48 8762 | 1.82 5448 | 1.70 2306 | 1.21 8378 | 0.64 3911 | 0.23 8557 | 0.09 8956 | 0.20 4274 | 0.52 9982 | |
| Source 117 | 0 | 0 | 0 | 0 | 0 | 0 | 0 | 0 | 0 | 0 | 0 | 0.01 6253 | 0.12 9011 | 0.43 4844 | 0.98 7184 | 1.58 76 | 1.94 6614 | 1.81 5285 | 1.29 9241 | 0.68 6635 | 0.25 585 | 0.13 1429 | 0.32 7091 | 0.84 8323 | |
| Source 118 | 0 | 0 | 0 | 0 | 0 | 0 | 0 | 0 | 0 | 0 | 0 | 0.02 2057 | 0.17 639 | 0.59 5248 | 1.35 1845 | 2.17 4399 | 2.66 6278 | 2.48 6564 | 1.78 0897 | 0.94 5412 | 0.36 0494 | 0.16 3923 | 0.31 8712 | 0.77 8983 | |
| Source 119 | 0 | 0 | 0 | 0 | 0 | 0 | 0 | 0 | 0 | 0 | 0 | 0.01 043 | 0.08 3496 | 0.28 1802 | 0.65 028 | 1.13 0599 | 1.62 7046 | 2.04 4326 | 2.29 172 | 2.28 0813 | 1.93 7545 | 1.38 3006 | 0.87 8798 | 0.67 9756 | |
| Source 120 | 0 | 0 | 0 | 0 | 0 | 0 | 0 | 0 | 0 | 0 | 0 | 0.01 5681 | 0.12 4978 | 0.42 1548 | 0.95 7203 | 1.53 9535 | 1.88 7747 | 1.76 2955 | 1.29 2184 | 0.79 0844 | 0.55 938 | 0.67 3655 | 1.04 7689 | 1.58 9037 | |
| Source 121 | 0 | 0 | 0 | 0 | 0 | 0 | 0 | 0 | 0 | 0 | 0 | 0 | 0.03 3023 | 0.26 2463 | 0.88 4923 | 2.00 9102 | 3.23 1216 | 3.96 1956 | 3.69 4686 | 2.64 4369 | 1.39 7552 | 0.51 1827 | 0.11 0549 | 0.00 4097 | |
| Source 122 | 0 | 0 | 0 | 0 | 0 | 0 | 0 | 0 | 0 | 0 | 0 | 0 | 0.02 3504 | 0.18 8044 | 0.63 4634 | 1.44 7235 | 2.37 6616 | 3.05 2908 | 3.15 0634 | 2.73 2324 | 2.06 0241 | 1.38 8339 | 0.83 4722 | 0.41 9715 | |
| Source 123 | 0 | 0 | 0 | 0 | 0 | 0 | 0 | 0 | 0 | 0 | 0 | 0 | 0 | 0 | 0.00 7414 | 0.07 2928 | 0.26 2906 | 0.63 7117 | 1.19 7628 | 1.91 6841 | 2.75 5231 | 3.51 4797 | 3.88 3317 | | |
| Source 124 | 0 | 0 | 0 | 0 | 0 | 0 | 0 | 0 | 0 | 0 | 0 | 0 | 0 | 0 | 0.00 5637 | 0.05 5488 | 0.20 005 | 0.48 3667 | 0.89 695 | 1.40 2833 | 1.95 7805 | 2.43 3247 | 2.63 9299 | | |

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|---|---|---|---|---|---|---|
| Source 125 | 0 | 0 | 0 | 0 | 0 | 0 | 0 | 0 | 0 | 0 | 0 | 0 | 0 | 0 | 0 | 0 | 0.003034 | 0.029856 | 0.107634 | 0.258329 | 0.458494 | 0.661247 | 0.826035 | 1.000204 | 1.294439 |
| Source 126 | 0 | 0 | 0 | 0 | 0 | 0 | 0 | 0 | 0 | 0 | 0 | 0 | 0 | 0.015199 | 0.12091 | 0.407702 | 0.925664 | 1.488762 | 1.825448 | 1.702306 | 1.218378 | 0.643911 | 0.238557 | 0.098956 | 0.204274 |
| Source 127 | 0 | 0 | 0 | 0 | 0 | 0 | 0 | 0 | 0 | 0 | 0 | 0 | 0 | 0.016253 | 0.129011 | 0.434844 | 0.987184 | 1.5876 | 1.946614 | 1.815285 | 1.299241 | 0.686635 | 0.25585 | 0.131429 | 0.327091 |
| Source 128 | 0 | 0 | 0 | 0 | 0 | 0 | 0 | 0 | 0 | 0 | 0 | 0 | 0 | 0.022057 | 0.17639 | 0.595248 | 1.351845 | 2.174399 | 2.666278 | 2.486564 | 1.780897 | 0.945412 | 0.360494 | 0.163923 | 0.318712 |
| Source 129 | 0 | 0 | 0 | 0 | 0 | 0 | 0 | 0 | 0 | 0 | 0 | 0 | 0 | 0.01043 | 0.083496 | 0.281802 | 0.65028 | 1.130599 | 1.627046 | 2.044326 | 2.29172 | 2.280813 | 1.937545 | 1.383006 | 0.878798 |
| Source 130 | 0 | 0 | 0 | 0 | 0 | 0 | 0 | 0 | 0 | 0 | 0 | 0 | 0 | 0.015681 | 0.124978 | 0.421548 | 0.957203 | 1.539535 | 1.887747 | 1.762955 | 1.292184 | 0.790844 | 0.55938 | 0.673655 | 1.047689 |
| Source 131 | 0 | 0 | 0 | 0 | 0 | 0 | 0 | 0 | 0 | 0 | 0 | 0 | 0 | 0 | 0.033023 | 0.262463 | 0.884923 | 2.009102 | 3.231216 | 3.961956 | 3.694686 | 2.644369 | 1.397552 | 0.511827 | 0.110549 |
| Source 132 | 0 | 0 | 0 | 0 | 0 | 0 | 0 | 0 | 0 | 0 | 0 | 0 | 0 | 0 | 0.023504 | 0.188044 | 0.634634 | 1.447235 | 2.376616 | 3.052908 | 3.150634 | 2.732324 | 2.060241 | 1.388339 | 0.834722 |
| Source 133 | 0 | 0 | 0 | 0 | 0 | 0 | 0 | 0 | 0 | 0 | 0 | 0 | 0 | 0 | 0 | 0 | 0 | 0.007414 | 0.072928 | 0.262906 | 0.637117 | 1.197628 | 1.916841 | 2.755231 | 3.514797 |
| Source 134 | 0 | 0 | 0 | 0 | 0 | 0 | 0 | 0 | 0 | 0 | 0 | 0 | 0 | 0 | 0 | 0 | 0 | 0.005637 | 0.055488 | 0.20005 | 0.483667 | 0.89695 | 1.402833 | 1.957805 | 2.433247 |
| Source 135 | 0 | 0 | 0 | 0 | 0 | 0 | 0 | 0 | 0 | 0 | 0 | 0 | 0 | 0 | 0 | 0 | 0 | 0.003034 | 0.029856 | 0.107634 | 0.258329 | 0.458494 | 0.661247 | 0.826035 | 1.000204 |
| Source 136 | 0 | 0 | 0 | 0 | 0 | 0 | 0 | 0 | 0 | 0 | 0 | 0 | 0 | 0 | 0.015199 | 0.12091 | 0.407702 | 0.925664 | 1.488762 | 1.825448 | 1.702306 | 1.218378 | 0.643911 | 0.238557 | 0.098956 |
| Source 137 | 0 | 0 | 0 | 0 | 0 | 0 | 0 | 0 | 0 | 0 | 0 | 0 | 0 | 0 | 0.016253 | 0.129011 | 0.434844 | 0.987184 | 1.5876 | 1.946614 | 1.815285 | 1.299241 | 0.686635 | 0.25585 | 0.131429 |
| Source 138 | 0 | 0 | 0 | 0 | 0 | 0 | 0 | 0 | 0 | 0 | 0 | 0 | 0 | 0 | 0.022057 | 0.17639 | 0.595248 | 1.351845 | 2.174399 | 2.666278 | 2.486564 | 1.780897 | 0.945412 | 0.360494 | 0.163923 |
| Source 139 | 0 | 0 | 0 | 0 | 0 | 0 | 0 | 0 | 0 | 0 | 0 | 0 | 0 | 0 | 0.01043 | 0.083496 | 0.281802 | 0.65028 | 1.130599 | 1.627046 | 2.044326 | 2.29172 | 2.280813 | 1.937545 | 1.383006 |
| Source 140 | 0 | 0 | 0 | 0 | 0 | 0 | 0 | 0 | 0 | 0 | 0 | 0 | 0 | 0 | 0.015681 | 0.124978 | 0.421548 | 0.957203 | 1.539535 | 1.887747 | 1.762955 | 1.292184 | 0.790844 | 0.55938 | 0.673655 |

Source 141: 0 0 0 0 0 0 0 0 0 0 0 0 0 0 0 0.03 0.26 0.88 2.00 3.23 3.96 3.69 2.64 1.39 0.51  
3023 2463 4923 9102 1216 1956 4686 4369 7552 1827

Source 142: 0 0 0 0 0 0 0 0 0 0 0 0 0 0 0 0.02 0.18 0.63 1.44 2.37 3.05 3.15 2.73 2.06 1.38  
3504 8044 4634 7235 6616 2908 0634 2324 0241 8339

Source 143: 0 0 0 0 0 0 0 0 0 0 0 0 0 0 0 0 0 0 0.00 0.07 0.26 0.63 1.19 1.91 2.75  
7414 2928 2906 7117 7628 6841 5231

Source 144: 0 0 0 0 0 0 0 0 0 0 0 0 0 0 0 0 0 0 0.00 0.05 0.20 0.48 0.89 1.40 1.95  
5637 5488 005 3667 695 2833 7805

Source 145: 0 0 0 0 0 0 0 0 0 0 0 0 0 0 0 0 0 0 0.00 0.02 0.10 0.25 0.45 0.66 0.82  
3034 9856 7634 8329 8494 1247 6035

Source 146: 0 0 0 0 0 0 0 0 0 0 0 0 0 0 0 0.01 0.12 0.40 0.92 1.48 1.82 1.70 1.21 0.64 0.23  
5199 091 7702 5664 8762 5448 2306 8378 3911 8557

Source 147: 0 0 0 0 0 0 0 0 0 0 0 0 0 0 0 0.01 0.12 0.43 0.98 1.58 1.94 1.81 1.29 0.68 0.25  
6253 9011 4844 7184 76 6614 5285 9241 6635 585

Source 148: 0 0 0 0 0 0 0 0 0 0 0 0 0 0 0 0.02 0.17 0.59 1.35 2.17 2.66 2.48 1.78 0.94 0.36  
2057 639 5248 1845 4399 6278 6564 0897 5412 0494

Source 149: 0 0 0 0 0 0 0 0 0 0 0 0 0 0 0 0.01 0.08 0.28 0.65 1.13 1.62 2.04 2.29 2.28 1.93  
043 3496 1802 028 0599 7046 4326 172 0813 7545

Source 150: 0 0 0 0 0 0 0 0 0 0 0 0 0 0 0 0.01 0.12 0.42 0.95 1.53 1.88 1.76 1.29 0.79 0.55  
5681 4978 1548 7203 9535 7747 2955 2184 0844 938

| offset launch [µm] | 25 | 26 | 27 | 28 | 29 | 30 | 31 | 32 | 33 | 34 | 35 | 36 | 37 | 38 | 39 | 40 |
|---|---|---|---|---|---|---|---|---|---|---|---|---|---|---|---|---|
| Source 1 | 0 | 0 | 0 | 0 | 0 | 0 | 0 | 0 | 0 | 0 | 0 | 0 | 0 | 0 | 0 | 0 |
| Source 2 | 0 | 0 | 0 | 0 | 0 | 0 | 0 | 0 | 0 | 0 | 0 | 0 | 0 | 0 | 0 | 0 |
| Source 3 | 0 | 0 | 0 | 0 | 0 | 0 | 0 | 0 | 0 | 0 | 0 | 0 | 0 | 0 | 0 | 0 |
| Source 4 | 0 | 0 | 0 | 0 | 0 | 0 | 0 | 0 | 0 | 0 | 0 | 0 | 0 | 0 | 0 | 0 |
| Source 5 | 0 | 0 | 0 | 0 | 0 | 0 | 0 | 0 | 0 | 0 | 0 | 0 | 0 | 0 | 0 | 0 |
| Source 6 | 0 | 0 | 0 | 0 | 0 | 0 | 0 | 0 | 0 | 0 | 0 | 0 | 0 | 0 | 0 | 0 |

| | | | | | | | | | | | | | | | | |
|---|---|---|---|---|---|---|---|---|---|---|---|---|---|---|---|---|
| Source 7 | 0 | 0 | 0 | 0 | 0 | 0 | 0 | 0 | 0 | 0 | 0 | 0 | 0 | 0 | 0 | 0 |
| Source 8 | 0 | 0 | 0 | 0 | 0 | 0 | 0 | 0 | 0 | 0 | 0 | 0 | 0 | 0 | 0 | 0 |
| Source 9 | 0 | 0 | 0 | 0 | 0 | 0 | 0 | 0 | 0 | 0 | 0 | 0 | 0 | 0 | 0 | 0 |
| Source 10 | 0 | 0 | 0 | 0 | 0 | 0 | 0 | 0 | 0 | 0 | 0 | 0 | 0 | 0 | 0 | 0 |
| Source 11 | 0.000282 | 0 | 0 | 0 | 0 | 0 | 0 | 0 | 0 | 0 | 0 | 0 | 0 | 0 | 0 | 0 |
| Source 12 | 0.002679 | 0 | 0 | 0 | 0 | 0 | 0 | 0 | 0 | 0 | 0 | 0 | 0 | 0 | 0 | 0 |
| Source 13 | 0 | 0 | 0 | 0 | 0 | 0 | 0 | 0 | 0 | 0 | 0 | 0 | 0 | 0 | 0 | 0 |
| Source 14 | 0.019738 | 0 | 0 | 0 | 0 | 0 | 0 | 0 | 0 | 0 | 0 | 0 | 0 | 0 | 0 | 0 |
| Source 15 | 0.018328 | 0 | 0 | 0 | 0 | 0 | 0 | 0 | 0 | 0 | 0 | 0 | 0 | 0 | 0 | 0 |
| Source 16 | 0.020443 | 0 | 0 | 0 | 0 | 0 | 0 | 0 | 0 | 0 | 0 | 0 | 0 | 0 | 0 | 0 |
| Source 17 | 0.009446 | 0 | 0 | 0 | 0 | 0 | 0 | 0 | 0 | 0 | 0 | 0 | 0 | 0 | 0 | 0 |
| Source 18 | 0 | 0 | 0 | 0 | 0 | 0 | 0 | 0 | 0 | 0 | 0 | 0 | 0 | 0 | 0 | 0 |
| Source 19 | 0.005639 | 0 | 0 | 0 | 0 | 0 | 0 | 0 | 0 | 0 | 0 | 0 | 0 | 0 | 0 | 0 |
| Source 20 | 0 | 0 | 0 | 0 | 0 | 0 | 0 | 0 | 0 | 0 | 0 | 0 | 0 | 0 | 0 | 0 |
| Source 21 | 0.002612 | 0.000282 | 0 | 0 | 0 | 0 | 0 | 0 | 0 | 0 | 0 | 0 | 0 | 0 | 0 | 0 |
| Source 22 | 0.021793 | 0.002679 | 0 | 0 | 0 | 0 | 0 | 0 | 0 | 0 | 0 | 0 | 0 | 0 | 0 | 0 |
| Source 23 | 0 | 0 | 0 | 0 | 0 | 0 | 0 | 0 | 0 | 0 | 0 | 0 | 0 | 0 | 0 | 0 |
| Source | 0.15 | 0.01 | 0 | 0 | 0 | 0 | 0 | 0 | 0 | 0 | 0 | 0 | 0 | 0 | 0 | 0 |

| | | | | | | | | | | | | | | | | |
|---|---|---|---|---|---|---|---|---|---|---|---|---|---|---|---|---|
| 24 | 8314 | 9738 | | | | | | | | | | | | | | |
| Source 25 | 0.14 6517 | 0.01 8328 | 0 | 0 | 0 | 0 | 0 | 0 | 0 | 0 | 0 | 0 | 0 | 0 | 0 | 0 |
| Source 26 | 0.16 3627 | 0.02 0443 | 0 | 0 | 0 | 0 | 0 | 0 | 0 | 0 | 0 | 0 | 0 | 0 | 0 | 0 |
| Source 27 | 0.07 6096 | 0.00 9446 | 0 | 0 | 0 | 0 | 0 | 0 | 0 | 0 | 0 | 0 | 0 | 0 | 0 | 0 |
| Source 28 | 0.00 054 | 0 | 0 | 0 | 0 | 0 | 0 | 0 | 0 | 0 | 0 | 0 | 0 | 0 | 0 | 0 |
| Source 29 | 0.04 4757 | 0.00 5639 | 0 | 0 | 0 | 0 | 0 | 0 | 0 | 0 | 0 | 0 | 0 | 0 | 0 | 0 |
| Source 30 | 0 | 0 | 0 | 0 | 0 | 0 | 0 | 0 | 0 | 0 | 0 | 0 | 0 | 0 | 0 | 0 |
| Source 31 | 0.00 8832 | 0.00 2612 | 0.00 0282 | 0 | 0 | 0 | 0 | 0 | 0 | 0 | 0 | 0 | 0 | 0 | 0 | 0 |
| Source 32 | 0.07 3514 | 0.02 1793 | 0.00 2679 | 0 | 0 | 0 | 0 | 0 | 0 | 0 | 0 | 0 | 0 | 0 | 0 | 0 |
| Source 33 | 0 | 0 | 0 | 0 | 0 | 0 | 0 | 0 | 0 | 0 | 0 | 0 | 0 | 0 | 0 | 0 |
| Source 34 | 0.53 4474 | 0.15 8314 | 0.01 9738 | 0 | 0 | 0 | 0 | 0 | 0 | 0 | 0 | 0 | 0 | 0 | 0 | 0 |
| Source 35 | 0.49 4404 | 0.14 6517 | 0.01 8328 | 0 | 0 | 0 | 0 | 0 | 0 | 0 | 0 | 0 | 0 | 0 | 0 | 0 |
| Source 36 | 0.55 214 | 0.16 3627 | 0.02 0443 | 0 | 0 | 0 | 0 | 0 | 0 | 0 | 0 | 0 | 0 | 0 | 0 | 0 |
| Source 37 | 0.25 6718 | 0.07 6096 | 0.00 9446 | 0 | 0 | 0 | 0 | 0 | 0 | 0 | 0 | 0 | 0 | 0 | 0 | 0 |
| Source 38 | 0.00 1818 | 0.00 054 | 0 | 0 | 0 | 0 | 0 | 0 | 0 | 0 | 0 | 0 | 0 | 0 | 0 | 0 |
| Source 39 | 0.15 112 | 0.04 4757 | 0.00 5639 | 0 | 0 | 0 | 0 | 0 | 0 | 0 | 0 | 0 | 0 | 0 | 0 | 0 |
| Source | 0 | 0 | 0 | 0 | 0 | 0 | 0 | 0 | 0 | 0 | 0 | 0 | 0 | 0 | 0 | 0 |

40

| | | | | | | | | | | | | | | | | | |
|---|---|---|---|---|---|---|---|---|---|---|---|---|---|---|---|---|---|
| Source 41 | 0.019992 | 0.008832 | 0.002612 | 0.000282 | | 0 | 0 | 0 | 0 | 0 | 0 | 0 | 0 | 0 | 0 | 0 | 0 |
| Source 42 | 0.16697 | 0.073514 | 0.021793 | 0.002679 | | 0 | 0 | 0 | 0 | 0 | 0 | 0 | 0 | 0 | 0 | 0 | 0 |
| Source 43 | 0 | 0 | 0 | 0 | | 0 | 0 | 0 | 0 | 0 | 0 | 0 | 0 | 0 | 0 | 0 | 0 |
| Source 44 | 1.213833 | 0.534474 | 0.158314 | 0.019738 | | 0 | 0 | 0 | 0 | 0 | 0 | 0 | 0 | 0 | 0 | 0 | 0 |
| Source 45 | 1.137762 | 0.494404 | 0.146517 | 0.018328 | | 0 | 0 | 0 | 0 | 0 | 0 | 0 | 0 | 0 | 0 | 0 | 0 |
| Source 46 | 1.261564 | 0.55214 | 0.163627 | 0.020443 | | 0 | 0 | 0 | 0 | 0 | 0 | 0 | 0 | 0 | 0 | 0 | 0 |
| Source 47 | 0.595102 | 0.256718 | 0.076096 | 0.009446 | | 0 | 0 | 0 | 0 | 0 | 0 | 0 | 0 | 0 | 0 | 0 | 0 |
| Source 48 | 0.014829 | 0.001818 | 0.00054 | 0 | | 0 | 0 | 0 | 0 | 0 | 0 | 0 | 0 | 0 | 0 | 0 | 0 |
| Source 49 | 0.348921 | 0.15112 | 0.044757 | 0.005639 | | 0 | 0 | 0 | 0 | 0 | 0 | 0 | 0 | 0 | 0 | 0 | 0 |
| Source 50 | 0.012552 | 0 | 0 | 0 | | 0 | 0 | 0 | 0 | 0 | 0 | 0 | 0 | 0 | 0 | 0 | 0 |
| Source 51 | 0.032152 | 0.019992 | 0.008832 | 0.002612 | 0.000282 | 0 | 0 | 0 | 0 | 0 | 0 | 0 | 0 | 0 | 0 | 0 | 0 |
| Source 52 | 0.268541 | 0.16697 | 0.073514 | 0.021793 | 0.002679 | 0 | 0 | 0 | 0 | 0 | 0 | 0 | 0 | 0 | 0 | 0 | 0 |
| Source 53 | 0 | 0 | 0 | 0 | 0 | 0 | 0 | 0 | 0 | 0 | 0 | 0 | 0 | 0 | 0 | 0 | 0 |
| Source 54 | 1.952429 | 1.213833 | 0.534474 | 0.158314 | 0.019738 | 0 | 0 | 0 | 0 | 0 | 0 | 0 | 0 | 0 | 0 | 0 | 0 |
| Source 55 | 1.953241 | 1.137762 | 0.494404 | 0.146517 | 0.018328 | 0 | 0 | 0 | 0 | 0 | 0 | 0 | 0 | 0 | 0 | 0 | 0 |
| Source | 2.09 | 1.26 | 0.55 | 0.16 | 0.02 | 0 | 0 | 0 | 0 | 0 | 0 | 0 | 0 | 0 | 0 | 0 | 0 |

| | | | | | | | | | | | | | | | | |
|---|---|---|---|---|---|---|---|---|---|---|---|---|---|---|---|---|
| 56 | 0874 | 1564 | 214 | 3627 | 0443 | | | | | | | | | | | |
| Source 57 | 1.05 6343 | 0.59 5102 | 0.25 6718 | 0.07 6096 | 0.00 9446 | 0 | 0 | 0 | 0 | 0 | 0 | 0 | 0 | 0 | 0 | 0 |
| Source 58 | 0.11 176 | 0.01 4829 | 0.00 1818 | 0.00 054 | 0 | 0 | 0 | 0 | 0 | 0 | 0 | 0 | 0 | 0 | 0 | 0 |
| Source 59 | 0.60 8183 | 0.34 8921 | 0.15 112 | 0.04 4757 | 0.00 5639 | 0 | 0 | 0 | 0 | 0 | 0 | 0 | 0 | 0 | 0 | 0 |
| Source 60 | 0.12 3304 | 0.01 2552 | 0 | 0 | 0 | 0 | 0 | 0 | 0 | 0 | 0 | 0 | 0 | 0 | 0 | 0 |
| Source 61 | 0.03 9465 | 0.03 2152 | 0.01 9992 | 0.00 8832 | 0.00 2612 | 0.00 0282 | 0 | 0 | 0 | 0 | 0 | 0 | 0 | 0 | 0 | 0 |
| Source 62 | 0.32 9314 | 0.26 8541 | 0.16 697 | 0.07 3514 | 0.02 1793 | 0.00 2679 | 0 | 0 | 0 | 0 | 0 | 0 | 0 | 0 | 0 | 0 |
| Source 63 | 0 | 0 | 0 | 0 | 0 | 0 | 0 | 0 | 0 | 0 | 0 | 0 | 0 | 0 | 0 | 0 |
| Source 64 | 2.39 4077 | 1.95 2429 | 1.21 3833 | 0.53 4474 | 0.15 8314 | 0.01 9738 | 0 | 0 | 0 | 0 | 0 | 0 | 0 | 0 | 0 | 0 |
| Source 65 | 2.74 5395 | 1.95 3241 | 1.13 7762 | 0.49 4404 | 0.14 6517 | 0.01 8328 | 0 | 0 | 0 | 0 | 0 | 0 | 0 | 0 | 0 | 0 |
| Source 66 | 2.73 932 | 2.09 0874 | 1.26 1564 | 0.55 214 | 0.16 3627 | 0.02 0443 | 0 | 0 | 0 | 0 | 0 | 0 | 0 | 0 | 0 | 0 |
| Source 67 | 1.57 7111 | 1.05 6343 | 0.59 5102 | 0.25 6718 | 0.07 6096 | 0.00 9446 | 0 | 0 | 0 | 0 | 0 | 0 | 0 | 0 | 0 | 0 |
| Source 68 | 0.38 6991 | 0.11 176 | 0.01 4829 | 0.00 1818 | 0.00 054 | 0 | 0 | 0 | 0 | 0 | 0 | 0 | 0 | 0 | 0 | 0 |
| Source 69 | 0.87 9309 | 0.60 8183 | 0.34 8921 | 0.15 112 | 0.04 4757 | 0.00 5639 | 0 | 0 | 0 | 0 | 0 | 0 | 0 | 0 | 0 | 0 |
| Source 70 | 0.44 4481 | 0.12 3304 | 0.01 2552 | 0 | 0 | 0 | 0 | 0 | 0 | 0 | 0 | 0 | 0 | 0 | 0 | 0 |
| Source 71 | 0.03 6799 | 0.03 9465 | 0.03 2152 | 0.01 9992 | 0.00 8832 | 0.00 2612 | 0.00 0282 | 0 | 0 | 0 | 0 | 0 | 0 | 0 | 0 | 0 |
| Source | 0.30 | 0.32 | 0.26 | 0.16 | 0.07 | 0.02 | 0.00 | 0 | 0 | 0 | 0 | 0 | 0 | 0 | 0 | 0 |

EP 2 482 106 B1

| Source | Col1 | Col2 | Col3 | Col4 | Col5 | Col6 | Col7 | Col8 | Col9 | Col10 | Col11 | Col12 | Col13 | Col14 | Col15 | Col16 |
|---|---|---|---|---|---|---|---|---|---|---|---|---|---|---|---|---|
| 72 | 7088 | 9314 | 8541 | 697 | 3514 | 1793 | 2679 | | | | | | | | | |
| Source 73 | 0.012051 | 0 | 0 | 0 | 0 | 0 | 0 | 0 | 0 | 0 | 0 | 0 | 0 | 0 | 0 | 0 |
| Source 74 | 2.240664 | 2.394077 | 1.952429 | 1.213833 | 0.534474 | 0.158314 | 0.019738 | 0 | 0 | 0 | 0 | 0 | 0 | 0 | 0 | 0 |
| Source 75 | 3.329662 | 2.745395 | 1.953241 | 1.137762 | 0.494404 | 0.146517 | 0.018328 | 0 | 0 | 0 | 0 | 0 | 0 | 0 | 0 | 0 |
| Source 76 | 2.9388 | 2.73932 | 2.090874 | 1.261564 | 0.55214 | 0.163627 | 0.020443 | 0 | 0 | 0 | 0 | 0 | 0 | 0 | 0 | 0 |
| Source 77 | 2.087879 | 1.577111 | 1.056343 | 0.595102 | 0.256718 | 0.076096 | 0.009446 | 0 | 0 | 0 | 0 | 0 | 0 | 0 | 0 | 0 |
| Source 78 | 0.90833 | 0.386991 | 0.11176 | 0.014829 | 0.001818 | 0.00054 | 0 | 0 | 0 | 0 | 0 | 0 | 0 | 0 | 0 | 0 |
| Source 79 | 1.112456 | 0.879309 | 0.608183 | 0.348921 | 0.15112 | 0.044757 | 0.005639 | 0 | 0 | 0 | 0 | 0 | 0 | 0 | 0 | 0 |
| Source 80 | 1.059264 | 0.444481 | 0.123304 | 0.012552 | 0 | 0 | 0 | 0 | 0 | 0 | 0 | 0 | 0 | 0 | 0 | 0 |
| Source 81 | 0.02632 | 0.036799 | 0.039465 | 0.032152 | 0.019992 | 0.008832 | 0.002612 | 0.000282 | 0 | 0 | 0 | 0 | 0 | 0 | 0 | 0 |
| Source 82 | 0.219802 | 0.307088 | 0.329314 | 0.268541 | 0.16697 | 0.073514 | 0.021793 | 0.002679 | 0 | 0 | 0 | 0 | 0 | 0 | 0 | 0 |
| Source 83 | 0.153006 | 0.012051 | 0 | 0 | 0 | 0 | 0 | 0 | 0 | 0 | 0 | 0 | 0 | 0 | 0 | 0 |
| Source 84 | 1.70002 | 2.240664 | 2.394077 | 1.952429 | 1.213833 | 0.534474 | 0.158314 | 0.019738 | 0 | 0 | 0 | 0 | 0 | 0 | 0 | 0 |
| Source 85 | 3.618037 | 3.329662 | 2.745395 | 1.953241 | 1.137762 | 0.494404 | 0.146517 | 0.018328 | 0 | 0 | 0 | 0 | 0 | 0 | 0 | 0 |
| Source 86 | 2.707415 | 2.9388 | 2.73932 | 2.090874 | 1.261564 | 0.55214 | 0.163627 | 0.020443 | 0 | 0 | 0 | 0 | 0 | 0 | 0 | 0 |
| Source 87 | 2.464566 | 2.087879 | 1.577111 | 1.056343 | 0.595102 | 0.256718 | 0.076096 | 0.009446 | 0 | 0 | 0 | 0 | 0 | 0 | 0 | 0 |
| Source | 1.51 | 0.90 | 0.38 | 0.11 | 0.01 | 0.00 | 0.00 | 0 | 0 | 0 | 0 | 0 | 0 | 0 | 0 | 0 |

EP 2 482 106 B1

| | | | | | | | | | | | | | | | | |
|---|---|---|---|---|---|---|---|---|---|---|---|---|---|---|---|---|
| 88 | 1827 | 833 | 6991 | 176 | 4829 | 1818 | 054 | | | | | | | | | |
| Source 89 | 1.25 5967 | 1.11 2456 | 0.87 9309 | 0.60 8183 | 0.34 8921 | 0.15 112 | 0.04 4757 | 0.00 5639 | 0 | 0 | 0 | 0 | 0 | 0 | 0 | 0 |
| Source 90 | 1.79 8213 | 1.05 9264 | 0.44 4481 | 0.12 3304 | 0.01 2552 | 0 | 0 | 0 | 0 | 0 | 0 | 0 | 0 | 0 | 0 | 0 |
| Source 91 | 0.01 3918 | 0.02 632 | 0.03 6799 | 0.03 9465 | 0.03 2152 | 0.01 9992 | 0.00 8832 | 0.00 2612 | 0.00 0282 | 0 | 0 | 0 | 0 | 0 | 0 | 0 |
| Source 92 | 0.11 6152 | 0.21 9802 | 0.30 7088 | 0.32 9314 | 0.26 8541 | 0.16 697 | 0.07 3514 | 0.02 1793 | 0.00 2679 | 0 | 0 | 0 | 0 | 0 | 0 | 0 |
| Source 93 | 0.59 3724 | 0.15 3006 | 0.01 2051 | 0 | 0 | 0 | 0 | 0 | 0 | 0 | 0 | 0 | 0 | 0 | 0 | 0 |
| Source 94 | 1.24 0553 | 1.70 002 | 2.24 0664 | 2.39 4077 | 1.95 2429 | 1.21 3833 | 0.53 4474 | 0.15 8314 | 0.01 9738 | 0 | 0 | 0 | 0 | 0 | 0 | 0 |
| Source 95 | 3.57 2113 | 3.61 8037 | 3.32 9662 | 2.74 5395 | 1.95 3241 | 1.13 7762 | 0.49 4404 | 0.14 6517 | 0.01 8328 | 0 | 0 | 0 | 0 | 0 | 0 | 0 |
| Source 96 | 2.21 0689 | 2.70 7415 | 2.93 88 | 2.73 932 | 2.09 0874 | 1.26 1564 | 0.55 214 | 0.16 3627 | 0.02 0443 | 0 | 0 | 0 | 0 | 0 | 0 | 0 |
| Source 97 | 2.55 506 | 2.46 4566 | 2.08 7879 | 1.57 7111 | 1.05 6343 | 0.59 5102 | 0.25 6718 | 0.07 6096 | 0.00 9446 | 0 | 0 | 0 | 0 | 0 | 0 | 0 |
| Source 98 | 1.91 4123 | 1.51 1827 | 0.90 833 | 0.38 6991 | 0.11 176 | 0.01 4829 | 0.00 1818 | 0.00 054 | 0 | 0 | 0 | 0 | 0 | 0 | 0 | 0 |
| Source 99 | 1.25 7323 | 1.25 5967 | 1.11 2456 | 0.87 9309 | 0.60 8183 | 0.34 8921 | 0.15 112 | 0.04 4757 | 0.00 5639 | 0 | 0 | 0 | 0 | 0 | 0 | 0 |
| Source 100 | 2.36 1764 | 1.79 8213 | 1.05 9264 | 0.44 4481 | 0.12 3304 | 0.01 2552 | 0 | 0 | 0 | 0 | 0 | 0 | 0 | 0 | 0 | 0 |
| Source 101 | 0.00 5094 | 0.01 3918 | 0.02 632 | 0.03 6799 | 0.03 9465 | 0.03 2152 | 0.01 9992 | 0.00 8832 | 0.00 2612 | 0.00 0282 | 0 | 0 | 0 | 0 | 0 | 0 |
| Source 102 | 0.04 4691 | 0.11 6152 | 0.21 9802 | 0.30 7088 | 0.32 9314 | 0.26 8541 | 0.16 697 | 0.07 3514 | 0.02 1793 | 0.00 2679 | 0 | 0 | 0 | 0 | 0 | 0 |
| Source 103 | 1.48 0325 | 0.59 3724 | 0.15 3006 | 0.01 2051 | 0 | 0 | 0 | 0 | 0 | 0 | 0 | 0 | 0 | 0 | 0 | 0 |
| Source | 1.29 | 1.24 | 1.70 | 2.24 | 2.39 | 1.95 | 1.21 | 0.53 | 0.15 | 0.01 | 0 | 0 | 0 | 0 | 0 | 0 |

104      6977 0553  002 0664 4077 2429 3833 4474 8314 9738

Source  3.16 3.57 3.61 3.32 2.74 1.95 1.13 0.49 0.14 0.01    0    0    0    0    0    0
105      4213 2113 8037 9662 5395 3241 7762 4404 6517 8328

Source  1.61 2.21 2.70 2.93 2.73 2.09 1.26 0.55 0.16 0.02    0    0    0    0    0    0
106      1695 0689 7415  88  932 0874 1564  214 3627 0443

Source  2.22 2.55 2.46 2.08 1.57 1.05 0.59 0.25 0.07 0.00    0    0    0    0    0    0
107      4027  506 4566 7879 7111 6343 5102 6718 6096 9446

Source  1.85 1.91 1.51 0.90 0.38 0.11 0.01 0.00 0.00    0    0    0    0    0    0
108      3992 4123 1827  833 6991  176 4829 1818  054

Source  1.07 1.25 1.25 1.11 0.87 0.60 0.34 0.15 0.04 0.00    0    0    0    0    0    0
109      4702 7323 5967 2456 9309 8183 8921  112 4757 5639

Source  2.47 2.36 1.79 1.05 0.44 0.12 0.01    0    0    0    0    0    0    0    0
110      0827 1764 8213 9264 4481 3304 2552

Source  0.00 0.00 0.01 0.02 0.03 0.03 0.03 0.01 0.00 0.00 0.00    0    0    0    0    0
111      1111 5094 3918  632 6799 9465 2152 9992 8832 2612 0282

Source  0.04 0.04 0.11 0.21 0.30 0.32 0.26 0.16 0.07 0.02 0.00    0    0    0    0    0
112      7143 4691 6152 9802 7088 9314 8541  697 3514 1793 2679

Source  2.61 1.48 0.59 0.15 0.01    0    0    0    0    0    0    0    0    0    0
113      7093 0325 3724 3006 2051

Source  1.81 1.29 1.24 1.70 2.24 2.39 1.95 1.21 0.53 0.15 0.01    0    0    0    0    0
114      6953 6977 0553  002 0664 4077 2429 3833 4474 8314 9738

Source  2.50 3.16 3.57 3.61 3.32 2.74 1.95 1.13 0.49 0.14 0.01    0    0    0    0    0
115      695 4213 2113 8037 9662 5395 3241 7762 4404 6517 8328

Source  1.02 1.61 2.21 2.70 2.93 2.73 2.09 1.26 0.55 0.16 0.02    0    0    0    0    0
116      4948 1695 0689 7415  88  932 0874 1564  214 3627 0443

Source  1.56 2.22 2.55 2.46 2.08 1.57 1.05 0.59 0.25 0.07 0.00    0    0    0    0    0
117      7513 4027  506 4566 7879 7111 6343 5102 6718 6096 9446

Source  1.38 1.85 1.91 1.51 0.90 0.38 0.11 0.01 0.00 0.00    0    0    0    0    0    0
118      3174 3992 4123 1827  833 6991  176 4829 1818  054

Source  0.81 1.07 1.25 1.25 1.11 0.87 0.60 0.34 0.15 0.04 0.00    0    0    0    0    0
119      236 4702 7323 5967 2456 9309 8183 8921  112 4757 5639

Source  2.13 2.47 2.36 1.79 1.05 0.44 0.12 0.01    0    0    0    0    0    0    0    0

```
120       8626 0827 1764 8213 9264 4481 3304 2552
Source    0.00 0.00 0.00 0.01 0.02 0.03 0.03 0.03 0.01 0.00 0.00 0.00    0   0   0   0
121       0048 1111 5094 3918  632 6799 9465 2152 9992 8832 2612 0282
Source    0.16 0.04 0.04 0.11 0.21 0.30 0.32 0.26 0.16 0.07 0.02 0.00    0   0   0   0
122       0282 7143 4691 6152 9802 7088 9314 8541  697 3514 1793 2679
Source    3.56 2.61 1.48 0.59 0.15 0.01   0    0    0    0    0    0     0   0   0   0
123       1955 7093 0325 3724 3006 2051
Source    2.39 1.81 1.29 1.24 1.70 2.24 2.39 1.95 1.21 0.53 0.15 0.01    0   0   0   0
124       7238 6953 6977 0553  002 0664 4077 2429 3833 4474 8314 9738
Source    1.81 2.50 3.16 3.57 3.61 3.32 2.74 1.95 1.13 0.49 0.14 0.01    0   0   0   0
125       3982  695 4213 2113 8037 9662 5395 3241 7762 4404 6517 8328
Source    0.52 1.02 1.61 2.21 2.70 2.93 2.73 2.09 1.26 0.55 0.16 0.02    0   0   0   0
126       9982 4948 1695 0689 7415   88  932 0874 1564  214 3627 0443
Source    0.84 1.56 2.22 2.55 2.46 2.08 1.57 1.05 0.59 0.25 0.07 0.00    0   0   0   0
127       8323 7513 4027  506 4566 7879 7111 6343 5102 6718 6096 9446
Source    0.77 1.38 1.85 1.91 1.51 0.90 0.38 0.11 0.01 0.00 0.00   0     0   0   0   0
128       8983 3174 3992 4123 1827  833 6991  176 4829 1818  054
Source    0.67 0.81 1.07 1.25 1.25 1.11 0.87 0.60 0.34 0.15 0.04 0.00    0   0   0   0
129       9756  236 4702 7323 5967 2456 9309 8183 8921  112 4757 5639
Source    1.58 2.13 2.47 2.36 1.79 1.05 0.44 0.12 0.01   0    0    0     0   0   0   0
130       9037 8626 0827 1764 8213 9264 4481 3304 2552
Source    0.00 0.00 0.00 0.00 0.01 0.02 0.03 0.03 0.03 0.01 0.00 0.00 0.00   0   0   0
131       4097 0048 1111 5094 3918  632 6799 9465 2152 9992 8832 2612 0282
Source    0.41 0.16 0.04 0.04 0.11 0.21 0.30 0.32 0.26 0.16 0.07 0.02 0.00   0   0   0
132       9715 0282 7143 4691 6152 9802 7088 9314 8541  697 3514 1793 2679
Source    3.88 3.56 2.61 1.48 0.59 0.15 0.01   0    0    0    0    0    0    0   0   0
133       3317 1955 7093 0325 3724 3006 2051
Source    2.63 2.39 1.81 1.29 1.24 1.70 2.24 2.39 1.95 1.21 0.53 0.15 0.01   0   0   0
134       9299 7238 6953 6977 0553  002 0664 4077 2429 3833 4474 8314 9738
Source    1.29 1.81 2.50 3.16 3.57 3.61 3.32 2.74 1.95 1.13 0.49 0.14 0.01   0   0   0
135       4439 3982  695 4213 2113 8037 9662 5395 3241 7762 4404 6517 8328
Source    0.20 0.52 1.02 1.61 2.21 2.70 2.93 2.73 2.09 1.26 0.55 0.16 0.02   0   0   0
```

```
136      4274 9982 4948 1695 0689 7415    88  932 0874 1564   214 3627 0443
Source   0.32 0.84 1.56 2.22 2.55 2.46 2.08 1.57 1.05 0.59 0.25 0.07 0.00    0    0    0
137      7091 8323 7513 4027  506 4566 7879 7111 6343 5102 6718 6096 9446
Source   0.31 0.77 1.38 1.85 1.91 1.51 0.90 0.38 0.11 0.01 0.00 0.00    0    0    0    0
138      8712 8983 3174 3992 4123 1827  833 6991  176 4829 1818  054
Source   0.87 0.67 0.81 1.07 1.25 1.25 1.11 0.87 0.60 0.34 0.15 0.04 0.00    0    0    0
139      8798 9756  236 4702 7323 5967 2456 9309 8183 8921  112 4757 5639
Source   1.04 1.58 2.13 2.47 2.36 1.79 1.05 0.44 0.12 0.01    0    0    0    0    0    0
140      7689 9037 8626 0827 1764 8213 9264 4481 3304 2552
Source   0.11 0.00 0.00 0.00 0.00 0.01 0.02 0.03 0.03 0.03 0.01 0.00 0.00 0.00    0    0
141      0549 4097 0048 1111 5094 3918  632 6799 9465 2152 9992 8832 2612 0282
Source   0.83 0.41 0.16 0.04 0.04 0.11 0.21 0.30 0.32 0.26 0.16 0.07 0.02 0.00    0    0
142      4722 9715 0282 7143 4691 6152 9802 7088 9314 8541  697 3514 1793 2679
Source   3.51 3.88 3.56 2.61 1.48 0.59 0.15 0.01    0    0    0    0    0    0    0    0
143      4797 3317 1955 7093 0325 3724 3006 2051
Source   2.43 2.63 2.39 1.81 1.29 1.24 1.70 2.24 2.39 1.95 1.21 0.53 0.15 0.01    0    0
144      3247 9299 7238 6953 6977 0553  002 0664 4077 2429 3833 4474 8314 9738
Source   1.00 1.29 1.81 2.50 3.16 3.57 3.61 3.32 2.74 1.95 1.13 0.49 0.14 0.01    0    0
145      0204 4439 3982  695 4213 2113 8037 9662 5395 3241 7762 4404 6517 8328
Source   0.09 0.20 0.52 1.02 1.61 2.21 2.70 2.93 2.73 2.09 1.26 0.55 0.16 0.02    0    0
146      8956 4274 9982 4948 1695 0689 7415    88  932 0874 1564   214 3627 0443
Source   0.13 0.32 0.84 1.56 2.22 2.55 2.46 2.08 1.57 1.05 0.59 0.25 0.07 0.00    0    0
147      1429 7091 8323 7513 4027  506 4566 7879 7111 6343 5102 6718 6096 9446
Source   0.16 0.31 0.77 1.38 1.85 1.91 1.51 0.90 0.38 0.11 0.01 0.00 0.00    0    0    0
148      3923 8712 8983 3174 3992 4123 1827  833 6991  176 4829 1818  054
Source   1.38 0.87 0.67 0.81 1.07 1.25 1.25 1.11 0.87 0.60 0.34 0.15 0.04 0.00    0    0
149      3006 8798 9756  236 4702 7323 5967 2456 9309 8183 8921  112 4757 5639
Source   0.67 1.04 1.58 2.13 2.47 2.36 1.79 1.05 0.44 0.12 0.01    0    0    0    0    0
150      3655 7689 9037 8626 0827 1764 8213 9264 4481 3304 2552
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2144096 A
- JP 2007272239 A
- JP 2001235648 A
- US 20100154478 A
- US 7315677 B
- WO 0050936 A
- EP 0131729 A
- WO 2008085851 A

**Non-patent literature cited in the description**

- **D. GLOGE et al.** Multimode theory of graded-core fibres. *Bell System Technical Journal,* 1973, 1563-1578
- **G. YABRE.** Comprehensive theory of dispersion in graded-index optical fibers. *Journal of Lightwave Technology,* February 2000, vol. 18 (2), 166-177
- **R.E. FREUND.** High-Speed Transmission in Multi-mode Fibers. *JLT,* February 2010, vol. 28 (4